# EUROPÄISCHE PATENTSCHRIFT

(11) **EP 3 292 164 B1**
(45) Veröffentlichungstag und Bekanntmachung des Hinweises auf die Patenterteilung: **08.12.2021**
(21) Anmeldenummer: 16713861.9
(22) Anmeldetag: 30.03.2016
(51) Int. Cl.: C08G 18/75, C08G 18/08, C08G 18/10, C08G 18/42, C09D 175/00, B05D 7/00

(54) **VERFAHREN ZUR HERSTELLUNG EINER MEHRSCHICHTLACKIERUNG**
METHOD FOR PRODUCING A MULTILAYER COATING
PROCÉDÉ DE FABRICATION D'UNE PEINTURE MULTICOUCHES

(30) Priorität: 06.05.2015 EP 15166539
(43) Veröffentlichungstag der Anmeldung: 14.03.2018
(73) Patentinhaber: BASF Coatings GmbH, 48165 Münster (DE)
(72) Erfinder: ANDERSEN, Audree, 48329 Havixbeck (DE); REUTER, Hardy, 48167 Münster (DE); RATZ, Roland, 48351 Everswinkel (DE); BUERMANN, Marita, 48165 Münster (DE); BAUER, Jürgen, 82166 Gräfelfing (DE); DIEPENBROCK, Vera, 48351 Everswinkel (DE); WINNEN, Sina, 80803 München (DE)
(74) Vertreter: BASF IP Association
(86) Internationale Anmeldenummer: PCT/EP2016/056894
(87) Internationale Veröffentlichungsnummer: WO 2016/177514

(56) Entgegenhaltungen:
- EP-A1- 1 736 246
- EP-A2- 0 319 927
- WO-A1-2004/035646
- WO-A1-2014/007915
- WO-A1-2015/029627
- WO-A1-2016/091539

## Beschreibung

Die vorliegende Erfindung betrifft ein Verfahren zur Herstellung einer Mehrschichtlackierung bei dem eine Basislackschicht oder mehrere direkt aufeinander folgende Basislackschichten direkt auf einem mit einer gehärteten Elektrotauchlackierung beschichteten metallischen Substrat hergestellt werden, direkt auf der einen oder der obersten der mehreren Basislackschichten eine Klarlackschicht hergestellt wird und anschließend die eine oder die mehreren Basislackschichten und die Klarlackschicht gemeinsam gehärtet werden. Zudem betrifft die vorliegende Erfindung eine Mehrschichtlackierung, die nach dem erfindungsgemäßen Verfahren hergestellt wurde.

### Stand der Technik

Mehrschichtlackierungen auf metallischen Substraten, beispielsweise Mehrschichtlackierungen im Bereich der Automobilindustrie, sind bekannt. In der Regel umfassen solche Mehrschichtlackierungen, vom metallischen Substrat aus betrachtet, eine Elektrotauchlackschicht, eine direkt auf die Elektrotauchlackschicht aufgebrachte, meist als Füllerschicht bezeichnete Schicht, mindestens eine Farb- und/oder Effektpigmente enthaltende und in der Regel als Basislackschicht bezeichnete Schicht sowie eine Klarlackschicht.

Die grundsätzlichen Zusammensetzungen und Funktionen der genannten Schichten und der zum Aufbau diese Schichten notwendigen Beschichtungsmittel, das heißt Elektrotauchlacke, so genannte Füller, als Basislacke bekannte Farb- und/oder Effektpigmente enthaltende Beschichtungsmittel und Klarlacke, sind bekannt. So dient beispielsweise die elektrophoretisch aufgebrachte Elektrotauchlackschicht grundsätzlich dem Korrosionsschutz des Substrats. Die Füllerschicht dient hauptsächlich dem Schutz vor mechanischer Beanspruchung wie beispielsweise Steinschlag und zudem dem Ausfüllen von Unebenheiten des Substrats. Die nächste, als Basislackschicht bezeichnete Schicht ist hauptverantwortlich für die Erzeugung von ästhetischen Eigenschaften wie der Farbe und/oder Effekten wie dem Flop, während die dann folgende Klarlackschicht insbesondere der Kratzfestigkeit sowie dem Glanz der Mehrschichtlackierung dient.

Die Herstellung dieser Mehrschichtlackierungen erfolgt in der Regel so, dass zunächst ein Elektrotauchlack, insbesondere ein kathodischer Elektrotauchlack elektrophoretisch auf dem metallischen Substrat, beispielsweise einer Automobilkarosserie, aufgebracht beziehungsweise abgeschieden wird. Das metallische Substrat kann vor der Abscheidung des Elektrotauchlacks unterschiedlich vorbehandelt werden, beispielsweise können bekannte Konversionsbeschichtungen wie Phosphatschichten, insbesondere Zinkphosphatschichten, aufgebracht werden. Der Abscheideprozess des Elektrotauchlacks findet in der Regel in entsprechenden Elektrotauchlackbecken statt. Nach dem Auftrag wird das beschichtete Substrat aus dem Becken entfernt, gegebenenfalls gespült und abgelüftet und/oder zwischengetrocknet, und schließlich wird der aufgetragene Elektrotauchlack gehärtet. Dabei werden Schichtdicken von etwa 15 bis 25 Mikrometer angestrebt. Anschließend wird der so genannte Füller direkt auf die gehärtete Elektrotauchlackschicht aufgetragen, gegebenenfalls abgelüftet und/oder zwischengetrocknet und anschließend gehärtet. Damit die gehärtete Füllerschicht die oben genannten Aufgaben erfüllen kann, werden Schichtdicken von beispielsweise 25 bis 45 Mikrometern angestrebt. Direkt auf die gehärtete Füllerschicht wird anschließend ein so genannter Farb- und/oder Effektpigmente enthaltender Basislack aufgebracht, dieser gegebenenfalls abgelüftet und/oder zwischengetrocknet und auf die so hergestellte Basislackschicht ohne separate Härtung direkt ein Klarlack aufgebracht. Anschließend werden die Basislackschicht und die gegebenenfalls zuvor ebenfalls abgelüftete und/oder zwischengetrocknete Klarlackschicht gemeinsam gehärtet (nass-in-nass-Verfahren). Während die gehärtete Basislackschicht grundsätzlich vergleichsweise geringe Schichtdicken von beispielsweise 10 bis 20 Mikrometern aufweist, werden für die gehärtete Klarlackschicht Schichtdicken von beispielsweise 30 bis 60 Mikrometer angestrebt, um die beschriebenen anwendungstechnologischen Eigenschaften zu erreichen. Das Aufbringen von Füller, Basislack und Klarlack kann beispielsweise über die dem Fachmann bekannten Applikationsmethoden der pneumatischen und/oder elektrostatischen Sprühapplikation erfolgen. Füller und Basislack werden heutzutage schon aus ökologischen Gründen vermehrt als wässrige Beschichtungsstoffe eingesetzt. Solche Mehrschichtlackierungen sowie Verfahren zu deren Herstellung werden beispielsweise in DE 199 48 004 A1, Seite 17, Zeile 37, bis Seite 19, Zeile 22, oder auch in DE 100 43 405 C1, Spalte 3, Absatz [0018], und Spalte 8, Absatz [0052] bis Spalte 9, Absatz [0057], in Verbindung mit Spalte 6, Absatz [0039] bis Spalte 8, Absatz [0050] beschrieben.

Auch wenn die so hergestellten Mehrschichtlackierungen die von der Automobilindustrie gestellten Anforderungen an anwendungstechnologische Eigenschaften und ästhetisches Profil in der Regel erfüllen können, rückt aus ökologischen und ökonomischen Motiven heutzutage immer mehr die Vereinfachung des beschriebenen und vergleichsweise komplexen Herstellprozesses in den Fokus der Automobilhersteller.

So gibt es Ansätze, bei denen versucht wird, auf den separaten Härtungsschritt des direkt auf die gehärtete Elektrotauchlackschicht aufgebrachten Beschichtungsmittels (des im Rahmen des oben beschriebenen Standardverfahrens als Füller bezeichneten Beschichtungsmittels) zu verzichten, gegebenenfalls dabei auch die Schichtdicke der aus diesem Beschichtungsmittel hergestellten Beschichtungsschicht herabzusetzen. In der Fachwelt wird diese also nicht separat gehärtete Beschichtungsschicht dann häufig als Basislackschicht (und nicht mehr als Füllerschicht) bezeichnet beziehungsweise in Abgrenzung zu einer darauf aufgebrachten zweiten Basislackschicht als erste Basislackschicht bezeichnet. Teilweise wird sogar versucht, vollständig auf diese Beschichtungsschicht zu verzichten (wobei dann also lediglich eine so genannte Basislackschicht direkt auf der Elektrotauchlackschicht hergestellt wird, welche ohne separaten Härtungsschritt mit einem Klarlack überschichtet wird, letztlich also ebenfalls auf einen separaten Härtungsschritt verzichtet wird). Anstelle des separaten Härtungsschritts und eines zusätzlichen abschließenden Härtungsschritts soll also lediglich ein abschließender Härtungsschritt nach Applikation aller auf der Elektrotauchlackschicht aufgebrachten Beschichtungsschichten erfolgen.

Das Verzichten eines separaten Härtungsschritts des direkt auf die Elektrotauchlackschicht aufgebrachten Beschichtungsmittels ist unter ökologischen und ökonomischen Gesichtspunkten sehr vorteilhaft. Denn dies führt zu Energieeinsparung und der gesamte Herstellungsprozess kann selbstverständlich wesentlich stringenter ablaufen.

Statt des separaten Härtungsschritts ist es also von Vorteil, dass die direkt auf der Elektrotauchlackschicht hergestellte Beschichtungsschicht lediglich bei Raumtemperatur abgelüftet und/oder bei erhöhten Temperaturen zwischengetrocknet wird, ohne dabei eine Härtung, die bekanntermaßen regelmäßig erhöhte Härtungstemperaturen und/oder lange Härtungszeiten benötigt, durchzuführen.

Problematisch ist jedoch, dass bei dieser Form der Herstellung heutzutage oft nicht die geforderten anwendungstechnologischen und ästhetischen Eigenschaften erlangt werden können.

So können durch den Verzicht auf die separate Härtung der direkt auf die Elektrotauchlackschicht aufgebrachten Beschichtungsschicht, beispielsweise der ersten Basislackschicht, vor der Applikation von weiteren Beschichtungsmitteln, beispielsweise einem zweiten Basislack und einem Klarlack, ungewünschte Luft-, Lösemittel- und/oder Feuchtigkeitseinschlüsse entstehen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche und Kocher genannt, führen zu einem nachteilhaften optischen Erscheinungsbild. Die durch den Gesamtaufbau von erster Basislackschicht, zweiter Basislackschicht und Klarlack anfallende organische Lösemittelbeziehungsweise Wassermenge sowie die durch die Applikation eingetragene Luftmenge ist zu groß, als dass die gesamte Menge innerhalb eines abschließenden Härtungsschritts ohne die Erzeugung von Fehlstellen aus der Mehrschichtlackierung entweichen kann. Im Falle eines wie oben beschriebenen konventionellen Herstellprozesses, bei dem die so genannte Füllerschicht vor der Herstellung einer meist vergleichsweise dünnen (und damit nur vergleichsweise wenig Luft, organische Lösemittel und/oder Wasser enthaltende) Basislackschicht separat eingebrannt wird, ist die Lösung dieses Problems selbstverständlich deutlich weniger anspruchsvoll.

Aber auch bei der Herstellung von Mehrschichtlackierungen, bei denen auf den Einsatz des im Standardprozess als Füller bezeichneten Beschichtungsmittels vollständig verzichtet wird, das heißt also Systemen, in denen also nur ein so genannter Basislack direkt auf die gehärtete Elektrotauchlackschicht aufgebracht wird, stößt man häufig auf die beschriebenen Probleme mit Nadelstichen und Kochern. Denn je nach Anwendung und Gebrauch der herzustellenden Mehrschichtlackierung wird bei vollständigem Verzicht auf die im Standardprozess als Füllerschicht bezeichnete Beschichtung in der Regel eine im Vergleich zu den Standardsystemen dickere Basislackschicht benötigt, um die gewünschten Eigenschaften zu erhalten. Damit ist auch in diesem Fall die Gesamtschichtdicke von Beschichtungsschichten, die im abschließenden Härtungsschritt gehärtet werden müssen, wesentlich höher als im Standardprozess.

Aber auch weitere relevante Eigenschaften werden beim Aufbau von Mehrschichtlackierungen über das beschriebene Verfahren nicht immer in zufriedenstellendem Maße erreicht. So stellt beispielsweise das Erreichen eines hochwertigen optischen Gesamteindrucks (Appearance), welcher insbesondere von einem guten Verlauf der eingesetzten Beschichtungsmittel beeinflusst wird, eine Herausforderung dar. Die rheologischen Eigenschaften der Beschichtungsmittel müssen hierbei angemessen auf die beschriebene Prozessführung abgestimmt sein. Ähnliches gilt für mechanische Eigenschaften wie die Haftung. Auch in diesem Zusammenhang stellt das Erreichen einer entsprechenden Qualität eine große Herausforderung dar.

Weiterhin ist das ökologische Profil solcher Mehrschichtlackierungen noch verbesserungswürdig. Zwar erzielt man durch den Ersatz eines signifikanten Anteils organischer Lösemittel durch Wasser in wässrigen Beschichtungsmitteln bereits einen entsprechenden Beitrag. Eine deutliche Verbesserung wäre allerdings durch die Erhöhung des Festkörpergehalts solcher Beschichtungsmittel zu erreichen. Jedoch ist gerade in wässrigen Basislacken, welche Farb- und/oder Effektpigmente enthalten, die Erhöhung des Festkörpergehalts unter gleichzeitiger Wahrung angemessener rheologischer Eigenschaften und damit einer guten Appearance sehr schwierig.

Von Vorteil wäre demnach ein Verfahren zur Herstellung von Mehrschichtlackierungen, bei dem auf einen wie oben beschriebenen separaten Härtungsschritt des direkt auf die Elektrotauchlackschicht aufgebrachten Beschichtungsmittels verzichtet werden kann und die hergestellte Mehrschichtlackierung trotzdem ausgezeichnete anwendungstechnologische und ästhetische Eigenschaften aufweist.

### Aufgabe

Aufgabe der vorliegenden Erfindung war es demzufolge, ein Verfahren zur Herstellung einer Mehrschichtlackierung auf metallischen Substraten zu finden, bei dem das direkt auf die Elektrotauchlackierung aufgebrachte Beschichtungsmittel nicht separat gehärtet wird, sondern bei dem dieses Beschichtungsmittel stattdessen in einem gemeinsamen Härtungsschritt mit weiteren danach aufgebrachten Beschichtungsschichten gehärtet wird. Trotz dieser Verfahrensvereinfachung sollten die resultierenden Mehrschichtlackierungen eine hervorragende Stabilität gegen Nadelstiche aufweisen. Zudem sollte es auf diese Weise möglich sein, je nach Anforderungen und individuellem Einsatzgebiet, Mehrschichtlackierungen bereitzustellen, in denen die eine oder die mehreren zwischen Elektrotauchlackschicht und Klarlackschicht angeordnete(n) Beschichtungsschicht(en) variable Schichtdicken haben können und in denen insbesondere auch bei höheren Schichtdicken keine Probleme mit Nadelstichen auftreten. Auch weitere Eigenschaften der Mehrschichtlackierungen, insbesondere der optische Gesamteindruck und die Haftung, sollten von hoher Qualität sein und mindestens auf dem Niveau liegen, welches über das oben beschriebene Standardverfahren erreichbar ist.

### Technische Lösung

Es wurde gefunden, dass die genannten Aufgaben gelöst werden konnten durch ein neues Verfahren zur Herstellung einer Mehrschichtlackierung (M) auf einem metallischen Substrat (S) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung (2.1) einer Basislackschicht (B.2.1) oder (2.2) mehrerer direkt aufeinander folgender Basislackschichten (B.2.2.x) direkt auf der gehärteten Elektrotauchlackschicht (E.1) durch (2.1) Aufbringen eines wässrigen Basislacks (b.2.1) direkt auf die Elektrotauchlackschicht (E.1) oder (2.2) direkt aufeinanderfolgendes Aufbringen von mehreren Basislacken (b.2.2.x) auf die Elektrotauchlackschicht (E.1),
(3) Herstellung einer Klarlackschicht (K) direkt auf (3.1) der Basislackschicht (B.2.1) oder (3.2) der obersten Basislackschicht (B.2.2.x) durch Aufbringen eines Klarlacks (k) direkt auf (3.1) die Basislackschicht (B.2.1) oder (3.2) die oberste Basislackschicht (B.2.2.x),
(4) gemeinsame Härtung der (4.1) Basislackschicht (B.2.1) und der Klarlackschicht (K) oder (4.2) der Basislackschichten (B.2.2.x) und der Klarlackschicht (K),
dadurch gekennzeichnet, dass
der Basislack (b.2.1) oder mindestens einer der Basislacke (b.2.2.x) mindestens eine wässrige Polyurethan-Polyharnstoff-Dispersion (PD) enthaltend Polyurethan-Polyharnstoff-Partikel umfasst, wobei die in der Dispersion (PD) enthaltenen Polyurethan-Polyharnstoff-Partikel anionische und/oder in anionische Gruppen überführbare Gruppen enthalten und eine mittlere Teilchengröße von 40 bis 2000 nm sowie einem Gelanteil von mindestens 50 % aufweisen.

Das oben genannte Verfahren wird in der Folge auch als erfindungsgemäßes Verfahren bezeichnet und ist dementsprechend Gegenstand der vorliegenden Erfindung. Bevorzugte Ausführungsformen des erfindungsgemäßen Verfahrens sind der weiter unten folgenden Beschreibung sowie den Unteransprüchen zu entnehmen.

Weiterhin Gegenstand der vorliegenden Erfindung ist eine Mehrschichtlackierung, die anhand des erfindungsgemäßen Verfahrens hergestellt wurde.

Das erfindungsgemäße Verfahren erlaubt die Herstellung von Mehrschichtlackierungen unter Verzicht auf einen separaten Härtungsschritt der direkt auf der Elektrotauchlackschicht hergestellten Beschichtungsschicht. Der besseren Übersichtlichkeit halber wird diese Beschichtungsschicht im Rahmen der vorliegenden Erfindung als Basislackschicht bezeichnet. Statt separater Härtung wird diese Basislackschicht zusammen mit gegebenenfalls weiteren Basislackschichten unterhalb der Klarlackschicht und der Klarlackschicht gemeinsam gehärtet. Trotzdem resultieren durch die Anwendung des erfindungsgemäßen Verfahrens Mehrschichtlackierungen, die eine ausgezeichnete Stabilität gegen Nadelstiche aufweisen. Auch der optische Gesamteindruck und die Haftung dieser Mehrschichtlackierungen sind hervorragend und liegen mindestens auf dem Niveau von Mehrschichtlackierungen, die über das oben beschriebene Standardverfahren hergestellt wurden.

### Ausführliche Beschreibung

Zunächst seien einige im Rahmen der vorliegenden Erfindung verwendeten Begriffe erläutert.

Das Aufbringen eines Beschichtungsmittels auf ein Substrat beziehungsweise das Herstellen einer Beschichtungsschicht auf einem Substrat verstehen sich wie folgt. Das jeweilige Beschichtungsmittel wird so aufgebracht, dass die daraus hergestellte Beschichtungsschicht auf dem Substrat angeordnet ist, jedoch nicht zwangsläufig in direktem Kontakt mit dem Substrat stehen muss. Zwischen der Beschichtungsschicht und dem Substrat können beispielsweise noch andere Schichten angeordnet sein. Beispielsweise wird in Stufe (1) die gehärtete Elektrotauchlackschicht (E.1) auf dem metallischen Substrat (S) hergestellt, jedoch kann zwischen dem Substrat und der Elektrotauchlackschicht noch eine wie weiter unten beschriebene Konversionsbeschichtung wie eine Zinkphosphatierung angeordnet sein.

Dasselbe Prinzip gilt für das Aufbringen eines Beschichtungsmittels (b) auf eine mittels eines anderen Beschichtungsmittels (a) hergestellte Beschichtungsschicht (A) beziehungsweise die Herstellung einer Beschichtungsschicht (B) auf einer anderen Beschichtungsschicht (A). Die Beschichtungsschicht (B) muss nicht zwangsläufig mit der Beschichtungsschicht (A) in Kontakt stehen, sie muss lediglich darüber, das heißt auf der dem Substrat abgewandten Seite der Beschichtungsschicht (A) angeordnet sein.

Im Unterschied dazu versteht sich das Aufbringen eines Beschichtungsmittels direkt auf ein Substrat beziehungsweise das Herstellen einer Beschichtungsschicht direkt auf einem Substrat wie folgt. Das jeweilige Beschichtungsmittel wird so aufgebracht, dass die daraus hergestellte Beschichtungsschicht auf dem Substrat angeordnet ist und in direktem Kontakt mit dem Substrat steht. Zwischen Beschichtungsschicht und Substrat ist also insbesondere keine andere Schicht angeordnet.

Selbiges gilt selbstverständlich für das Aufbringen eines Beschichtungsmittels (b) direkt auf eine mittels eines anderen Beschichtungsmittels (a) hergestellte Beschichtungsschicht (A) beziehungsweise die Herstellung einer Beschichtungsschicht (B) direkt auf einer anderen Beschichtungsschicht (A). In diesem Fall stehen die beiden Beschichtungsschichten in direktem Kontakt, sind also direkt aufeinander angeordnet. Insbesondere befindet sich keine weitere Schicht zwischen den Beschichtungsschichten (A) und (B). Dasselbe Prinzip gilt selbstverständlich für ein direkt aufeinanderfolgendes Aufbringen von Beschichtungsmitteln beziehungsweise die Herstellung von direkt aufeinanderfolgenden Beschichtungsschichten.

Unter Ablüften, Zwischentrocknen und Härten werden im Rahmen der vorliegenden Erfindung die dem Fachmann im Zusammenhang mit Verfahren zur Herstellung von Mehrschichtlackierungen geläufigen Begriffsinhalte verstanden.

Somit versteht sich der Begriff Ablüften grundsätzlich als Bezeichnung für das Verdunsten beziehungsweise Verdunsten lassen von organischen Lösemitteln und/oder Wasser eines im Rahmen der Herstellung einer Lackierung aufgebrachten Beschichtungsmittels bei meist Umgebungstemperatur (das heißt Raumtemperatur), beispielsweise 15 bis 35°C für eine Dauer von beispielsweise 0,5 bis 30 min. Während des Ablüftens verdunsten also organische Lösemittel und/oder Wasser, die in dem aufgebrachten Beschichtungsmittel enthalten sind. Da das Beschichtungsmittel jedenfalls direkt nach dem Auftragen und zu Beginn des Ablüftens noch fließfähig ist, kann es während des Ablüftens verlaufen. Denn zumindest ein durch Spritzapplikation aufgetragenes Beschichtungsmittel wird in der Regel tröpfchenförmig und nicht in homogener Dicke aufgetragen. Es ist aber durch die enthaltenen organischen Lösemittel und/oder Wasser fließfähig und kann somit durch das Verlaufen einen homogenen, glatten Beschichtungsfilm bilden. Gleichzeitig verdunsten organische Lösemittel und/oder Wasser sukzessive, sodass nach der Ablüftphase eine vergleichsweise glatte Beschichtungsschicht entstanden ist, die im Vergleich zum aufgebrachten Beschichtungsmittel weniger Wasser und/oder Lösemittel enthält. Die Beschichtungsschicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist die Beschichtungsschicht noch nicht wie weiter unten beschrieben gehärtet.

Unter Zwischentrocknen versteht man somit ebenfalls das Verdunsten beziehungsweise Verdunsten lassen von organischen Lösemitteln und/oder Wasser eines im Rahmen der Herstellung einer Lackierung aufgebrachten Beschichtungsmittels, meist bei gegenüber der Umgebungstemperatur erhöhter Temperatur von beispielsweise 40 bis 90°C, für eine Dauer von beispielsweise 1 bis 60 min. Auch beim Zwischentrocknen wird damit das aufgetragene Beschichtungsmittel einen Anteil von organischen Lösemitteln und/oder Wasser verlieren. Bezogen auf ein bestimmtes Beschichtungsmittel gilt in der Regel, dass das Zwischentrocknen im Vergleich zum Ablüften bei beispielsweise höheren Temperaturen und/oder für einen längeren Zeitraum von statten geht, sodass im Vergleich zum Ablüften auch ein höherer Anteil von organischen Lösemitteln und/oder Wasser aus der aufgebrachten Beschichtungsschicht entweicht. Aber auch durch das Zwischentrocknen erhält man keine Beschichtungsschicht im gebrauchsfertigen Zustand, das heißt keine wie weiter unten beschrieben gehärtete Beschichtungsschicht. Eine typische Abfolge von Ablüften und Zwischentrocken wäre beispielsweise, eine aufgebrachte Beschichtungsschicht für 5 min bei Umgebungstemperatur abzulüften und dann bei 80°C für 10 min zwischenzutrocken. Eine abschließende Abgrenzung beider Begriffe voneinander ist jedoch weder notwendig noch gewollt. Der reinen Übersichtlichkeit halber werden diese Begriffe verwendet, um deutlich zu machen, dass eine der unten beschriebenen Härtung vorausgehende, variable und sequenzielle Konditionierung einer Beschichtungsschicht stattfinden kann. Dabei können, abhängig vom Beschichtungsmittel, der Abdunsttemperatur und Abdunstdauer, mehr oder weniger hohe Anteile der im Beschichtungsmittel enthaltenen organischen Lösemittel und/oder Wasser abdunsten. Gegebenenfalls kann dabei sogar bereits ein Anteil der in den Beschichtungsmittel enthaltenen Polymere als Bindemittel wie unten beschrieben miteinander vernetzen oder verschlaufen. Sowohl beim Ablüften als auch beim Zwischentrocknen wird aber keine gebrauchsfertige Beschichtungsschicht erhalten, wie dies bei der unten beschriebenen Härtung der Fall ist. Demzufolge ist die Härtung eindeutig vom Ablüften und Zwischentrocknen abgegrenzt.

Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommen die thermisch-chemische Härtung und die aktinisch-chemische Härtung in Betracht. Ein Beschichtungsmittel kann, beispielsweise sofern es thermisch-chemisch härtbar ist, selbst- und/oder fremdvernetzend sein. Unter der Angabe, dass ein Beschichtungsmittel selbst- und/oder fremdvernetzend ist, ist im Rahmen der vorliegenden Erfindung zu verstehen, dass dieses Beschichtungsmittel Polymere als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel werden weiter unten beschrieben.

Im Rahmen der vorliegenden Erfindung bedeutet "physikalisch härtbar" beziehungsweise der Begriff "physikalische Härtung" die Bildung einer gehärteten Beschichtungsschicht durch Abgabe von Lösemittel aus Polymerlösungen oder Polymerdispersionen, wobei die Härtung durch eine Verschlaufung von Polymerketten erreicht wird. Solche Beschichtungsmittel werden in der Regel als Einkomponenten-Beschichtungsmittel formuliert.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung einer Lackschicht (Bildung einer gehärteten Beschichtungsschicht), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in einem als Bindemittel eingesetzten organischen Polymer, beispielsweise einem Polyester, einem Polyurethan oder einen Poly(meth)acrylat vorhanden, liegt eine Selbstvernetzung vor. Eine Fremdvernetzung liegt beispielsweise vor, wenn ein (erstes) organisches Polymer enthaltend bestimmte funktionelle Gruppen, beispielsweise Hydroxylgruppen, mit einem an sich bekannten Vernetzungsmittel, beispielsweise einem Polyisocyanat und/oder einem Melaminharz, reagiert. Das Vernetzungsmittel enthält also reaktive funktionelle Gruppen, die zu den in dem als Bindemittel eingesetzten (ersten) organischen Polymer vorhandenen reaktiven funktionellen Gruppen komplementär sind.

Insbesondere im Fall der Fremdvernetzung kommen die an sich bekannten Einkomponenten- und Mehrkomponentensysteme, insbesondere Zweikomponenten-systeme in Betracht.

In thermisch-chemisch härtbaren Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C miteinander reagieren, das heißt Härtungsreaktionen eingehen. Andernfalls müssten die zu vernetzenden Komponenten getrennt voneinander gelagert werden und erst kurz vor dem Aufbringen auf ein Substrat miteinander vermischt werden, um eine vorzeitige zumindest anteilige thermisch-chemische Härtung zu vermeiden (vergleiche Zweikomponenten-Systeme). Als beispielhafte Kombination seien hydroxyfunktionelle Polyester und/oder Polyurethane mit Melaminharzen und/oder blockierten Polyisocyanaten als Vernetzungsmittel genannt.

In thermisch-chemisch härtbaren Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung zur Härtung möglich ist. Die Härtung durch UV-Strahlung wird üblicherweise durch radikalische oder kationische Photoinitiatoren initiiert. Typische aktinisch härtbare funktionelle Gruppen sind Kohlenstoff-KohlenstoffDoppelbindungen, wobei hierbei in der Regel radikalische Photoinitiatoren zum Einsatz kommen. Der aktinischen Härtung liegt also ebenfalls eine chemische Vernetzung zugrunde.

Selbstverständlich wird bei der Härtung eines als chemisch härtbar gekennzeichnetes Beschichtungsmittel immer auch eine physikalische Härtung, das heißt eine Verschlaufung von Polymerketten, auftreten. Trotzdem wird ein solches Beschichtungsmittel dann als chemisch härtbar bezeichnet.

Aus Obigem folgt, dass je nach Art des Beschichtungsmittels und den darin enthaltenen Komponenten eine Härtung durch unterschiedliche Mechanismen bewirkt wird, die selbstverständlich auch unterschiedliche Bedingungen bei der Härtung notwendig machen, insbesondere unterschiedliche Härtungstemperaturen und Härtungsdauern.

Im Falle eines rein physikalisch härtenden Beschichtungsmittels erfolgt eine Härtung bevorzugt zwischen 15 und 90°C über einen Zeitraum von 2 bis 48 Stunden. In diesem Fall unterscheidet sich die Härtung vom Ablüften und/oder Zwischentrocken also gegebenenfalls lediglich durch die Dauer der Konditionierung der Beschichtungsschicht. Eine Differenzierung zwischen Ablüften und Zwischentrocknen ist zudem nicht sinnvoll. Möglich wäre beispielsweise, eine durch Aufbringen eines physikalisch härtbaren Beschichtungsmittels hergestellte Beschichtungsschicht zunächst bei 15 bis 35°C für eine Dauer von beispielsweise 0,5 bis 30 min abzulüften beziehungsweise zwischenzutrocknen und anschließend bei 50°C für eine Dauer von 5 Stunden zu härten. Bevorzugt sind aber zumindest einige der im Rahmen des erfindungsgemäßen Verfahrens einzusetzenden Beschichtungsmittel, das heißt Elektrotauchlacke, wässrige Basislacke und Klarlacke thermisch-chemisch härtbar, insbesondere bevorzugt thermisch-chemisch härtbar und fremdvernetzend.

Grundsätzlich und im Rahmen der vorliegenden Erfindung gilt dabei, dass die Härtung von thermisch-chemisch härtbaren Einkomponenten-Systemen bevorzugt bei Temperaturen von 100 bis 250°C, bevorzugt 100 bis 180°C für eine Dauer von 5 bis 60 min, bevorzugt 10 bis 45 min durchgeführt wird, da diese Bedingungen in der Regel notwendig sind, um die Beschichtungsschicht durch chemische Vernetzungsreaktionen in eine gehärtete Beschichtungsschicht zu überführen. Dementsprechend gilt, dass eine vor der Härtung stattfindende Ablüft- und/oder Zwischentrockungsphase bei geringeren Temperaturen und/oder für kürzere Zeiten erfolgt. Beispielsweise kann in einem solchen Fall bei 15 bis 35°C für eine Dauer von beispielsweise 0,5 bis 30 min abgelüftet werden und/oder bei einer Temperatur von beispielsweise 40 bis 90°C für eine Dauer von beispielsweise 1 bis 60 min zwischengetrocknet werden.

Grundsätzlich und im Rahmen der vorliegenden Erfindung gilt, dass die Härtung von thermisch-chemisch härtbaren Zweikomponenten-Systemen bei Temperaturen von beispielsweise 15 bis 90°C, bevorzugt 40 bis 90°C für eine Dauer von 5 bis 80 min, bevorzugt 10 bis 50 min durchgeführt wird. Dementsprechend gilt, dass eine vor der Härtung stattfindende Ablüft- und/oder Zwischentrockungsphase bei geringeren Temperaturen und/oder für kürzere Zeiten erfolgt. Beispielsweise ist es in einem solchen Fall nicht mehr sinnvoll, zwischen den Begriffen Abdunsten und Zwischentrocken zu unterscheiden. Eine der Härtung vorausgehende Ablüft- beziehungsweise Zwischentrockungsphase kann beispielsweise bei 15 bis 35°C für eine Dauer von beispielsweise 0,5 bis 30 min ablaufen, jedoch jedenfalls bei geringeren Temperaturen und/oder für geringere Zeiten als die dann folgende Härtung.

Dies schließt natürlich nicht aus, dass ein thermisch-chemisch härtbares Zweikomponenten-System bei höheren Temperaturen gehärtet wird. Beispielsweise werden im weiter unten genauer beschriebenen Schritt (4) des erfindungsgemäßen Verfahrens eine Basislackschicht oder mehrere Basislackschichten gemeinsam mit einer Klarlackschicht gehärtet. Sind innerhalb der Schichten sowohl thermisch-chemisch härtbare Einkomponenten- als auch Zweikomponenten-Systeme vorhanden, beispielsweise ein Einkomponenten-Basislack und ein Zweikomponenten-Klarlack, so richtet sich die gemeinsame Härtung selbstverständlich nach den für das Einkomponenten-System notwendigen Härtungsbedingungen.

Alle im Rahmen der vorliegenden Erfindung erläuterten Temperaturen verstehen sich als Temperatur des Raumes, in dem sich das beschichtete Substrat befindet. Gemeint ist also nicht, dass das Substrat selbst die entsprechende Temperatur aufweisen muss.

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

### Das erfindungsgemäße Verfahren

Im Rahmen des erfindungsgemäßen Verfahrens wird eine Mehrschichtlackierung auf einem metallischen Substrat (S) aufgebaut.

Als metallische Substrate (S) kommen grundsätzlich Substrate enthaltend oder bestehend aus beispielsweise Eisen, Aluminium, Kupfer, Zink, Magnesium und deren Legierungen sowie Stahl in unterschiedlichsten Formen und Zusammensetzungen in Betracht. Bevorzugt sind Eisen- und Stahlsubstrate, beispielsweise typische Eisen- und Stahlsubstrate wie sie im Bereich der Automobilindustrie eingesetzt werden. Die Substrate können an sich beliebig geformt sein, das heißt es kann sich beispielsweise um einfache Bleche oder auch um komplexe Bauteile wie insbesondere Automobilkarosserien und Teile davon handeln.

Die metallischen Substrate (S) können vor der Stufe (1) des erfindungsgemäßen Verfahrens auf an sich bekannte Weise vorbehandelt werden, das heißt beispielsweise gereinigt und/oder mit bekannten Konversionsbeschichtungen versehen werden. Eine Reinigung kann mechanisch beispielsweise mittels Wischen, Schleifen und/oder Polieren und/oder chemisch mittels Beizverfahren durch Anätzen in Säure- oder Laugenbädern, beispielsweise mittels Salz- oder Schwefelsäure erfolgen. Auch die Reinigung mit organischen Lösemitteln oder wässrigen Reinigern ist natürlich möglich. Eine Vorbehandlung durch Aufbringen von Konversionsbeschichtungen, insbesondere mittels Phosphatierung und/oder Chromatierung, bevorzugt Phosphatierung kann ebenfalls stattfinden. Bevorzugt werden die metallischen Substrate jedenfalls konversionsbeschichtet, insbesondere phosphatiert, bevorzugt mit einer Zinkphosphatierung versehen.

In Stufe (1) des erfindungsgemäßen Verfahrens wird durch elektrophoretisches Aufbringen eines Elektrotauchlacks (e.1) auf das Substrat (S) und anschließende Härtung des Elektrotauchlacks (e.1) eine gehärtete Elektrotauchlackschicht (E.1) auf dem metallischen Substrat (S) hergestellt.

Der in Stufe (1) des erfindungsgemäßen Verfahrens eingesetzte Elektrotauchlack (e.1) kann ein kathodischer oder anodischer Elektrotauchlack sein. Bevorzugt handelt es sich um einen kathodischen Elektrotauchlack. Elektrotauchlacke sind dem Fachmann seit langem bekannt. Es handelt sich um wässrige Beschichtungsstoffe, die anionische oder kationische Polymere als Bindemittel enthalten. Diese Polymere enthalten funktionelle Gruppen, die potentiell anionisch sind, das heißt in anionische Gruppen überführt werden können, beispielsweise Carbonsäuregruppen, oder funktionelle Gruppen, die potentiell kationisch sind, das heißt in kationische Gruppen überführt werden können, beispielsweise Aminogruppen. Die Überführung in geladene Gruppen wird in der Regel durch den Einsatz entsprechender Neutralisationsmittel (organische Amine (anionisch), organische Carbonsäuren wie Ameisensäure (kationisch)) erreicht, wodurch dann die anionischen oder kationischen Polymere entstehen. Die Elektrotauchlacke enthalten in der Regel und damit bevorzugt zusätzlich typische Korrosionsschutzpigmente. Die im Rahmen der Erfindung bevorzugten kathodischen Elektrotauchlacke enthalten bevorzugt kationische Polymere als Bindemittel, insbesondere hydroxyfunktionelle Polyetheramine, welche bevorzugt aromatische Struktureinheiten aufweisen. Solche Polymere werden in der Regel durch Umsetzung entsprechender Bisphenol-basierter Epoxidharze mit Aminen wie beispielsweise Mono- und Dialkylaminen, Alkanolaminen und/oder Dialkylaminoalkylamine erhalten. Diese Polymere werden insbesondere in Kombination mit an sich bekannten blockierten Polyisocyanaten eingesetzt. Beispielhaft sei auf die in WO 9833835 A1, WO 9316139 A1, WO 0102498 A1 und WO 2004018580 A1 beschriebenen Elektrotauchlacke verwiesen.

Der Elektrotauchlack (e.1) ist also bevorzugt ein jedenfalls thermisch-chemisch härtbares Beschichtungsmittel, wobei er insbesondere fremdvernetzend ist. Bevorzugt ist der Elektrotauchlack (e.1) ein thermisch-chemisch härtbares Einkomponenten-Beschichtungsmittel. Bevorzugt enthält der Elektrotauchlack (e.1) ein hydroxyfunktionelles Epoxidharz als Bindemittel und ein vollständig blockiertes Polyisocyanat als Vernetzungsmittel. Das Epoxidharz ist bevorzugt kathodisch, wobei es insbesondere Aminogruppen enthält.

Auch das im Rahmen der Stufe (1) des erfindungsgemäßen Verfahrens stattfindende elektrophoretische Aufbringen eines solchen Elektrotauchlacks (e.1) ist bekannt. Das Aufbringen verläuft elektrophoretisch. Das heißt, dass zu beschichtende metallische Werkstück wird zunächst in ein den Lack enthaltenes Tauchbad getaucht und ein elektrisches Gleichspannungsfeld wird zwischen dem metallischen Werkstück und einer Gegenelektrode angelegt. Das Werkstück fungiert also als Elektrode, die nichtflüchtigen Bestandteile des Elektrotauchlacks migrieren bedingt durch die beschriebene Ladung der als Bindemittel eingesetzten Polymere durch das elektrische Feld zum Substrat und scheiden sich auf dem Substrat ab, wodurch eine Elektrotauchlackschicht entsteht. Beispielsweise im Fall eines kathodischen Elektrotauchlacks wird das Substrat also als Kathode geschaltet, die dort durch die Wasserelektrolyse entstehenden Hydroxidionen neutralisieren das kationische Bindemittel, sodass es auf dem Substrat abgeschieden wird und sich eine Elektrotauchlackschicht bildet. Es handelt sich dann also um ein Aufbringen durch das elektrophoretische Tauchverfahren.

Nach dem Aufbringen des Elektrotauchlacks (e.1) wird das beschichtete Substrat (S) aus dem Becken entfernt, gegebenenfalls mit beispielsweise wasserbasierten Spüllösungen abgespült, dann gegebenenfalls abgelüftet und/oder zwischengetrocknet, und schließlich wird der aufgetragene Elektrotauchlack gehärtet.

Der aufgebrachte Elektrotauchlack (e.1) (beziehungsweise die aufgebrachte, noch nicht gehärtete Elektrotauchlackschicht) wird beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet.

Der auf das Substrat aufgebrachte Elektrotauchlack (e.1) (beziehungsweise die aufgebrachte, noch nicht gehärtete Elektrotauchlackschicht) wird bevorzugt bei Temperaturen von 100 bis 250°C, bevorzugt 140 bis 220°C für eine Dauer von 5 bis 60 min, bevorzugt 10 bis 45 min gehärtet, wodurch die gehärtete Elektrotauchlackschicht (E.1) hergestellt wird.

Die angegebenen Ablüft-, Zwischentrocknungs- und Härtungsbedingungen gelten insbesondere für den bevorzugten Fall, dass es sich bei dem Elektrotauchlack (e.1) um ein wie oben beschriebenes thermisch-chemisch härtbares Einkomponenten-Beschichtungsmittel handelt. Dies schließt aber nicht aus, dass der Elektrotauchlack ein auf andere Weise härtbares Beschichtungsmittel ist und/oder andere Ablüft-, Zwischentrocknungs- und Härtungsbedingungen eingesetzt werden.

Die Schichtdicke der gehärteten Elektrotauchlackschicht beträgt beispielsweise 10 bis 40 Mikrometer, bevorzugt 15 bis 25 Mikrometer. Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

In Stufe (2) des erfindungsgemäßen Verfahrens wird (2.1) eine Basislackschicht (B.2.1) hergestellt oder (2.2) es werden mehrere direkt aufeinander folgende Basislackschichten (B.2.2.x) hergestellt. Die Herstellung der Schichten erfolgt durch Aufbringen (2.1) eines wässrigen Basislacks (b.2.1) direkt auf die gehärtete Elektrotauchlackschicht (E.1) oder (2.2) direkt aufeinanderfolgendes Aufbringen von mehreren Basislacken (b.2.2.x) auf die gehärtete Elektrotauchlackschicht (E.1).

Das direkt aufeinanderfolgende Aufbringen von mehreren Basislacken (b.2.2.x) auf die gehärtete Elektrotauchlackschicht (E.1) versteht sich also so, dass zunächst ein erster Basislack direkt auf die Elektrotauchlackschicht aufgebracht wird und danach ein zweiter Basislack direkt auf die Schicht aus dem ersten Basislack aufgebracht wird. Ein gegebenenfalls dritter Basislack wird dann direkt auf die Schicht aus dem zweiten Basislack aufgebracht. Dieser Vorgang lässt sich dann analog für weitere Basislacke (das heißt einen vierten, fünften usw. Basislack) wiederholen.

Die Basislackschicht (B.2.1) oder die erste Basislackschicht (B.2.2.x) ist nach der Herstellung also direkt auf der gehärteten Elektrotauchlackschicht (E.1) angeordnet.

Die Begriffe Basislack und Basislackschicht in Bezug auf die in Stufe (2) des erfindungsgemäßen Verfahrens aufgebrachten Beschichtungsmittel und hergestellten Beschichtungsschichten werden der besseren Übersichtlichkeit halber verwendet. Die Basislackschichten (B.2.1) und (B.2.2.x) werden nicht separat gehärtet, sondern gemeinsam mit dem Klarlack gehärtet. Die Härtung erfolgt also analog der Härtung von in dem einleitend beschriebenen Standardverfahren eingesetzten so genannten Basislacken. Insbesondere werden die in Stufe (2) des erfindungsgemäßen Verfahrens eingesetzten Beschichtungsmittel nicht wie die im Rahmen des Standardverfahrens als Füller bezeichneten Beschichtungsmittel separat gehärtet.

Der in Stufe (2.1) eingesetzte wässrige Basislack (b.2.1) wird weiter unten im Detail beschrieben. In einer ersten bevorzugten Ausführungsform ist er aber jedenfalls thermisch-chemisch härtbar, insbesondere bevorzugt fremdvernetzend. Bevorzugt ist der Basislack (b.2.1) hierbei ein Einkomponenten-Beschichtungsmittel. Bevorzugt enthält der Basislack (b.2.1) hierbei eine Kombination aus mindestens einem hydroxyfunktionellen Polymer als Bindemittel ausgewählt aus der Gruppe bestehend aus Polyurethanen, Polyestern, Polyacrylaten und Mischpolymerisaten der genannten Polymere, beispielsweise Polyurethan-Polyacrylaten, sowie mindestens einem Melaminharz als Vernetzungsmittel. Diese Ausführungsform der Erfindung bietet sich insbesondere dann an, wenn beispielsweise eine außergewöhnlich gute Scheibenverklebungshaftung der erfindungsgemäßen Mehrschichtlackierung resultieren soll. Durch den Einsatz von chemisch-härtbaren Basislacken wird erreicht, dass der Gesamtaufbau von Mehrschichtlackierung und darauf aufgebrachter Klebstoffschicht deutlicher stabiler ist, insbesondere nicht bei mechanischer Zugbelastung innerhalb der Lackierung, beispielsweise innerhalb der Basislackschicht, reißt.

Je nach Anwendungsbereich genauso möglich und damit eine zweite bevorzugte Ausführungsform ist es aber, Basislacke (b.2.1) einzusetzen, die nur geringe Mengen von weniger als 5 Gew.-%, bevorzugt weniger als 2,5 Gew.-%, bezogen auf das Gesamtgewicht des Basislacks, an Vernetzungsmitteln wie insbesondere Melaminharzen enthalten. Nochmals bevorzugt in dieser Ausführungsform ist es, dass gar keine Vernetzungsmittel enthalten sind. Trotzdem wird eine hervorragende Qualität des Gesamtaufbaus erreicht. Ein zusätzlicher Vorteil des Nichteinsatzes von Vernetzungsmitteln und der demzufolge geringeren Komplexität des Lacks liegt in der Erhöhung der Formulierungsfreiheit für den Basislack. Auch die Lagerstabilität kann aufgrund der Vermeidung von möglichen Reaktionen der reaktiven Komponenten besser sein.

Der Basislack (b.2.1) kann durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt wird der Basislack (b.2.1) über die pneumatische Spritzapplikation oder die elektrostatische Spritzapplikation aufgetragen. Durch die Applikation des Basislacks (b.2.1) wird somit eine Basislackschicht (B.2.1), das heißt eine direkt auf der Elektrotauchlackschicht (E.1) aufgetragene Schicht des Basislacks (b.2.1) hergestellt.

Der aufgebrachte Basislack (b.2.1) beziehungsweise die entsprechende Basislackschicht (B.2.1) wird nach dem Auftrag beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet. Bevorzugt wird zunächst bei 15 bis 35°C für eine Dauer von 0,5 bis 30 min abgelüftet und anschließend bei 40 bis 90°C für eine Dauer von beispielsweise 1 bis 60 min zwischengetrocknet. Die beschriebenen Ablüft- und Zwischentrockungsbedingungen gelten insbesondere für den bevorzugten Fall, dass es sich bei dem Basislack (b.2.1) um ein thermisch-chemisch härtbares Einkomponenten-Beschichtungsmittel handelt. Dies schließt aber nicht aus, dass der Basislack (b.2.1) ein auf andere Weise härtbares Beschichtungsmittel ist und/oder andere Ablüft- und/oder Zwischentrocknungsbedingungen eingesetzt werden.

Die Basislackschicht (B.2.1) wird innerhalb der Stufe (2) des erfindungsgemäßen Verfahrens nicht gehärtet, das heißt bevorzugt nicht Temperaturen von über 100°C für eine Dauer von länger als 1 min ausgesetzt, insbesondere bevorzugt gar nicht Temperaturen von über 100°C ausgesetzt. Dies ergibt sich eindeutig und unmittelbar aus der weiter unten beschriebenen Stufe (4) des erfindungsgemäßen Verfahrens. Da die Basislackschicht erst in der Stufe (4) gehärtet wird, kann sie nicht bereits in der Stufe (2) gehärtet werden, denn dann wäre die Härtung in Stufe (4) nicht mehr möglich.

Auch die in Stufe (2.2) des erfindungsgemäßen Verfahrens eingesetzten wässrigen Basislacke (b.2.2.x) werden weiter unten im Detail beschrieben. In einer ersten bevorzugten Ausführungsform ist mindestens einer der in Stufe (2.2) eingesetzten Basislacke jedenfalls thermisch-chemisch härtbar, insbesondere bevorzugt fremdvernetzend. Nochmals bevorzugt gilt dies hierbei für alle Basislacke (b.2.2.x). Bevorzugt ist hierbei mindestens ein Basislack (b.2.2.x) ein Einkomponenten-Beschichtungsmittel, nochmals bevorzugt gilt dies für alle Basislacke (b.2.2.x). Bevorzugt enthält hierbei mindestens einer der Basislacke (b.2.2.x) eine Kombination aus mindestens einem hydroxyfunktionellen Polymer als Bindemittel ausgewählt aus der Gruppe bestehend aus Polyurethanen, Polyestern, Polyacrylaten und Mischpolymerisaten der genannten Polymere, beispielsweise Polyurethan-Polyacrylaten, sowie mindestens einem Melaminharz als Vernetzungsmittel. Nochmals bevorzugt gilt dies hierbei für alle Basislacke (b.2.2.x). Diese Ausführungsform der Erfindung bietet sich wiederum an, wenn eine außergewöhnlich gute Scheibenverklebungshaftung erreicht werden soll.

Je nach Anwendungsbereich genauso möglich und damit ebenfalls eine bevorzugte Ausführungsform ist es aber, mindestens einen Basislack (b.2.2.x) einzusetzen, der nur geringe Mengen von weniger als 5 Gew.-%, bevorzugt weniger als 2,5 Gew.-%, bezogen auf das Gesamtgewicht des Basislacks, an Vernetzungsmitteln wie insbesondere Melaminharzen enthalten. Nochmals bevorzugt in dieser Ausführungsform ist es, dass gar keine Vernetzungsmittel enthalten sind. Bevorzugt gilt das Gesagte für alle eingesetzten Basislacke (b.2.2.x). Trotzdem wird eine hervorragende Qualität des Gesamtaufbaus erreicht. Vorteile sind wiederum Formulierungsfreiheit und Lagerstabilität.

Die Basislacke (b.2.2.x) können durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt werden die Basislacke (b.2.2.x) über die pneumatische Spritzapplikation und/oder die elektrostatische Spritzapplikation aufgetragen.

Im Rahmen der Stufe (2.2) des erfindungsgemäßen Verfahrens bietet sich die folgende Benennung an. Die Basislacke und Basislackschichten werden allgemein durch (b.2.2.x) und (B.2.2.x) gekennzeichnet, während bei der Benennung der konkreten einzelnen Basislacke und Basislackschichten das x durch entsprechend passende andere Buchstaben ersetzt werden kann.

Der erste Basislack und die erste Basislackschicht können mit a gekennzeichnet werden, der oberste Basislack und die oberste Basislackschicht können mit z gekennzeichnet werden. Diese beiden Basislacke beziehungsweise Basislackschichten sind in der Stufe (2.2) jedenfalls vorhanden. Gegebenenfalls dazwischen angeordnete Schichten können fortlaufend mit b, c, d und so weiter gekennzeichnet werden.

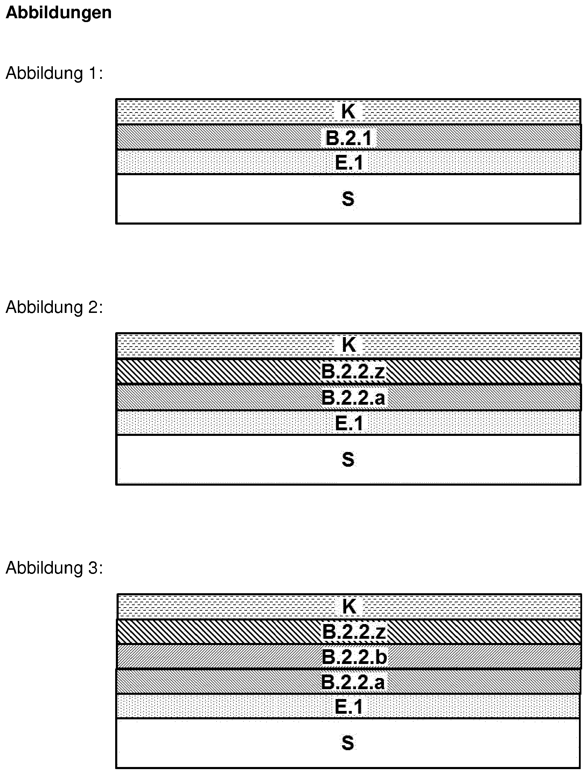

Durch die Applikation des ersten Basislacks (b.2.2.a) wird somit eine Basislackschicht (B.2.2.a) direkt auf der gehärteten Elektrotauchlackschicht (E.1) hergestellt. Die mindestens eine weitere Basislackschicht (B.2.2.x) wird dann direkt auf der Basislackschicht (B.2.2.a) hergestellt. Sofern mehrere weitere Basislackschichten (B.2.2.x) hergestellt werden, werden diese direkt aufeinanderfolgend hergestellt. Beispielsweise kann noch genau eine weitere Basislackschicht (B.2.2.x) hergestellt werden, wobei diese dann in der letztlich hergestellten Mehrschichtlackierung direkt unterhalb der Klarlackschicht (K) angeordnet ist und somit als Basislackschicht (B.2.2.z) bezeichnet werden kann (vergleiche auch Abbildung 2). Möglich ist beispielsweise auch, dass zwei weitere Basislackschichten (B.2.2.x) hergestellt werden, wobei dann die direkt auf der Basislackschicht (B.2.2.a) hergestellte Schicht als (B.2.2.b) und die schließlich direkt unterhalb der Klarlackschicht (K) angeordnete Schicht wiederum als (B.2.2.z) bezeichnet werden kann (vergleiche auch Abbildung 3).

Die Basislacke (b.2.2.x) können identisch oder verschieden sein. Möglich ist auch, mehrere Basislackschichten (B.2.2.x) mit demselben Basislack und eine oder mehrere weitere Basislackschichten (B.2.2.x) mit einem oder mehreren anderen Basislacken herzustellen.

Die aufgebrachten Basislacke (b.2.2.x) werden in der Regel für sich und/oder miteinander abgelüftet und/oder zwischengetrocknet. Bevorzugt wird auch im Rahmen der Stufe (2.2) bei 15 bis 35°C für eine Dauer von 0,5 bis 30 min abgelüftet und bei 40 bis 90°C für eine Dauer von beispielsweise 1 bis 60 min zwischengetrocknet. Die Abfolge von Ablüften und/oder Zwischentrocknen einzelner oder mehrerer Basislackschichten (B.2.2.x) kann dabei je nach den Anforderungen des Einzelfalls angepasst werden. Die vorbeschriebenen bevorzugten Ablüft- und Zwischentrockungsbedingungen gelten insbesondere für den bevorzugten Fall, dass es sich bei mindestens einem Basislack (b.2.2.x), bevorzugt allen Basislacken (b.2.2.x) um thermisch-chemisch härtbare Einkomponenten-Beschichtungsmittel handelt. Dies schließt aber nicht aus, dass die Basislacke (b.2.2.x) auf andere Weise härtbare Beschichtungsmittel sind und/oder andere Ablüft- und/oder Zwischentrocknungsbedingungen eingesetzt werden.

Wird eine erste Basislackschicht durch Applikation eines ersten Basislacks und eine weitere Basislackschicht durch Applikation desselben Basislacks hergestellt, so basieren offensichtlich beide Schichten auf demselben Basislack. Jedoch erfolgt der Auftrag offensichtlich in zwei Stufen, so dass der entsprechende Basislack im Sinne des erfindungsgemäßen Verfahrens einem ersten Basislack (b.2.2.a) und einem weiteren Basislack (b.2.2.z) entspricht. Der beschriebene Aufbau wird häufig auch als ein in zwei Aufträgen hergestellter einschichtiger Basislackschicht-Aufbau bezeichnet. Da aber insbesondere in der realen Serienlackierung aufgrund der technischen Gegebenheiten in einer Lackieranlage zwischen dem ersten Auftrag und dem zweiten Auftrag immer eine gewisse Zeitspanne vergeht, bei der das Substrat, beispielsweise die Automobilkarosse, bei beispielsweise 15 bis 35°C konditioniert und damit abgelüftet wird, ist die Charakterisierung dieses Aufbaus als zweischichtiger Basislackaufbau formal eindeutiger. Die beschriebene Prozessführung ist also der zweiten Variante des erfindungsgemäßen Verfahrens zuzuordnen.

Einige bevorzugte Varianten der Basislackschichtabfolgen der Basislacke (b.2.2.x) seien wie folgt erläutert.

Möglich ist, eine erste Basislackschicht durch beispielsweise elektrostatische Sprühapplikation (ESTA) eines ersten Basislacks direkt auf der gehärteten Elektrotauchlackschicht herzustellen, diesen wie oben beschrieben abzulüften und/oder zwischenzutrocken und anschließend durch direktes Aufbringen eines vom ersten Basislack verschiedenen zweiten Basislacks eine zweite Basislackschicht herzustellen. Der zweite Basislack kann dabei auch durch elektrostatische Sprühapplikation aufgebracht werden, wodurch direkt auf der ersten Basislackschicht eine zweite Basislackschicht hergestellt wird. Zwischen und/oder nach den Aufträgen kann natürlich wieder abgelüftet und/oder zwischengetrocknet werden. Diese Variante der Stufe (2.2) wird bevorzugt dann gewählt, wenn zunächst eine wie weiter unten genauer beschriebene farbvorbereitende Basislackschicht direkt auf der Elektrotauchlackschicht hergestellt werden soll und dann eine wie weiter unten genauer beschriebene farb- und/oder effektgebende Basislackschicht direkt auf der ersten Basislackschicht hergestellt werden soll. Die erste Basislackschicht basiert dann auf dem farbvorbereitenden Basislack, die zweite Basislackschicht auf dem farb- und/oder effektgebenden Basislack. Ebenfalls möglich ist es beispielsweise, diesen zweiten Basislack wie oben beschrieben in zwei Stufen aufzubringen, wodurch dann direkt auf der ersten Basislackschicht zwei weitere, direkt aufeinanderfolgende Basislackschichten entstehen.

Möglich ist ebenfalls, drei Basislackschichten direkt aufeinander folgend direkt auf der gehärteten Elektrotauchlackschicht herzustellen, wobei die Basislackschichten auf drei verschiedenen Basislacken basieren. Beispielsweise kann eine farbvorbereitende Basislackschicht, eine weitere Schicht basierend auf einem farb- und/oder effektgebenden Basislack und eine weitere Schicht basierend auf einem zweiten farb- und/oder effektgebenden Basislack hergestellt werden. Zwischen und/oder nach den einzelnen und/oder nach allen drei Aufträgen kann wiederum abgelüftet und/oder zwischengetrocknet werden.

Im Rahmen der vorliegenden Erfindung bevorzugte Ausführungsformen umfassen also, dass in Stufe (2.2) des erfindungsgemäßen Verfahrens zwei oder drei Basislackschichten hergestellt werden. Bevorzugt ist dabei dann, dass die direkt auf der gehärteten Elektrotauchlackschicht hergestellte Basislackschicht auf einem farbvorbereitenden Basislack basiert. Die zweite und die gegebenenfalls vorhandene dritte Schicht basieren entweder auf ein und demselben farb- und/oder effektgebendem Basislack oder auf einem ersten farb- und/oder effektgebendem Basislack und einem davon verschiedenen zweiten farb- und/oder effektgebendem Basislack. In einer bevorzugten Variante enthalten die Basislacke, die auf die Schicht basierend auf dem farbvorbereitenden Basislack aufgebracht werden, jedenfalls, aber nicht zwingend ausschließlich, Effekt- und/oder Buntpigmente. Buntpigmente gehören zur Gruppe der Farbpigmente, wobei letztere auch unbunte Farbpigmente wie Schwarz- oder Weißpigmente umfassen.

Die Basislackschichten (B.2.2.x) werden innerhalb der Stufe (2) des erfindungsgemäßen Verfahrens nicht gehärtet, das heißt bevorzugt nicht Temperaturen von über 100°C für eine Dauer von länger als 1 min ausgesetzt, bevorzugt gar nicht Temperaturen von über 100°C ausgesetzt. Dies ergibt sich eindeutig und unmittelbar aus der weiter unten beschriebenen Stufe (4) des erfindungsgemäßen Verfahrens. Da die Basislackschichten erst in der Stufe (4) gehärtet werden, können sie nicht bereits in der Stufe (2) gehärtet werden, denn dann wäre die Härtung in Stufe (4) nicht mehr möglich.

Der Auftrag der Basislacke (b.2.1) und (b.2.2.x) erfolgt so, dass die Basislackschicht (B.2.1) und die einzelnen Basislackschichten (B.2.2.x) nach der in Stufe (4) erfolgten Härtung eine Schichtdicke von beispielsweise 5 bis 50 Mikrometer, bevorzugt 6 bis 40 Mikrometer, insbesondere bevorzugt 7 bis 35 Mikrometer aufweisen. In der Stufe (2.1) werden bevorzugt höhere Schichtdicken von 15 bis 50 Mikrometern, bevorzugt 20 bis 45 Mikrometern hergestellt. In der Stufe (2.2) haben die einzelnen Basislackschichten eher vergleichsweise geringere Schichtdicken, wobei der Gesamtaufbau dann wieder Schichtdicken aufweist, die in der Größenordnung der einen Basislackschicht (B.2.1) liegen. Beispielsweise hat im Falle von zwei Basislackschichten die erste Basislackschicht (B.2.2.a) bevorzugt Schichtdicken von 5 bis 35, insbesondere 10 bis 30 Mikrometer, die zweite Basislackschicht (B.2.2.z) bevorzugt Schichtdicken von 5 bis 35 Mikrometern, insbesondere 10 bis 30 Mikrometern, wobei die Gesamtschichtdicke 50 Mikrometer nicht überschreitet.

In Stufe (3) des erfindungsgemäßen Verfahrens wird eine Klarlackschicht (K) direkt auf (3.1) der Basislackschicht (B.2.1) oder (3.2) der obersten Basislackschicht (B.2.2.z) hergestellt. Diese Herstellung erfolgt durch entsprechendes Aufbringen eines Klarlacks (k).

Bei dem Klarlack (k) kann es sich um ein dem Fachmann in diesem Sinne bekanntes an sich beliebiges transparentes Beschichtungsmittel handeln. Unter transparent ist zu verstehen, dass eine mit dem Beschichtungsmittel gebildete Schicht nicht farblich deckend ist, sondern so konstituiert ist, dass die Farbe des darunter liegenden Basislackaufbaus sichtbar ist. Dies schließt bekanntermaßen aber nicht aus, dass ein Klarlack in untergeordneten Mengen auch Pigmente enthalten kann, die beispielsweise die Farbtiefe des Gesamtaufbaus unterstützen können.

Es handelt sich dabei um wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke. Bevorzugt sind lösungsmittelbasierte Klarlacke.

Die eingesetzten Klarlacke (k) können insbesondere thermisch-chemisch und/oder chemisch-aktinisch härtbar sein. Insbesondere sind sie thermisch-chemisch härtbar und fremdvernetzend. Bevorzugt sind thermisch-chemisch härtbare Zweikomponenten-Klarlacke.

Die Klarlacke enthalten also üblicherweise und bevorzugt mindestens ein (erstes) Polymer als Bindemittel mit funktionellen Gruppen sowie mindestens einen Vernetzer mit einer zu den funktionellen Gruppen des Bindemittels komplementärer Funktionalität. Bevorzugt wird zumindest ein hydroxyfunktionelles Poly(meth)acrylatpolymer als Bindemittel und ein freies Polyisocyanat als Vernetzungsmittel eingesetzt.

Geeignete Klarlacke sind beispielsweise beschrieben in WO 2006042585 A1, WO 2009077182 A1 oder auch WO 2008074490 A1.

Der Klarlack (k) wird durch die dem Fachmann bekannten Methoden zur Applikation von flüssigen Beschichtungsmitteln aufgebracht, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), und elektrostatischer Sprühauftrag (ESTA).

Der Klarlack (k) beziehungsweise die entsprechende Klarlackschicht (K) wird nach dem Auftrag bevorzugt bei 15 bis 35°C für eine Dauer von 0,5 bis 30 min abgelüftet beziehungsweise zwischengetrocknet. Solche Ablüft- beziehungsweise Zwischentrockungsbedingungen gelten insbesondere für den bevorzugten Fall, dass es sich bei dem Klarlack (k) um ein thermisch-chemisch härtbares Zweikomponenten-Beschichtungsmittel handelt. Dies schließt aber nicht aus, dass der Klarlack (k) ein auf andere Weise härtbares Beschichtungsmittel ist und/oder andere Ablüftbeziehungsweise Zwischentrockungsbedingungen eingesetzt werden.

Der Auftrag des Klarlacks (k) erfolgt so, dass die Klarlackschicht nach der in Stufe (4) erfolgten Härtung eine Schichtdicke von beispielsweise 15 bis 80 Mikrometer, bevorzugt 20 bis 65 Mikrometer, insbesondere bevorzugt 25 bis 60 Mikrometer aufweist.

Selbstverständlich ist im Rahmen des erfindungsgemäßen Verfahrens nicht ausgeschlossen, dass nach der Applikation des Klarlacks (k) noch weitere Beschichtungsmittel, beispielsweise weitere Klarlacke, aufgebracht werden und auf diese Weise weitere Beschichtungsschichten, beispielsweise weitere Klarlackschichten, hergestellt werden. Solche weiteren Beschichtungsschichten werden dann ebenfalls in der nachstehend beschriebenen Stufe (4) gehärtet. Bevorzugt wird allerdings nur der eine Klarlack (k) aufgebracht und dann wie in Stufe (4) beschrieben gehärtet.

In Stufe (4) des erfindungsgemäßen Verfahrens erfolgt eine gemeinsame Härtung der (4.1) Basislackschicht (B.2.1) und der Klarlackschicht (K) oder (4.2) der Basislackschichten (B.2.2.x) und der Klarlackschicht (K).

Die gemeinsame Härtung erfolgt bevorzugt bei Temperaturen von 100 bis 250°C, bevorzugt 100 bis 180°C für eine Dauer von 5 bis 60 min, bevorzugt 10 bis 45 min. Solche Härtungsbedingungen gelten insbesondere für den bevorzugten Fall, dass die Basislackschicht (B.2.1) oder mindestens eine der Basislackschichten (B.2.2.x), bevorzugt alle Basislackschichten (B.2.2.x) auf einem thermisch-chemisch härtbaren Einkomponenten-Beschichtungsmittel basieren. Denn wie oben beschrieben werden solche Bedingungen in der Regel benötigt, um eine wie oben beschriebene Härtung eines solchen Einkomponenten-Beschichtungsmittels zu erreichen. Handelt es sich bei dem Klarlack (k) beispielsweise ebenfalls um ein thermisch-chemisch härtbares Einkomponenten-Beschichtungsmittel, wird die entsprechende Klarlackschicht (K) bei diesen Bedingungen selbstverständlich ebenfalls gehärtet. Selbiges gilt augenscheinlich für den bevorzugten Fall, dass der Klarlack (k) ein thermisch-chemisch härtbares Zweikomponenten-Beschichtungsmittel ist.

Das zuvor Gesagte schließt aber nicht aus, dass die Basislacke (b.2.1) und (b.2.2.x) sowie die Klarlacke (k) auf andere Weise härtbare Beschichtungsmittel sind und/oder andere Härtungsbedingungen eingesetzt werden.

Nach Beendigung der Stufe (4) des erfindungsgemäßen Verfahrens resultiert eine erfindungsgemäße Mehrschichtlackierung (vergleiche auch Abbildungen 1 bis 3).

### Die erfindungsgemäß einzusetzenden Basislacke

Der erfindungsgemäß einzusetzende Basislack (b.2.1) enthält mindestens eine, bevorzugt genau eine spezielle wässrige Polyurethan-Polyharnstoff-Dispersion (PD).

Die in der Dispersion vorhandenen Polymer-Partikel sind also Polyurethan-Polyharnstoffbasiert. Solche Polymere sind grundsätzlich durch an sich bekannte Polyaddition von beispielsweise Polyisocyanaten mit Polyolen sowie Polyaminen herstellbar. Im Hinblick auf die erfindungsgemäß einzusetzende Dispersion (PD) beziehungsweise die in ihr enthaltenen Polymer-Partikel sind jedoch spezielle, in der Folge erläuterte Bedingungen zu beachten.

Die in der wässrigen Polyurethan-Polyharnstoff-Dispersion (PD) enthaltenen Polyurethan-Polyharnstoff-Partikel besitzen einen Gelanteil von mindestens 50 % (Messmethode siehe Beispielteil). Zudem besitzen die in der Dispersion (PD) enthaltenen Polyurethan-Polyharnstoff-Partikel eine mittlere Teilchengröße (auch mittlere Partikelgröße genannt) von 40 bis 2000 Nanometern (nm) (Messmethode siehe Beispielteil).

Bei den erfindungsgemäßen Dispersionen (PD) handelt es sich also um Mikrogel-Dispersionen. Denn eine Mikrogel-Dispersion ist bekanntermaßen eine PolymerDispersion, in welcher zum einen das Polymer in Form von vergleichsweise kleinen Partikeln mit Teilchengrößen von beispielsweise 0,02 bis 10 Mikrometern vorliegt ("Mikro"-gel). Zum anderen aber sind die Polymer-Partikel zumindest teilweise intramolekular vernetzt. Letzteres bedeutet, dass die innerhalb eines Partikels vorhandenen Polymerstrukturen einem typischen makroskopischen Netzwerk mit dreidimensionaler Netzwerkstruktur gleichen. Makroskopisch betrachtet handelt es sich bei einer solchen Mikrogel-Dispersion aber nach wie vor um eine Dispersion von Polymerpartikeln in einem Dispersionsmedium, beispielsweise Wasser. Zwar können die Partikel auch untereinander zum Teil Vernetzungsbrücken aufweisen (dies ist rein herstellungsbedingt kaum auszuschließen), jedoch ist das System jedenfalls eine Dispersion mit darin enthaltenen diskreten Partikeln, die eine messbare mittlere Teilchengröße aufweisen. Aufgrund der molekularen Natur sind diese aber in geeigneten organischen Lösungsmitteln gelöst, makroskopische Netzwerke wären hingegen nur gequollen.

Da die Mikrogele Strukturen repräsentieren, welche zwischen verzweigten und makroskopisch vernetzten Systemen liegen, sie folglich die Charakteristika von in geeigneten organischen Lösungsmitteln löslichen Makromolekülen mit Netzwerkstruktur und unlöslichen makroskopischen Netzwerken kombinieren, kann der Anteil der vernetzten Polymeren beispielsweise erst nach Isolation des festen Polymeren nach Entfernung von Wasser und gegebenenfalls organischen Lösungsmitteln und nachfolgender Extraktion ermittelt werden. Dabei macht man sich zunutze, dass die ursprünglich in geeigneten organischen Lösungsmitteln löslichen Mikrogel-Partikel nach Isolation ihre innere Netzwerkstruktur behalten und sich im Feststoff wie ein makroskopisches Netzwerk verhalten. Die Vernetzung kann über den experimentell zugänglichen Gelanteil überprüft werden. Letztlich handelt es sich beim Gelanteil um den Anteil des Polymers aus der Dispersion, der sich als isolierter Feststoff nicht molekular dispers in einem Lösemittel lösen lässt. Dabei muss ausgeschlossen werden, dass bei der Isolierung des polymeren Feststoffs nachgeschaltete Vernetzungsreaktionen den Gelanteil weiter erhöhen. Dieser unlösliche Anteil entspricht wiederum dem Anteil des in der Dispersion in Form von intramolekular vernetzen Partikeln beziehungsweise Partikelanteilen vorliegenden Polymers.

Im Rahmen der vorliegenden Erfindung hat sich gezeigt, dass lediglich Mikrogel-Dispersionen mit Polymerpartikeln mit Teilchengrößen im erfindungswesentlichen Bereich alle der geforderten anwendungstechnischen Eigenschaften aufweisen. Es kommt also insbesondere auf die Kombination von eher geringen Teilchengrößen und einem trotzdem vorhandenen signifikanten vernetzten Anteil beziehungsweise Gelanteil an. Nur auf diese Weise sind die vorteilhaften Eigenschaften, insbesondere die Kombination von guten optischen und mechanischen Eigenschaften von Mehrschichtlackierungen einerseits und ein hoher Festkörper sowie eine gute Lagerstabilität von wässrigen Basislacken andererseits, zu erreichen. So besitzen beispielsweise Dispersionen mit vergleichsweise größeren Partikeln im Bereich von beispielsweise größer als 2 Mikrometern (mittlere Teilchengröße) eine erhöhtes Absetzverhalten und damit eine schlechtere Lagerstabilität.

Die in der wässrigen Polyurethan-Polyharnstoff-Dispersion (PD) enthaltenen Polyurethan-Polyharnstoff-Partikel besitzen vorzugsweise einen Gelanteil von mindestens 60 %, besonders bevorzugt von mindestens 70 %, insbesondere bevorzugt von mindestens 80 %. Der Gelanteil kann also bis zu 100 % beziehungsweise annähernd 100 %, beispielsweise 99 % oder 98 % betragen. In einem solchen Fall liegt also das gesamte beziehungsweise annähernd das gesamte Polyurethan-Polyharnstoff-Polymer in Form von vernetzten Partikeln vor.

Die in der Dispersion (PD) enthaltenen Polyurethan-Polyharnstoff-Partikel besitzen vorzugsweise eine mittlere Teilchengröße von 40 bis 1500 nm, nochmals bevorzugt von 100 bis 1000 nm, darunter bevorzugt 110 bis 500 nm und nochmals bevorzugt 120 bis 300 nm. Ein ganz besonders bevorzugter Bereich liegt von 130 bis 250 nm.

Die erhaltene Polyurethan-Polyharnstoff-Dispersion (PD) ist wässrig. Der Ausdruck "wässrig" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält. Bevorzugte Ausführungsformen des wässrigen Charakters, die anhand des Maximalgehalts organischer Lösemittel und/oder anhand des Gehalts an Wasser definiert sind, werden weiter unten beschrieben.

Die Polyurethan-Polyharnstoff-Partikel enthalten anionische und/oder in anionische Gruppen überführbare Gruppen (das heißt Gruppen, die durch den Einsatz bekannter und auch weiter unten genannter Neutralisationsmittel wie Basen in anionische Gruppen überführt werden können).

Wie der Fachmann weiß, handelt es sich hierbei um beispielsweise Carbonsäure-, Sulfonsäure- und/oder Phosphonsäuregruppen, insbesondere bevorzugt Carbonsäuregruppen (funktionelle Gruppen, die durch Neutralisationsmittel in anionische Gruppen überführt werden können) sowie aus den vorgenannten funktionellen Gruppen abgeleitete anionische Gruppen wie insbesondere Carboxylat-, Sulfonat- und/oder Phosphonatgruppen, bevorzugt Carboxylatgruppen. Durch die Einführung solcher Gruppen wird bekanntermaßen die Wasserdispergierbarkeit erhöht. Je nach gewählten Bedingungen können die genannten Gruppen anteilig oder nahezu vollständig in der einen Form (beispielsweise Carbonsäure) oder anderen Form (Carboxylat) vorliegen. Ein bestimmender Einflussfaktor liegt beispielsweise im Einsatz der schon angesprochenen und weiter unten noch genauer beschriebenen Neutralisationsmittel. Unabhängig davon, in welcher Form die genannten Gruppen vorliegen, wird im Rahmen der vorliegenden Erfindung der besseren Übersichtlichkeit halber aber häufig eine einheitliche Benennung gewählt. Wird beispielsweise für ein Polymer eine bestimmte Säurezahl angegeben oder wird ein Polymer als carboxyfunktionell bezeichnet, sind hiermit immer sowohl die Carbonsäuregruppen als auch die Carboxylatgruppen umfasst. Soll in dieser Hinsicht eine Differenzierung stattfinden, wird dies beispielsweise anhand des Neutralisierungsgrads getan.

Die Einführung der genannten Gruppen in Polymere wie beispielsweise die Polyurethan-Polyharnstoff-Partikel kann bekanntermaßen über den Einsatz entsprechender Ausgangsverbindungen bei der Herstellung der Polymere erfolgen. Die Ausgangsverbindungen enthalten dann die entsprechenden Gruppen, beispielsweise Carbonsäuregruppen, und werden über weitere funktionelle Gruppen, beispielsweise Hydroxylgruppen, in das Polymer ein polymerisiert. Weiterführende Details werden weiter unten beschrieben.

Bevorzugte anionische und/oder in anionische Gruppen überführbare Gruppen sind Carboxylat- beziehungsweise Carbonsäuregruppen. Das in der Dispersion in Partikelform vorhandene Polyurethan-Polyharnstoff-Polymer besitzt, bezogen auf den Festkörper, bevorzugt eine Säurezahl von 10 bis 35 mg KOH/g, insbesondere von 15 bis 23 mg KOH/g (Messmethode siehe Beispielteil).

Die in der Dispersion (PD) enthaltenen Polyurethan-Polyharnstoff-Partikel enthalten bevorzugt, jeweils in umgesetzter Form, (Z.1.1) mindestens ein Isocyanatgruppen-haltiges Polyurethan-Präpolymer enthaltend anionische und/oder in anionische Gruppen überführbare Gruppen sowie (Z.1.2) mindestens einem Polyamin enthaltend zwei primäre Aminogruppen und ein oder zwei sekundäre Aminogruppen.

Sofern im Rahmen der vorliegenden Erfindung angegeben ist, dass Polymere, beispielsweise die Polyurethan-Polyharnstoff-Partikel der Dispersion (PD), bestimmte Komponenten in umgesetzter Form enthalten, ist hierunter zu verstehen, dass bei der Herstellung der jeweiligen Polymere diese bestimmten Komponenten als Ausgangsverbindungen eingesetzt werden. Je nach Art der Ausgangsverbindungen erfolgt die jeweilige Umsetzung zum Zielpolymer nach unterschiedlichen Mechanismen. So werden augenscheinlich bei der Herstellung von Polyurethan-Polyharnstoff-Partikeln beziehungsweise Polyurethan-Polyharnstoff-Polymeren die Komponenten (Z.1.1) und (Z.1.2) durch Reaktion der Isocyanatgruppen von (Z.1.1) mit den Aminogruppen von (Z.1.2) unter Ausbildung von Harnstoffbindungen miteinander umgesetzt. Das Polymer enthält dann natürlich die vorher vorhandenen Aminogruppen und Isocyanatgruppen in Form von Harnstoffgruppen, das heißt in ihrer entsprechend umgesetzten Form. Trotzdem enthält das Polymer letztlich die beiden Komponenten (Z.1.1) und (Z.1.2), denn abgesehen von den umgesetzten Isocyanatgruppen und Aminogruppen verbleiben die Komponenten unverändert. Demnach wird der Übersicht halber angegeben, dass das jeweilige Polymer die Komponenten, jeweils in umgesetzter Form, enthält. Die Bedeutung des Ausdrucks "das Polymer enthält, in umgesetzter Form, eine Komponente (X)", ist also gleichzusetzen mit der Bedeutung des Ausdrucks "bei der Herstellung des Polymers wurde die Komponente (X) eingesetzt".

Aus obigem folgt, dass anionische und/oder in anionische Gruppen überführbare Gruppen bevorzugt über das oben genannte Isocyanatgruppen-haltige Polyurethan-Präpolymer in die Polyurethan-Polyharnstoff-Partikel eingebracht werden.

Bevorzugt bestehen die Polyurethan-Polyharnstoff-Partikel aus den beiden Komponenten (Z.1.1) und (Z.1.2), das heißt sie werden aus diesen beiden Komponenten hergestellt.

Die wässrige Dispersion (PD) kann durch ein spezielles dreistufiges Verfahren erhalten werden, was bevorzugt ist. Im Rahmen der Beschreibung dieses Verfahrens werden auch bevorzugte Ausführungsformen der Komponenten (Z.1.1) und (Z.1.2) genannt.

### Das Verfahren umfasst

(I) Herstellung einer Zusammensetzung (Z) enthaltend, jeweils bezogen auf die Gesamtmenge der Zusammensetzung (Z),
   (Z.1) 15 bis 65 Gew.-% mindestens eines Isocyanatgruppen-haltigen Intermediats mit maskierten primären Aminogruppen, dessen Herstellung die Umsetzung
      (Z.1.1) mindestens eines Isocyanatgruppen-haltigen Polyurethan-Präpolymers enthaltend anionische und/oder in anionische Gruppen überführbare Gruppen mit
      (Z.1.2a) mindestens einem Polyamin enthaltend zwei maskierte primäre Aminogruppen und ein oder zwei freie sekundäre Aminogruppen
         durch Additionsreaktion von Isocyanatgruppen aus (Z.1.1) mit freien sekundären Aminogruppen aus (Z.1.2) umfasst,
   (Z.2) 35 bis 85 Gew.-% mindestens eines organischen Lösemittels, welches bei einer Temperatur von 20°C eine Löslichkeit in Wasser von höchstens 38 Gew.-% besitzt,
(II) Dispergierung der Zusammensetzung (Z) in wässriger Phase und
(III) zumindest teilweise Entfernung des mindestens einen organischen Lösemittels (Z.2) aus der unter (II) erhaltenen Dispersion.

Im ersten Schritt (I) dieses Verfahrens wird also eine spezielle Zusammensetzung (Z) hergestellt.

Die Zusammensetzung (Z) enthält mindestens ein, bevorzugt genau ein spezielles Isocyanatgruppen-haltiges Intermediat (Z.1) mit maskierten primären Aminogruppen.

Die Herstellung des Intermediats (Z.1) umfasst die Umsetzung mindestens eines Isocyanatgruppen-haltigen Polyurethan-Präpolymers (Z.1.1) enthaltend anionische und/oder in anionische Gruppen überführbare Gruppen mit mindestens einem von einem Polyamin (Z.1.2) abgeleiteten Polyamin (Z.1.2a) enthaltend mindestens zwei maskierte primäre Aminogruppen und mindestens eine freie sekundäre Aminogruppe.

Isocyanatgruppen-haltige Polyurethan-Polymere enthaltend anionische und/oder in anionische Gruppen überführbare Gruppen sind grundsätzlich bekannt. Im Rahmen der vorliegenden Erfindung wird die Komponente (Z.1.1) der besseren Übersichtlichkeit halber als Präpolymer bezeichnet. Es handelt sich nämlich um ein als Vorstufe zu bezeichnendes Polymer, da es als Ausgangskomponente zur Herstellung einer anderen Komponente, nämlich dem Intermediat (Z.1), eingesetzt wird.

Für die Herstellung der Isocyanatgruppen-haltigen Polyurethan-Präpolymere (Z.1.1) enthaltend anionische und/oder in anionische Gruppen überführbare Gruppen können die dem Fachmann bekannten aliphatischen, cycloaliphatischen, aliphatischcycloaliphatischen, aromatischen, aliphatisch-aromatischen und/oder cycloaliphatischaromatischen Polyisocyanate eingesetzt werden. Bevorzugt werden Diisocyanate eingesetzt. Beispielhaft seien folgende Diisocyanate genannt: 1,3- oder 1,4-Phenylendiisocyanat, 2,4- oder 2,6-Toluylendiisocyanat, 4,4'- oder 2,4'-Diphenylmethandiisocyanat, 1,4- oder 1,5-Naphthylendiisocyanat, Diisocyanatodiphenylether, Trimethylendiisocyanat, Tetramethylendiisocyanat, Ethylethylendiisocyanat, 2,3-Dimethylethylendiisocyanat, 1-Methyltrimethylendiisocyanat, Pentamethylendiisocyanat, 1,3-Cyclopentylendiisocyanat, Hexamethylendiisocyanat, Cyclohexylendiisocyanat, 1,2-Cyclohexylendiisocyanat, Octamethylendiisocyanat, Trimethylhexandiisocyanat, Tetramethylhexandiisocyanat, Decamethylendiisocyanat, Dodecamethylendiisocyanat, Tetradecamethylendiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, 1-Isocyanatomethyl-5-isocyanato-1,3,3-trimethylcyclohexan, 2,3-Bis(8-isocyanatooctyl)-4-octyl-5-hexylcyclohexen, Tetramethylxylylendiisocyanate (TMXDI) wie m-Tetramethylxylylendiisocyanat oder Mischungen aus diesen Polyisocyanaten. Auch der Einsatz unterschiedlicher Dimere und Trimere der genannten Diisocyanate wie Uretdione und Isocyanurate ist natürlich möglich. Es können auch Polyisocyanate von höherer Isocyanatfunktionalität verwendet werden. Beispiele dafür sind Tris(4-Isocyanatophenyl)methan, 1,3,4-Triisocyanatobenzol, 2,4,6-Triisocyanatotoluol, 1,3,5-Tris(6-Isocyanatohexylbiuret), Bis-(2,5-Diisocyanato-4-methylphenyl)methan. Gegebenenfalls kann die Funktionalität durch Reaktion mit Monoalkoholen bzw. sekundären Aminen herabgesetzt werden. Bevorzugt ist aber der Einsatz von Diisocyanaten, insbesondere bevorzugt der Einsatz von aliphatischen Diisocyanaten, wie Hexamethylendiisocyanat, Isophorondiisocyanat (IPDI), Dicyclohexylmethan-4,4'-diisocyanat, 2,4- oder 2,6-Diisocyanato-1-methylcyclohexan, m-Tetramethylxylylendiisocyanat (m-TMXDI). Als aliphatisch wird ein Isocyanat dann bezeichnet, wenn die Isocyantgruppen an aliphatische Gruppen angebunden sind, das heißt in alpha-Position zu einer Isocyanatgruppe kein aromatischer Kohlenstoff vorhanden ist.

Zur Herstellung der Präpolymere (Z.1.1) werden die Polyisocyanate in der Regel unter Bildung von Urethanen mit Polyolen, insbesondere Diolen, umgesetzt.

Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol (Messmethode siehe Beispielteil), eingesetzt. Solche Polyesterpolyole, bevorzugt Polyesterdiole, können auf bekannte Weise durch Umsetzung von entsprechenden Polycarbonsäuren, bevorzugt Dicarbonsäuren, und/oder deren Anhydriden mit entsprechenden Polyolen, bevorzugt Diolen, durch Veresterung hergestellt werden. Natürlich können gegebenenfalls zusätzlich auch anteilig Monocarbonsäuren und/oder Monoalkohole zur Herstellung eingesetzt werden. Die Polyesterdiole sind bevorzugt gesättigt, insbesondere gesättigt und linear.

Beispiele für geeignete aromatische Polycarbonsäuren zur Herstellung solcher Polyesterpolyole, bevorzugt Polyesterdiole, sind Phthalsäure, Isophthalsäure und Terephthalsäure, von denen Isophthalsäure vorteilhaft ist und deshalb bevorzugt verwendet wird. Beispiele für geeignete aliphatische Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure und Dodecandicarbonsäure oder auch Hexahydrophthalsäure, 1,3-Cyclohexandicarbonsäure, 1,4-Cyclohexandicarbonsäure, 4-Methylhexahydrophthalsäure, Tricyclodecandicarbonsäure sowie Tetrahydrophthalsäure. Ebenfalls eingesetzt werden können als Dicarbonsäuren Dimerfettsäuren beziehungsweise dimerisierte Fettsäuren, bei denen es sich bekanntermaßen um Gemische handelt, die durch Dimerisierung von ungesättigten Fettsäuren hergestellt werden und beispielsweise unter den Handelsbezeichnungen Radiacid (Firma Oleon) oder Pripol (Firma Croda) zu erhalten sind. Der Einsatz solcher Dimerfettsäuren zur Herstellung von Polyesterdiolen ist im Rahmen der vorliegenden Erfindung bevorzugt. Bevorzugt eingesetzte Polyole zur Herstellung der Präpolymere (Z.1.1) sind also Polyesterdiole, die unter Einsatz von Dimerfettsäuren hergestellt wurden. Insbesondere bevorzugt sind Polyesterdiole, bei deren Herstellung mindestens 50 Gew.-%, bevorzugt 55 bis 75 Gew.-%, der eingesetzten Dicarbonsäuren Dimerfettsäuren sind.

Beispiele für entsprechende Polyole zur Herstellung von Polyesterpolyolen, bevorzugt Polyesterdiolen, sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol und Trimethylpentandiol. Bevorzugt werden also Diole eingesetzt. Solche Polyole beziehungsweise Diole können natürlich auch direkt zur Herstellung des Präpolymers (Z.1.1) eingesetzt werden, das heißt direkt mit Polyisocyanaten umgesetzt werden.

Weiterhin zur Herstellung der Präpolymere (Z.1.1) eingesetzt werden können auch Polyamine wie Diamine und/oder Aminoalkohole. Beispielhaft seien als Diamine Hydrazin, Alkyl- oder Cycloalkyldiamine wie Propylendiamin und 1-Amino-3-aminomethyl-3,5,5-trimethylcyclohexan und als Aminoalkohole Ethanolamin oder Diethanolamin genannt.

Die Präpolymere (Z.1.1) enthalten anionische und/oder in anionische Gruppen überführbare Gruppen. Zur Einführung der genannten Gruppen können bei der Herstellung der Präpolymere (Z.1.1) Ausgangsverbindungen eingesetzt werden, die neben bei der Herstellung von Urethanbindungen umzusetzenden Gruppen, bevorzugt Hydroxylgruppen, noch die oben genannten Gruppen, beispielsweise Carbonsäuregruppen, enthalten. Auf diese Weise werden die entsprechenden Gruppen ins Präpolymer eingeführt.

Als entsprechende Verbindungen zur Einführung der bevorzugten Carbonsäuregruppen kommen, sofern Carboxylgruppen-haltig, Polyetherpolyole und/oder Polyesterpolyole in Betracht. Bevorzugt eingesetzt werden allerdings jedenfalls niedermolekulare Verbindungen, die mindestens eine Carbonsäuregruppe und mindestens eine gegenüber Isocyanatgruppen reaktive funktionelle Gruppe, bevorzugt Hydroxylgruppen, aufweisen. Der Ausdruck "niedermolekulare Verbindung" ist im Rahmen der vorliegenden Erfindung so zu verstehen, dass es sich im Gegensatz zu höhermolekularen Verbindungen, insbesondere Polymeren, um solche handelt, denen als vorzugsweise monomeren Verbindungen ein diskretes Molekulargewicht zugeordnet werden kann. Eine niedermolekulare Verbindung ist also insbesondere kein Polymer, denn letztere stellen sich immer als Mischung von Molekülen dar und müssen über mittlere Molekulargewichte beschrieben werden. Vorzugsweise ist unter dem Begriff niedermolekulare Verbindung zu verstehen, dass die entsprechenden Verbindungen ein Molekulargewicht von weniger als 300 g/mol aufweisen. Bevorzugt ist der Bereich von 100 bis 200 g/mol.

In diesem Sinne bevorzugte Verbindungen sind beispielsweise Monocarbonsäuren enthaltend zwei Hydroxylgruppen wie beispielsweise Dihydroxypropionsäure, Dihydroxybernsteinsäure und Dihydroxybenzoesäure. Ganz besonders sind alpha, alpha Dimethylolalkansäuren wie 2,2-Dimethylolessigsäure, 2,2-Dimethylolpropionsäure, 2,2-Dimethylolbuttersäure und 2,2-Dimethylolpentansäure, insbesondere die 2,2-Dimethylolpropionsäure.

Die Präpolymere (Z.1.1) sind also bevorzugt carboxyfunktionell. Sie besitzen, bezogen auf den Festkörper, bevorzugt eine Säurezahl von 10 bis 35 mg KOH/g, insbesondere 15 bis 23 mg KOH/g.

Das zahlenmittlere Molekulargewicht der Präpolymere kann breit variieren und liegt beispielsweise im Bereich von 2000 bis 20000 g/mol, bevorzugt von 3500 bis 6000 g/mol (Messmethode siehe Beispielteil).

Das Präpolymer (Z.1.1) ist Isocyanatgruppen-haltig. Bevorzugt besitzt es, bezogen auf den Festkörper, einen Isocyanatgehalt von 0,5 bis 6,0 Gew.-%, bevorzugt 1,0 bis 5,0 Gew.-%, insbesondere bevorzugt 1,5 bis 4,0 Gew.-% (Messmethode sie Beispielteil).

Da das Präpolymer (Z.1.1) Isocyanatgruppen-haltig ist, wird die Hydroxylzahl des Präpolymers augenscheinlich in der Regel sehr niedrig sein. Bevorzugt ist die Hydroxylzahl des Präpolymers, bezogen auf den Festkörper, kleiner als 15 mg KOH/g, insbesondere kleiner 10 mg KOH/g, nochmals bevorzugt kleiner 5 mg KOH/g (Messmethode siehe Beispielteil).

Die Herstellung der Präpolymere (Z.1.1) kann nach bekannten und etablierten Methoden in Masse oder Lösung erfolgen, insbesondere bevorzugt durch Umsetzung der Ausgangsverbindungen in organischen Lösemitteln, wie bevorzugt Methylethylketon bei Temperaturen von beispielsweise 60 bis 120°C, und gegebenenfalls unter Einsatz von zur Polyurethanherstellung typischen Katalysatoren. Solche Katalysatoren sind dem Fachmann bekannt, ein Beispiel ist Dibutylzinnlaurat. Dabei ist selbstverständlich so vorzugehen, dass das Verhältnis der Ausgangskomponenten so gewählt wird, dass das Produkt, das heißt das Präpolymer (Z.1.1) Isocyanatgruppen enthält. Ebenfalls unmittelbar ersichtlich ist, dass die Lösemittel so ausgewählt werden sollten, dass diese keine unerwünschten Reaktionen mit den funktionellen Gruppen der Ausgangsverbindungen eingehen, gegenüber diesen Gruppen also insoweit inert sind, dass sie nicht die Umsetzung dieser funktionellen Gruppen behindern. Bevorzugt wird die Herstellung bereits in einem wie weiter unten beschriebenen organischen Lösemittel (Z.2) durchgeführt, da dieses ohnehin in der in Stufe (I) des Verfahrens herzustellenden Zusammensetzung (Z) vorhanden sein muss.

Wie bereits oben angegeben, können die im Präpolymer (Z.1.1) vorhandenen in anionische Gruppen überführbare Gruppen anteilig auch als entsprechend anionische Gruppen vorliegen, beispielsweise durch den Einsatz eines Neutralisationsmittels. Auf diese Weise kann die Wasserdispergierbarkeit der Präpolymere (Z.1.1) und damit auch des Intermediats (Z.1) eingestellt werden.

Als Neutralisationsmittel kommen insbesondere die bekannten basischen Neutralisationsmittel wie beispielsweise Carbonate, Hydrogencarbonate oder Hydroxide von Alkali- und Erdalkalimetallen wie beispielsweise LiOH, NaOH, KOH oder Ca(OH)₂ in Betracht. Ebenso zur Neutralisation geeignet sind und im Rahmen der vorliegenden Erfindung bevorzugt eingesetzt werden organische, stickstoffhaltige Basen wie Amine wie Ammoniak, Trimethylamin, Triethylamin, Tributylamine, Dimethylanilin, Triphenylamin, Dimethylethanolamin, Methyldiethanolamin oder Triethanolamin sowie deren Mischungen.

Die Neutralisation des Präpolymers (Z.1.1) mit den Neutralisationsmitteln, insbesondere mit den stickstoffhaltigen, organischen Basen, kann nach der Herstellung des Präpolymers in organischer Phase, das heißt in Lösung mit einem organischen Lösemittel, insbesondere einem wie unten beschriebenen Lösemittel (Z.2) erfolgen.

Natürlich kann das Neutralisationsmittel auch bereits während beziehungsweise vor Beginn der eigentlichen Polymerisation zugegeben werden, wobei dann beispielsweise die Carbonsäuregruppen-haltigen Ausgangsverbindungen neutralisiert werden.

Wenn eine Neutralisation der in anionische Gruppen überführbaren Gruppen, insbesondere der Carbonsäuregruppen, gewünscht wird, kann das Neutralisationsmittel beispielsweise in einer solchen Menge zugesetzt werden, dass ein Anteil von 35 bis 65 % der Gruppen neutralisiert ist (Neutralisationsgrad). Bevorzugt ist ein Bereich von 40 bis 60 % (Berechnungsmethode siehe Beispielteil).

Bevorzugt ist, dass das Präpolymer (Z.1.1) nach seiner Herstellung und vor seinem Einsatz zur Herstellung des Intermediats (Z.1) wie beschrieben neutralisiert wird.

Die hier beschriebene Herstellung des Intermediats (Z.1) umfasst die Umsetzung des beschriebenen Präpolymers (Z.1.1) mit mindestens einem, bevorzugt genau einem von einem Polyamin (Z.1.2) abgeleiteten Polyamin (Z.1.2a).

Das Polyamin (Z.1.2a) enthält zwei maskierte primäre Aminogruppen und ein oder zwei freie sekundäre Aminogruppen.

Unter maskierten Aminogruppen sind bekanntermaßen solche zu verstehen, in denen die an sich in freien Aminogruppen vorhandenen Wasserstoffreste am Stickstoff durch reversible Umsetzung mit einem Maskierungsmittel subsituiert sind. Aufgrund der Maskierung können die Aminogruppen nicht wie freie Aminogruppen über Kondensations- oder Additionsreaktionen umgesetzt werden, sind also in dieser Hinsicht nicht reaktiv und unterscheiden sich damit von freien Aminogruppen. Erst die Wiederentfernung des reversibel angelagerten Maskierungsmittels, wodurch wiederum die freien Aminogruppen entstehen, ermöglicht dann augenscheinlich die an sich bekannten Reaktionen der Aminogruppen. Das Prinzip ähnelt damit dem Prinzip der auf dem Gebiet der Polymerchemie ebenfalls bekannten blockierten beziehungsweise maskierten Isocyanate.

Die primären Aminogruppen des Polyamins (Z.1.2a) können mit den an sich bekannten Maskierungsmitteln maskiert sein, beispielsweise mit Ketonen und/oder Aldehyden. Bei einer solchen Maskierung entstehen dann also unter Freisetzung von Wasser Ketimine und/oder Aldimine, welche keine Stickstoff-Wasserstoff-Bindungen mehr enthalten, sodass keine typischen Kondensations- oder Additionsreaktionen einer Aminogruppe mit einer weiteren funktionellen Gruppe wie einer Isocyanatgruppe stattfinden können.

Reaktionsbedingungen zur Herstellung eines solchen maskierten primären Amins, beispielsweise eines Ketimins, sind bekannt. So kann beispielsweise unter Zuführung von Wärme zu einer Mischung eines primären Amins mit einem Überschuss eines Ketons, welches gleichzeitig als Lösemittel für das Amin fungiert, eine entsprechende Maskierung realisiert werden. Bevorzugt wird das anfallende Reaktionswasser während der Reaktion entfernt, um die ansonsten mögliche Rückreaktion (Demaskierung) der reversiblen Maskierung zu verhindern.

Auch die Reaktionsbedingungen für eine Demaskierung von maskierten primären Aminogruppen sind an sich bekannt. So ist beispielsweise bereits die Überführung eines maskierten Amins in die wässrige Phase ausreichend, um durch den dann bestehenden Konzentrationsdruck des Wassers das Gleichgewicht wieder auf die Seite der Demaskierung zu verschieben und dadurch unter Verbrauch von Wasser freie primäre Aminogruppen sowie ein freies Keton zu erzeugen.

Aus oben Gesagtem folgt, dass im Rahmen der vorliegenden Erfindung eindeutig zwischen maskierten und freien Aminogruppen unterschieden wird. Wird allerdings eine Aminogruppe weder als maskiert noch als frei spezifiziert, ist hierunter eine freie Aminogruppe zu verstehen.

Bevorzugte Maskierungsmittel zur Maskierung der primären Aminogruppen des Polyamins (Z.1.2a) sind Ketone. Unter den Ketonen sind solche besonders bevorzugt, bei denen es sich um ein wie weiter unten beschriebenes organisches Lösemittel (Z.2) handelt. Denn diese Lösemittel (Z.2) müssen ohnehin in der in Stufe (I) des Verfahrens herzustellenden Zusammensetzung (Z) vorhanden sein. Bereits oben angegeben ist, dass die Herstellung entsprechender mit einem Keton maskierter primärer Amine besonders gut in einem Überschuss des Ketons gelingt. Durch den Einsatz von Ketonen (Z.2) zur Maskierung kann also der entsprechend bevorzugte Herstellungsprozess von maskierten Aminen zur Anwendung kommen, ohne dass das gegebenenfalls ungewünschte Maskierungsmittel aufwendig abgetrennt werden muss. Stattdessen kann die Lösung des maskierten Amins direkt eingesetzt werden, um das Intermediat (Z.1) herzustellen. Bevorzugte Maskierungsmittel sind Aceton, Methylethylketon, Methylisobutylketon, Diisopropylketon, Cyclopentanon oder Cyclohexanon, besonders bevorzugt sind die Ketone (Z.2) Methylethylketon und Methylisobutylketon.

Die bevorzugte Maskierung mit Ketonen und/oder Aldehyden, insbesondere Ketonen und die dabei erfolgende Herstellung von Ketiminen und/oder Aldiminen hat zudem den Vorteil, dass selektiv primäre Aminogruppen maskiert werden. Vorhandene sekundäre Aminogruppen können augenscheinlich nicht maskiert werden und bleiben damit frei. Daher kann ein Polyamin (Z.1.2a), welches neben den zwei maskierten primären Aminogruppen auch ein oder zwei freie sekundäre Aminogruppen enthält, problemlos über die genannten bevorzugten Maskierungsreaktionen aus einem Polyamin (Z.1.2), welches freie sekundäre und primäre Aminogruppen enthält, hergestellt werden.

Die Polyamine (Z.1.2a) können durch Maskierung der primären Aminogruppen von Polyaminen (Z.1.2) enthaltend zwei primäre Aminogruppen und ein oder zwei sekundäre Aminogruppen hergestellt werden. In Frage kommen letztlich alle an sich bekannten aliphatischen, aromatischen oder araliphatischen (gemischt aliphatisch-aromatischen) Polyamine (Z.1.2) mit zwei primären Aminogruppen und einer oder zwei sekundären Aminogruppen. Dies bedeutet, dass neben den genannten Aminogruppen an sich beliebige aliphatische, aromatische oder araliphatische Gruppen vorhanden sein können. Beispielsweise möglich sind einbindige Gruppen, die als endständige Gruppen an einer sekundären Aminogruppe angeordnet sind, oder zweibindige Gruppen, die zwischen zwei Aminogruppen angeordnet sind.

Als aliphatisch werden im Rahmen der vorliegenden Erfindung alle organischen Gruppen bezeichnet, die nicht aromatisch sind. Beispielsweise kann es sich bei den neben den genannten Aminogruppen vorhandenen Gruppen um aliphatische Kohlenwasserstoffgruppen handeln, das heißt Gruppen, die ausschließlich aus Kohlenstoff und Wasserstoff bestehen und nicht aromatisch sind. Diese aliphatischen Kohlenwasserstoffgruppen können linear, verzweigt oder cyclisch sein, wobei sie gesättigt oder ungesättigt sein können. Natürlich können diese Gruppen auch sowohl cyclische und lineare oder verzweigte Anteile enthalten. Möglich ist auch, dass aliphatische Gruppen Heteroatome enthalten, insbesondere in Form von verbrückenden Gruppen wie Ether-, Ester-, Amid- und/oder Urethangruppen. Mögliche aromatische Gruppen sind ebenfalls bekannt und bedürfen keiner weiteren Erläuterung.

Bevorzugt ist, dass die Polyamine (Z.1.2a) zwei maskierte primäre Aminogruppen und ein oder zwei freie sekundäre Aminogruppen besitzen und sie als primäre Aminogruppen ausschließlich maskierte primäre Aminogruppen und als sekundäre Aminogruppen ausschließlich freie sekundäre Aminogruppen besitzen.

Bevorzugt besitzen die Polyamine (Z.1.2a) insgesamt drei oder vier Aminogruppen, wobei diese ausgewählt sind aus der Gruppe der maskierten primären Aminogruppen und der freien sekundären Aminogruppen.

Ganz besonders bevorzugte Polyamine (Z.1.2a) sind solche, die aus zwei maskierten primären Aminogruppen, ein oder zwei freien sekundären Aminogruppen sowie aliphatisch-gesättigten Kohlenwasserstoffgruppen bestehen.

Analoge bevorzugte Ausführungsformen gelten für die Polyamine (Z.1.2), wobei in diesen dann statt maskierten primären Aminogruppen freie primäre Aminogruppen vorhanden sind.

Beispiele von bevorzugten Polyaminen (Z.1.2), aus denen auch durch Maskierung der primären Aminogruppen Polyamine (Z.1.2a) hergestellt werden können, sind Diethylentriamin, 3-(2-Aminoethyl)aminopropylamin, Dipropylentriamin sowie N1-(2-(4-(2-Aminoethyl)piperazin-1-yl)ethyl)ethane-1,2-diamin (eine sekundäre Aminogruppe, zwei zu blockierende primäre Aminogruppen) und Triethylentetramin sowie N,N'-Bis(3-aminopropyl)-ethylendiamin (zwei sekundäre Aminogruppen, zwei zu blockierende primäre Aminogruppen).

Dem Fachmann ist klar, dass schon aus rein synthesetechnischen Gründen nicht immer ein theoretisch-idealisierter quantitativer Umsatz bei der Maskierung von primären Aminogruppen stattfinden kann. Wird beispielweise eine bestimmte Menge eines Polyamins maskiert, kann bei der Maskierung beispielsweise ein Anteil von 95 mol-% oder mehr der primären Aminogruppen maskiert werden (IR-spektroskopisch bestimmbar, vergleiche Beispielteil). Besitzt ein Polyamin im nicht maskierten Zustand beispielsweise zwei freie primäre Aminogruppen und werden die primären Aminogruppen einer bestimmten Menge dieses Amins dann maskiert, so wird im Rahmen der vorliegenden Erfindung angegeben, dass dieses Amin zwei maskierte primäre Aminogruppen aufweist, wenn ein Anteil von mehr als 95 mol-% der in der eingesetzten Menge vorhandenen primären Aminogruppen maskiert sind. Dies ist einerseits der schon genannten Tatsache, dass synthesetechnisch nicht immer ein quantitativer Umsatz realisiert werden kann, geschuldet. Andererseits bedeutet die Tatsache, dass mehr als 95 mol-% der primären Aminogruppen maskiert sind, dass der größte Anteil der Gesamtmenge der zur Maskierung eingesetzten Amine tatsächlich ausschließlich maskierte primäre Aminogruppen, nämlich genau zwei maskierte primäre Aminogruppen, enthält.

Die Herstellung des Intermediats (Z.1) umfasst die Umsetzung des Präpolymers (Z.1.1) mit dem Polyamin (Z.1.2a) durch Additionsreaktion von Isocyanatgruppen aus (Z.1.1) mit freien sekundären Aminogruppen aus (Z.1.2a). Diese an sich bekannte Umsetzung führt dann zur Anbindung des Polyamins (Z.1.2a) an das Präpolymer (Z.1.1) unter Ausbildung von Harnstoffbindungen, wodurch letztlich das Intermediat (Z.1) gebildet wird. Es versteht sich von selbst, dass bei der Herstellung des Intermediats (Z.1) bevorzugt also keine anderen Amine mit freien oder maskierten sekundären oder freien oder maskierten primären Aminogruppen eingesetzt werden.

Die Herstellung des Intermediats (Z.1) kann nach bekannten und etablierten Methoden in Masse oder Lösung erfolgen, insbesondere bevorzugt durch Umsetzung von (Z.1.1) mit (Z.1.2a) in organischen Lösemitteln. Unmittelbar ersichtlich ist, dass die Lösemittel so ausgewählt werden sollten, dass diese keine unerwünschten Reaktionen mit den funktionellen Gruppen der Ausgangsverbindungen eingehen, sich gegenüber diesen Gruppen also inert oder weitgehend inert verhalten. Bevorzugt wird als Lösemittel bei der Herstellung zumindest anteilig bereits ein wie weiter unten beschriebenes organisches Lösemittel (Z.2), insbesondere Methylethylketon, eingesetzt, da dieses ohnehin in der in Stufe (I) des Verfahrens herzustellenden Zusammensetzung (Z) vorhanden sein muss. Dabei wird bevorzugt eine Lösung eines Präpolymers (Z.1.1) in einem Lösemittel (Z.2) mit einer Lösung eines Polyamins (Z.1.2a) in einem Lösemittel (Z.2), vermischt, wobei die beschriebene Umsetzung stattfinden kann.

Natürlich kann das so hergestellte Intermediat (Z.1) bei oder nach der Herstellung mit schon oben beschriebenen Neutralisationsmitteln auf die ebenfalls oben für das Präpolymer (Z.1.1) beschriebene Weise neutralisiert werden. Bevorzugt ist aber, dass das Präpolymer (Z.1.1) bereits in wie oben beschriebener Art vor seinem Einsatz zur Herstellung des Intermediats (Z.1) neutralisiert wird, sodass eine Neutralisierung bei oder nach der Herstellung von (Z.1) nicht mehr relevant ist. In einem solchen Fall ist also der Neutralisationsgrad des Präpolymers (Z.1.1) mit dem Neutralisationsgrad des Intermediats (Z.1) gleichzusetzen. Erfolgt im Rahmen des Verfahrens überhaupt keine weitere Zugabe von Neutralisationsmitteln, so ist demnach auch der Neutralisationsgrad der in den schließlich hergestellten erfindungsgemäßen Dispersionen (PD) enthaltenen Polymeren mit dem Neutralisationsgrad des Präpolymers (Z.1.1) gleichzusetzen.

Das Intermediat (Z.1) besitzt maskierte primäre Aminogruppen. Dies ist augenscheinlich dadurch zu erreichen, dass bei der Umsetzung des Präpolymers (Z.1.1) und des Polyamins (Z.1.2a) die freien sekundären Aminogruppen zur Reaktion gebracht werden, jedoch die maskierten primären Aminogruppen nicht umgesetzt werden. Denn wie schon oben beschrieben wird durch die Maskierung erreicht, dass keine typischen Kondensations- oder Additionsreaktionen mit weiteren funktionellen Gruppen wie Isocyanatgruppen stattfinden können. Selbstverständlich bedeutet dies, dass die Bedingungen bei der Umsetzung so zu wählen sind, dass die maskierten Aminogruppen auch maskiert bleiben, um hierdurch ein Intermediat (Z.1) bereitzustellen. Entsprechende Bedingungen weiß der Fachmann einzustellen und werden beispielsweise durch die ohnehin bevorzugte Reaktion in organischen Lösemitteln realisiert.

Das Intermediat (Z.1) ist Isocyanatgruppen-haltig. Demnach muss bei der Umsetzung von (Z.1.1) und (Z.1.2a) das Verhältnis dieser Komponenten selbstverständlich so gewählt werden, dass das Produkt, das heißt das Intermediat (Z.1), Isocyanatgruppen enthält.

Da wie oben beschrieben bei der Umsetzung von (Z.1.1) mit (Z.1.2a) freie sekundäre Aminogruppen mit Isocyanatgruppen umgesetzt werden, die primären Aminogruppen aber aufgrund der Maskierung nicht umgesetzt werden, ist damit zunächst unmittelbar klar, dass bei dieser Umsetzung das molare Verhältnis von Isocyanatgruppen von (Z.1.1) zu freien sekundären Aminogruppen von (Z.1.2a) größer 1 sein muss. Dieses Merkmal ergibt sich implizit, nichtsdestotrotz eindeutig und unmittelbar aus dem erfindungswesentlichen Merkmal, dass das Intermediat (Z.1) Isocyanatgruppen-haltig ist.

Bevorzugt ist allerdings, dass bei der Umsetzung ein wie folgt definierter Überschuss an Isocyanatgruppen vorliegt. Die molaren Mengen (n) von Isocyanatgruppen, freien sekundären Aminogruppen und maskierten primären Aminogruppen genügen in dieser bevorzugten Ausführungsform der folgenden Bedingung: [n(Isocyanatgruppen von (Z.1.1)) - n (freie sekundäre Aminogruppen von (Z.1.2a))] / n (maskierte primäre Aminogruppen von (Z.1.2a)) = 1,2/1 bis 4/1, bevorzugt 1,5/1 bis 3/1, ganz besonders bevorzugt 1,8/1 bis 2,2/1, nochmals bevorzugt 2/1.

In diesen bevorzugten Ausführungsformen besitzt das Intermediat (Z.1), welches durch Umsetzung von Isocyanatgruppen von (Z.1.1) mit den freien sekundären Aminogruppen von (Z.1.2a) entsteht, im Verhältnis zu den maskierten primären Aminogruppen einen Überschuss von Isocyanatgruppen. Dies wird letztlich dadurch erreicht, dass das molare Verhältnis von Isocyanatgruppen von (Z.1.1) zu der Gesamtmenge von freien sekundären Aminogruppen und maskierten primären Aminogruppen von (Z.1.2a) so groß gewählt wird, dass auch nach der Herstellung von (Z.1) und dem entsprechenden Verbrauch von Isocyanatgruppen durch die Umsetzung mit den freien sekundären Aminogruppen ein entsprechender Überschuss der Isocyanatgruppen verbleibt.

Hat beispielsweise das Polyamin (Z.1.2a) eine freie sekundäre Aminogruppe und zwei maskierte primäre Aminogruppen, so wird das molare Verhältnis zwischen den Isocyanatgruppen von (Z.1.1) zu dem Polyamin (Z.1.2a) in der ganz besonders bevorzugten Ausführungsform mit 5/1 eingestellt. Der Verbrauch von einer Isocyanatgruppe bei der Umsetzung mit der freien sekundären Aminogruppe würde dann bedeuten, dass für die oben genannte Bedingung 4/2 (beziehungsweise 2/1) realisiert ist.

Der Anteil des Intermediats (Z.1) beträgt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%, jeweils bezogen auf die Gesamtmenge der Zusammensetzung (Z).

Die Bestimmung des Anteils eines Intermediats (Z.1) kann wie folgt durchgeführt werden: Es wird der Festkörper einer Mischung, die neben dem Intermediat (Z.1) lediglich organische Lösemittel enthält, bestimmt (Messmethode zur Bestimmung des Festkörpers (auch Festkörpergehalt oder Feststoffgehalt genannt) siehe Beispielteil). Der Festkörper entspricht dann der Menge des Intermediats (Z.1). Durch Berücksichtigung des Festkörpers der Mischung kann damit der Anteil des Intermediats (Z.1) an der Zusammensetzung (Z) ermittelt beziehungsweise festgelegt werden. Da das Intermediat (Z.1) bevorzugt ohnehin in einem organischen Lösemittel hergestellt wird, nach der Herstellung also ohnehin in einer Mischung vorliegt, die neben dem Intermediat lediglich organische Lösemittel enthält, ist dies die Methode der Wahl.

Die Zusammensetzung (Z) enthält zudem mindestens ein spezielles organisches Lösemittel (Z.2).

Die Lösemittel (Z.2) besitzen bei einer Temperatur von 20°C eine Löslichkeit in Wasser von höchstens 38 Gew.-% (Messmethode siehe Beispielteil). Bevorzugt ist die Löslichkeit in Wasser bei einer Temperatur von 20°C kleiner 30 Gew.-%. Ein bevorzugter Bereich ist von 1 bis 30 Gew.-%.

Demzufolge besitzt das Lösemittel (Z.2) eine eher moderate Löslichkeit in Wasser, ist insbesondere nicht vollständig mischbar mit Wasser beziehungsweise besitzt keine unbegrenzte Löslichkeit in Wasser. Vollständig mischbar mit Wasser ist ein Lösemittel dann, wenn es in beliebigen Verhältnissen mit Wasser vermischt werden kann, ohne dass es zu einer Entmischung, das heißt Zweiphasenbildung kommt.

Beispiele von Lösemitteln (Z.2) sind Methylethylketon, Methylisobutylketon, Diisobutylketon, Diethylether, Dibutylether, Dipropylenglykoldimethylether, Ethylenglykoldiethylether, Toluol, Methylacetat, Ethylacetat, Butylacetat, Propylencarbonat, Cyclohexanon oder Gemische dieser Lösemittel. Bevorzugt ist Methylethylketon, welches bei 20°C eine Löslichkeit in Wasser von 24 Gew.-% aufweist.

Keine Lösemittel (Z.2) sind damit Lösemittel wie Aceton, N-Methyl-2-pyrrolidon, N-Ethyl-2-pyrrolidon, Tetrahydrofuran, Dioxan, N-Formylmorpholin, Dimethylformamid oder Dimethylsulfoxid.

Durch die Auswahl der speziellen Lösemittel (Z.2) mit nur begrenzter Wasserlöslichkeit wird insbesondere erreicht, dass bei der in Schritt (II) des Verfahrens erfolgenden Dispergierung der Zusammensetzung (Z) in wässriger Phase nicht direkt eine homogene Lösung gebildet werden kann. Es wird angenommen, dass die stattdessen vorliegende Dispersion ermöglicht, dass die unter Schritt (II) stattfindenden Vernetzungsreaktionen (Additionsreaktionen von freien primären Aminogruppen und Isocyanatgruppen unter Bildung von Harnstoffbindungen) in eingeschränkten Volumen ablaufen, wodurch letztlich die Bildung der wie oben definierten Mikropartikel ermöglicht wird.

Bevorzugte Lösemittel (Z.2) besitzen neben der beschriebenen Wasserlöslichkeit einen Siedepunkt von höchstens 120°C, besonders bevorzugt von höchstens 90°C (bei Normaldruck, das heißt 1,013 bar). Dies hat Vorteile bei dem weiter unten beschriebenen Schritt (III) des Verfahrens, das heißt der zumindest teilweisen Entfernung des mindestens einen organischen Lösemittels (Z.2) aus der Dispersion, die in Schritt (II) des Verfahrens hergestellt wird. Denn augenscheinlich können bei Einsatz der in diesem Sinne bevorzugten Lösemittel (Z.2) diese Lösemittel beispielsweise destillativ entfernt werden, ohne das gleichzeitig signifikante Mengen des in Schritt (II) des Verfahrens eingebrachten Wassers entfernt werden. Somit entfällt beispielsweise das aufwendige Nachgeben von Wasser zum Erhalt des wässrigen Charakters der Dispersion (PD).

Der Anteil des mindestens einen organischen Lösemittels (Z.2) beträgt von 35 bis 85 Gew.-%, bevorzugt von 40 bis 75 Gew.-%, nochmals bevorzugt von 45 bis 70 Gew.-%, insbesondere bevorzugt von 47,5 bis 65 Gew.-% und in einer ganz besonderen Ausführungsform von 50 bis 60 Gew.-%, jeweils bezogen auf die Gesamtmenge der Zusammensetzung (Z).

Im Rahmen der vorliegenden Erfindung hat sich gezeigt, dass durch die gezielte Kombination eines wie oben spezifizierten Anteils des Intermediats (Z.1) an der Zusammensetzung (Z) und der Auswahl der speziellen Lösemittel (Z.2) nach den in der Folge beschriebenen Schritten (II) und (III) Polyurethan-Polyharnstoff-Dispersionen bereitgestellt werden können, die Polyurethan-Polyharnstoff-Partikel mit der erforderlichen Teilchengröße enthalten, die zudem den erforderlichen Gelanteil aufweisen.

Die beschriebenen Komponenten (Z.1) und (Z.2) machen in Summe bevorzugt mindestens 90 Gew.-% der Zusammensetzung (Z) aus. Bevorzugt machen die beiden Komponenten mindestens 95 Gew.-%, insbesondere mindestens 97,5 Gew.-% der Zusammensetzung (Z) aus. Ganz besonders bevorzugt besteht die Zusammensetzung (Z) aus diesen beiden Komponenten. In diesem Zusammenhang sei darauf hingewiesen, dass im Falle des Einsatzes von wie oben beschriebenen Neutralisationsmitteln diese Neutralisationsmittel bei der Berechnung der Menge eines Intermediats (Z.1) dem Intermediat zugerechnet werden. Denn in diesem Fall besitzt das Intermediat (Z.1) jedenfalls anionische Gruppen, die auf den Einsatz des Neutralisationsmittels zurückgehen. Das nach der Bildung dieser anionischen Gruppen vorhandene Kation wird demzufolge ebenfalls dem Intermediat zugerechnet.

Sofern die Zusammensetzung (Z) neben den Komponenten (Z.1) und (Z.2) noch andere Komponenten enthält, handelt es sich hierbei bevorzugt lediglich um organische Lösemittel. Bevorzugt entspricht der Festkörper der Zusammensetzung (Z) damit dem Anteil des Intermediats (Z.1) an der Zusammensetzung (Z). Die Zusammensetzung (Z) besitzt somit bevorzugt einen Festkörpergehalt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%.

Eine besonders bevorzugte Zusammensetzung (Z) enthält also in Summe mindestens 90 Gew.-% der Komponenten (Z.1) und (Z.2) und enthält neben dem Intermediat (Z.1) ausschließlich organische Lösemittel.

Ein Vorteil der Zusammensetzung (Z) liegt darin, dass sie ohne den Einsatz von umwelt- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Zusammensetzung (Z) bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Zusammensetzung (Z) vollständig frei von diesen organischen Lösemitteln.

In einem zweiten Schritt (II) des hier beschriebenen Verfahrens wird die Zusammensetzung (Z) in wässriger Phase dispergiert.

Bekannt ist und auch aus bereits oben Gesagtem folgt, dass damit im Schritt (II) eine Demaskierung der maskierten primären Aminogruppen des Intermediats (Z.1) realisiert wird. Denn durch die Überführung eines maskierten Amins in die wässrige Phase wird unter Verbrauch von Wasser das reversibel angelagerte Maskierungsmittel freigesetzt und es werden freie primäre Aminogruppen gebildet.

Ebenfalls klar ist damit, dass die so entstandenen freien primären Aminogruppen dann mit ebenfalls vorhandenen Isocyanatgruppen des Intermediats (Z.1) beziehungsweise des aus dem Intermediat (Z.1) entstanden demaskierten Intermediats durch Additionsreaktion unter Bildung von Harnstoffbindungen umgesetzt werden.

Bekannt ist auch, dass die Überführung in die wässrige Phase bedeutet, dass grundsätzlich die Möglichkeit besteht, dass Isocyanatgruppen des Intermediats (Z.1) beziehungsweise des aus dem Intermediat (Z.1) entstanden demaskierten Intermediats mit dem Wasser unter Abspaltung von Kohlenstoffdioxid zu freien primären Aminogruppen reagieren, welche dann wiederum mit noch vorhandenen Isocyanatgruppen umgesetzt werden können.

Die oben genannten Reaktionen und Umsetzungen verlaufen selbstverständlich parallel zueinander. Letztlich entsteht dabei durch beispielsweise intermolekulare und intramolekulare Umsetzung beziehungsweise Vernetzung eine Dispersion enthaltend Polyurethan-Polyharnstoff-Partikel mit definierter mittlerer Teilchengröße und definiertem Vernetzungsgrad beziehungsweise Gelanteil.

In Schritt (II) des hier beschriebenen Verfahrens wird die Zusammensetzung (Z) in Wasser dispergiert, wobei eine Demaskierung der maskierten primären Aminogruppen des Intermediats (Z.1) und eine Umsetzung der so entstandenen freien primären Aminogruppen mit den Isocyanatgruppen des Intermediats (Z.1) sowie den Isocyanatgruppen des aus dem Intermediat (Z.1) entstandenen demaskierten Intermediats durch Additionsreaktion erfolgt.

Schritt (II) des hier beschriebenen Verfahrens, das heißt die Dispergierung in wässriger Phase, kann auf an sich beliebige Weise erfolgen. Das heißt, es kommt letztlich nur darauf an, dass die Zusammensetzung (Z) mit Wasser beziehungsweise einer wässrigen Phase gemischt wird. Bevorzugt kann die Zusammensetzung (Z), welche nach der Herstellung beispielsweise bei Raumtemperatur, das heißt 20 bis 25°C, oder bei gegenüber Raumtemperatur erhöhter Temperatur von beispielsweise 30 bis 60°C vorliegen kann, in Wasser eingerührt werden, wodurch eine Dispersion entsteht. Das vorgelegte Wasser hat dabei beispielsweise Raumtemperatur. Es kann in reinem Wasser (deionisiertem Wasser) dispergiert werden, das heißt die wässrige Phase besteht lediglich aus Wasser, was bevorzugt ist. Natürlich kann die wässrige Phase neben Wasser auch anteilig typische Hilfsstoffe wie typische Emulgatoren und Schutzkolloide enthalten. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S 411 ff.

Von Vorteil ist es, wenn in Stufe (II) des Verfahrens, das heißt bei der Dispergierung der Zusammensetzung (Z) in wässriger Phase, das Gewichtsverhältnis von organischen Lösemitteln und Wasser so gewählt wird, dass die resultierende Dispersion ein Gewichtsverhältnis von Wasser zu organischen Lösemitteln von größer 1, bevorzugt von 1,05 bis 2/1, insbesondere bevorzugt von 1,1 bis 1,5/1 aufweist.

In Schritt (III) des hier beschriebenen Verfahrens erfolgt die zumindest teilweise Entfernung des mindestens einen organischen Lösemittels (Z.2) aus der in Schritt (II) erhaltenen Dispersion. Natürlich können in Schritt (III) des Verfahrens auch weitere Lösemittel, die beispielsweise gegebenenfalls in der Zusammensetzung (Z) vorhanden waren, entfernt werden.

Die Entfernung des mindestens einen organischen Lösemittels (Z.2) und gegebenenfalls weiterer organischer Lösemittel kann auf beliebige bekannte Weise, beispielsweise durch Vakuumdestillation bei gegenüber Raumtemperatur leicht erhöhten Temperaturen von beispielsweise 30 bis 60°C erfolgen.

Die erhaltene Polyurethan-Polyharnstoff-Dispersion (PD) ist wässrig (zur grundsätzlichen Definition von "wässrig" siehe weiter oben).

Ein besonderer Vorteil der erfindungsgemäß einzusetzenden Dispersion (PD) ist, dass sie mit nur sehr geringen Anteilen an organischen Lösemitteln formuliert werden kann, trotzdem aber die eingangs beschriebenen erfindungsgemäßen Vorteile ermöglicht. Die erfindungsgemäß einzusetzende Dispersion (PD) enthält bevorzugt höchstens 15,0 Gew.-%, insbesondere bevorzugt höchstens 10 Gew.-%, ganz besonders bevorzugt höchstens 5 Gew.-% und nochmals bevorzugt höchstens 2,5 Gew.-% organische Lösemittel (Messmethode siehe Beispielteil).

Der Anteil des Polyurethan-Polyharnstoff-Polymers in der Dispersion (PD) beträgt bevorzugt 25 bis 55 Gew.-%, bevorzugt 30 bis 50 Gew.-%, nochmals bevorzugt 35 bis 45 Gew.-%, jeweils bezogen auf die Gesamtmenge der Dispersion (Bestimmung analog der oben für das Intermediat (Z.1) beschriebenen Bestimmung über den Festkörpergehalt).

Der Anteil von Wasser in der Dispersion (PD) beträgt bevorzugt 45 bis 75 Gew.-%, bevorzugt 50 bis 70 Gew.-%, nochmals bevorzugt 55 bis 65 Gew.-%, jeweils bezogen auf die Gesamtmenge der Dispersion.

Es ist ein besonderer Vorteil der erfindungsgemäß einzusetzenden Dispersion (PD), dass die so formuliert werden kann, dass sie zu mindestens 85 Gew.-%, bevorzugt mindestens 90,0 Gew.-%, ganz besonders bevorzugt zu mindestens 95 Gew.-% und nochmals bevorzugt zu mindestens 97,5 Gew.-% aus den Polyurethan-Polyharnstoff-Partikeln und Wasser besteht (der zugehörige Wert ergibt sich durch Aufsummierung der Menge der Partikel (das heißt des Polymers, bestimmt über den Festkörpergehalt) und der Menge Wasser). Es hat sich gezeigt, dass die Dispersionen trotz dieses geringen Anteils von weiteren Komponenten wie insbesondere organischen Lösemitteln in jedem Fall sehr stabil, insbesondere lagerstabil, sind. Auf diese Weise werden zwei relevante Vorteile vereint. Zum einen werden Dispersionen bereitgestellt, die in wässrigen Basislacken eingesetzt werden können und dort zu den eingangs und auch in den nachstehenden Beispielen beschriebenen anwendungstechnischen Vorteilen führen. Zum zweiten aber wird eine angemessene Formulierungsfreiheit bei der Herstellung von wässrigen Basislacken erreicht. Dies bedeutet, dass in den Basislacken zusätzliche Anteile organischer Lösemittel eingesetzt werden können, die beispielsweise notwendig sind, um verschiedene Komponenten angemessen zu formulieren. Dabei wird dann aber nicht der grundsätzlich wässrige Charakter des Basislacks gefährdet. Im Gegenteil können die Basislacke trotzdem mit vergleichsweise niedrigen Anteilen organischer Lösemittel formuliert werden, weisen also ein besonders gutes ökologisches Profil auf.

Nochmals bevorzugter ist, dass die Dispersion neben dem Polymer lediglich Wasser und gegebenenfalls organische Lösemittel, beispielsweise in Form von Restanteilen, die in Stufe (III) des Verfahrens nicht vollständig abgetrennt worden sind, enthält. Demzufolge beträgt der Festkörper der Dispersion (PD) bevorzugt 25 bis 55 %, bevorzugt 30 bis 50 %, nochmals bevorzugt 35 bis 45 % und stimmt darunter nochmals bevorzugt mit dem Anteil des Polymers an der Dispersion überein.

Ein Vorteil der Dispersion (PD) liegt darin, dass sie ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Dispersion (PD) bevorzugt weniger als 7,5 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Dispersion (PD) vollständig frei von diesen organischen Lösemitteln.

Das in der Dispersion vorhandene Polyurethan-Polyharnstoff-Polymer besitzt bevorzugt kaum oder keine Hydroxylgruppen. Die OH-Zahl des Polymers liegt, bezogen auf den Festkörper, bevorzugt kleiner als 15 mg KOH/g, insbesondere kleiner 10 mg KOH/g, nochmals bevorzugt kleiner 5 mg KOH/g (Messmethode siehe Beispielteil).

Der Anteil der mindestens einen Dispersionen (PD), bezogen auf das Gesamtgewicht des wässrigen Basislacks (b.2.1), beträgt bevorzugt 5 bis 60 Gew.-%, besonders bevorzugt 15 bis 50 Gew.-% und ganz besonders bevorzugt 20 bis 45 Gew.-%.

Der Anteil der aus den Dispersionen (PD) stammenden Polyurethan-Polyharnstoff-Polymere beträgt, bezogen auf das Gesamtgewicht des wässrigen Basislacks (b.2.1), vorzugsweise von 2,0 bis 24,0 Gew.-%, bevorzugt 6,0 bis 20,0 Gew.-%, besonders bevorzugt 8,0 bis 18,0 Gew.-%.

Die Bestimmung beziehungsweise Festlegung des Anteils der aus den erfindungsgemäßen Dispersionen stammenden Polyurethan-Polyharnstoff-Polymere am Basislack kann über die Bestimmung des Festkörpers einer erfindungsgemäßen Dispersion (PD) erfolgen, die in dem Basislack eingesetzt werden soll.

Im Falle einer möglichen Spezifizierung auf Basislacke enthaltend bevorzugte Dispersionen (PD) in einem speziellen Anteilsbereich gilt folgendes. Die Dispersionen (PD), die nicht in die bevorzugte Gruppe fallen, können selbstverständlich weiterhin im Basislack enthalten sein. Der spezielle Anteilsbereich gilt dann nur für die bevorzugte Gruppe von Dispersionen (PD). Bevorzugt ist allerdings, dass für den Gesamtanteil von Dispersionen (PD) bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 15 bis 50 Gew.-% und eine bevorzugte Gruppe von Dispersionen (PD) durchgeführt werden, so gilt dieser Anteilsbereich augenscheinlich zunächst nur für die bevorzugte Gruppe an Dispersionen (PD). Bevorzugt wäre dann aber, dass insgesamt von allen ursprünglich umfassten Dispersionen bestehend aus Dispersionen aus der bevorzugten Gruppe und Dispersionen, die nicht in die bevorzugte Gruppe fallen, ebenfalls von 15 bis 50 Gew.-% enthalten sind. Werden also 35 Gew.-% von Dispersionen (PD) der bevorzugten Gruppe eingesetzt, so können höchstens 15 Gew.-% der Dispersionen der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die weiter unten genannten Pigmente oder auch die weiter unten genannten Vernetzungsmittel wie Melaminharze.

Der erfindungsgemäß einzusetzende Basislack (b.2.1) enthält bevorzugt mindestens ein Pigment. Hierunter zu verstehen sind an sich bekannte farbgebende und/oder optisch effektgebende Pigmente.

Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Der Anteil der Pigmente liegt vorzugsweise im Bereich von 1,0 bis 40,0 Gew.-%, bevorzugt 2,0 bis 35,0 Gew.-%, besonders bevorzugt 5,0 bis 30,0 Gew.-%, jeweils bezogen auf das Gesamtgewicht des wässrigen Basislacks (b.2.1).

Der wässrige Basislack (b.2.1) enthält bevorzugt noch mindestens ein von den in den Dispersionen (PD) enthaltenen Polyurethan-Polyharnstoff-Polymeren verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 oder WO 2014/033135 A2, Seite 2, Zeile 24 bis Seite 7, Zeile 10 sowie Seite 28, Zeile 13 bis Seite 29, Zeile 13 beschrieben. Bevorzugte Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell und besitzen insbesondere bevorzugt eine OH-Zahl im Bereich von 15 bis 200 mg KOH/g, besonders bevorzugt von 20 bis 150 mg KOH/g. Besonders bevorzugt enthalten die Basislacke mindestens ein hydroxyfunktionelles Polyurethan-Polyacrylat-Mischpolymerisat, nochmals bevorzugt mindestens ein hydroxyfunktionelles Polyurethan-Polyacrylat-Mischpolymerisat sowie mindestens einen hydroxyfunktionellen Polyester.

Der Anteil der weiteren Polymere als Bindemittel kann breit variieren und liegt vorzugsweise im Bereich von 1,0 bis 25,0 Gew.-%, bevorzugt 3,0 bis 20,0 Gew.-%, besonders bevorzugt 5,0 bis 15,0 Gew.-%, jeweils bezogen auf das Gesamtgewicht des Basislacks (b.2.1).

Zudem kann der Basislack (b.2.1) mindestens ein an sich bekanntes typisches Vernetzungsmittel enthalten. Sofern er ein Vernetzungsmittel enthält, handelt es sich bevorzugt um mindestens ein Aminoplastharz und/oder mindestens ein blockiertes Polyisocyanat, bevorzugt ein Aminoplastharz. Unter den Aminoplastharzen sind insbesondere Melaminharze bevorzugt.

Sofern der Basislack (b.2.1) Vernetzungsmittel enthält, liegt der Anteil dieser Vernetzungsmittel, insbesondere Aminoplastharze und/oder blockierte Polyisocyanate, besonders bevorzugt Aminoplastharze, darunter bevorzugt Melaminharze, vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des Basislacks (b.2.1).

Der Basislack (b.2.1) kann zudem mindestens einen Verdicker enthalten. Als Verdicker eignen sich anorganische Verdicker aus der Gruppe der Schichtsilikate wie Lithium-Aluminium-Magnesium Silikate. Bekannt ist allerdings, dass Lacke, deren rheologisches Eigenschaftsprofil über den hauptsächlichen oder überwiegenden Einsatz entsprechender anorganischer Verdicker bestimmt wird, hinsichtlich ihres Festkörpergehalts verbesserungswürdig sind, das heißt lediglich mit recht geringen Festkörpergehalten von beispielsweise kleiner 20 % formuliert werden können, ohne dass wichtige anwendungstechnische Eigenschaften verschlechtert werden. Ein besonderer Vorteil des Basislacks (b.2.1) liegt darin, dass er ohne beziehungsweise ohne großen Anteil solcher als Verdicker eingesetzter anorganischen Schichtsilikate formuliert werden kann. Demzufolge ist der Anteil von als Verdicker eingesetzten anorganischen Schichtsilikaten, bezogen auf das Gesamtgewicht des Basislacks, bevorzugt kleiner als 0,7 Gew.-%, insbesondere bevorzugt kleiner 0,3 Gew.-% und nochmals bevorzugt kleiner 0,1 Gew.-%. Ganz besonders bevorzugt ist der Basislack vollständig frei von solchen als Verdicker eingesetzten anorganischen Schichtsilikaten.

Stattdessen kann der Basislack mindestens einen organischen Verdicker enthalten, beispielsweise einen (Meth)acrylsäure-(Meth)acrylat-Copolymerisat-Verdicker oder einen Polyurethan-Verdicker. Bevorzugt eingesetzt werden Assoziativverdicker, wie beispielsweise die an sich bekannten Polyurethan-Assoziativverdicker. Als Assoziativverdicker werden bekanntermaßen wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind in wässriger Phase zur Bildung von Mizellen fähig. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Mizellen in der wässrigen Phase ausbilden. Letztlich wird eine verdickende Wirkung erzielt, ohne dass es zu einem erhöhten Absetzverhalten kommt. Entsprechende Verdicker sind kommerziell erhältlich, beispielsweise unter der Handelsbezeichnung Adekanol (Fa. Adeka Corporation).

Der Anteil der organischen Verdicker liegt vorzugsweise im Bereich von 0 bis 5,0 Gew.-%, bevorzugt 0 bis 3,0 Gew.-%, besonders bevorzugt 0 bis 2,0 Gew.-%, jeweils bezogen auf das Gesamtgewicht des Basislacks.

Von ganz besonderem Vorteil der erfindungsgemäß eingesetzten Basislacke (b.2.1) ist, dass sie ohne den Einsatz jeglicher Verdicker formuliert werden können, jedoch trotzdem hervorragende Eigenschaften hinsichtlich ihres rheologischen Profils aufweisen. Auf diese Weise erreicht man wiederum eine geringere Komplexität des Lacks beziehungsweise eine Erhöhung der Formulierungsfreiheit für den Basislack.

Darüber hinaus kann der Basislack (b.2.1) noch mindestens einen weiteren Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Polymere als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Solche Zusatzstoffe werden in den üblichen und bekannten Mengen eingesetzt.

Der Festkörpergehalt des Basislacks (b.2.1) kann je nach den Erfordernissen des Einzelfalls variieren. In erster Linie richtet sich der Festkörpergehalt nach der für die Applikation, insbesondere Spritzapplikation, erforderlichen Viskosität. Es ist von besonderem Vorteil, dass der erfindungsgemäße Basislack bei vergleichsweise hohen Festkörpern trotzdem eine Viskosität aufweisen kann, die eine angemessene Applikation zulässt.

Vorzugsweise liegt der Festkörpergehalt des Basislacks, sofern er mindestens ein Vernetzungsmittel enthält, bei mindestens 25 %, bevorzugt mindestens 27,5 %, nochmals bevorzugt mindestens 30 %.

Sofern der Basislack kein Vernetzungsmittel enthält, liegt der Festkörpergehalt bevorzugt bei mindestens 15 %, bevorzugt mindestens 18 %, nochmals bevorzugt mindestens 21 %.

Bei den genannten Bedingungen, das heißt bei den genannten Festkörpergehalten, weisen bevorzugte Basislacke (b.2.1) bei 23°C und einer Scherbelastung von 1000 1/s eine Viskosität von 40 bis 150 mPa·s, insbesondere 70 bis 110 mPa·s auf (genaueres zur Messmethode siehe Beispielteil). Im Rahmen der vorliegenden Erfindung wird eine Viskosität in diesem Bereich bei der angegebenen Scherbelastung als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen (hohe Scherbelastung) eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann. Es ist von besonderem Vorteil, dass auch ein auf Spritzviskosität eingestellter Basislack (b.2.1) einen hohen Festkörper besitzt. Die bevorzugten Bereiche des Festköpergehalts, insbesondere die Untergrenzen, lassen also erkennen, dass der Basislack (b.2.1) im applikationsfähigem Zustand bevorzugt vergleichsweise hohe Festkörpergehalte aufweist.

Der erfindungsgemäße Basislack ist wässrig (zur Definition von "wässrig" siehe oben).

Der Anteil von Wasser am Basislack (b.2.1) beträgt bevorzugt von 35 bis 70 Gew.-%, nochmals bevorzugt 42 bis 63 Gew.-%, jeweils bezogen auf das Gesamtgewicht des Basislacks.

Nochmals bevorzugt ist, dass die prozentuale Summe aus dem Festkörper des Basislacks und dem Anteil von Wasser am Basislack bei mindestens 70 Gew.-%, bevorzugt bei mindestens 75 Gew.-% liegt. Darunter bevorzugt sind Bereiche von 75 bis 95 Gew.-%, insbesondere 80 bis 90 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise ein Basislack einen Festkörper von 35 % und einen Wassergehalt von 50 Gew.-%, so beträgt die oben definierte prozentuale Summe aus dem Festkörper des Basislacks und dem Anteil von Wasser am Basislack 85 Gew.-%.

Dies bedeutet insbesondere, dass bevorzugte Basislacke grundsätzlich umweltbelastende Komponenten wie insbesondere organische Lösemittel im Verhältnis zum Festkörper des Basislacks zu nur geringen Anteilen enthalten. Bevorzugt ist das Verhältnis aus dem flüchtigen organischen Anteil des Basislacks (in Gew.-%) und dem Festkörper des Basislacks (analog obiger Darstellung hier in Gew.-%) von 0,05 bis 0,7, nochmals bevorzugt von 0,15 bis 0,6. Als flüchtiger organischer Anteil gilt im Rahmen der vorliegenden Erfindung der Anteil des Basislacks, der weder zum Anteil Wasser noch zum Festkörper gerechnet wird.

Ein weiterer Vorteil des Basislacks (b.2.1) liegt darin, dass er ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält der Basislack bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist der Basislack vollständig frei von diesen organischen Lösemitteln.

Die Herstellung der Basislacke kann unter Einsatz der für die Herstellung von Basislacken üblichen und bekannten Mischverfahren und Mischaggregaten erfolgen.

Für die im Rahmen des erfindungsgemäßen Verfahrens eingesetzten Basislacke (b.2.2.x) gilt, dass mindestens einer dieser Basislacke die für den Basislack (b.2.1) beschriebenen erfindungswesentlichen Merkmale aufweist. Das heißt insbesondere, dass mindestens einer der Basislacke (b.2.2.x) mindestens eine wässrige Polyurethan-Polyharnstoff-Dispersion (PD) enthält. Auch die im Rahmen der Beschreibung des Basislacks (b.2.1) beschriebenen bevorzugten Merkmale und Ausführungsformen gelten bevorzugt für mindestens einen der Basislacke (b.2.2.x).

In den weiter oben beschriebenen bevorzugten Varianten der Stufe (2.2) des erfindungsgemäßen Verfahrens wird zunächst ein erster Basislack (b.2.2.a) aufgebracht, der auch als farbvorbereitender Basislack bezeichnet werden kann. Er dient also als Grundlage für eine dann folgende farb- und/oder effektgebende Basislackschicht, das heißt eine Schicht, die dann optimal ihre Funktion der Farb- und/oder Effektgebung erfüllen kann.

In einer besonderen Ausführungsform ist ein farbvorbereitenden Basislack im Wesentlichen frei von Buntpigmenten und Effektpigmenten. Insbesondere bevorzugt enthält ein solcher Basislack weniger als 2 Gew.-%, bevorzugt weniger als 1 Gew.-% an Buntpigmenten und Effektpigmenten, jeweils bezogen auf das Gesamtgewicht des wässrigen Basislacks. Der farbvorbereitende Basislack enthält in dieser Ausführungsform bevorzugt Schwarz- und/oder Weißpigmente, insbesondere bevorzugt beide Arten von diesen Pigmenten. Bevorzugt enthält er 5 bis 30 Gew.-%, bevorzugt 10 bis 25 Gew.-% Weißpigmente und 0,01 bis 1,00 Gew.-%, bevorzugt 0,1 bis 0,5 Gew.-% Schwarzpigmente, jeweils bezogen auf das Gesamtgewicht des Basislacks. Die sich daraus ergebende weiße, schwarze und insbesondere graue Farbe, die durch das Verhältnis von Weiß- und Schwarzpigmenten in unterschiedlichen Helligkeitsstufen eingestellt werden kann, stellt für den dann folgenden Basislackschicht-Aufbau eine individuell anpassbare Basis dar, sodass die Farbe und/oder die Effektgebung des folgenden Basislackaufbaus optimal zur Geltung kommen kann. Die Pigmente sind dem Fachmann bekannt und auch weiter oben beschrieben. Als Weißpigment ist hier Titandioxid, als Schwarzpigment Ruß bevorzugt. Wie schon beschrieben, kann dieser Basislack aber selbstverständlich auch Bunt- und/oder Effektpigmente enthalten. Diese Variante bietet sich insbesondere dann an, wenn die resultierende Mehrschichtlackierung einen hoch chromatischen Farbton haben soll, beispielsweise ein sehr farbtiefes Rot oder Gelb. Werden Pigmente in entsprechend buntem Farbton auch dem farbvorbereitenden Basislack hinzugefügt, kann eine nochmal verbesserte Farbgebung erreicht werden.

Der oder die farb- und/oder effektgebenden Basislack(e) für die zweite oder die zweite und dritte Basislackschicht innerhalb dieser Ausführungsform werden entsprechend der letztlich gewünschten Farbgebung des Gesamtaufbaus angepasst. Ist eine weiße, schwarze oder graue Farbe erwünscht, so enthält der mindestens eine weitere Basislack die entsprechenden Pigmente und ähnelt hinsichtlich der Pigmentzusammensetzung letztlich dem farbvorbereitenden Basislack. Ist eine bunte und/oder effektgebende Lackierung erwünscht, beispielsweise eine bunte Unilackierung oder eine Metallic-Effekt-Lackierung, werden entsprechende Bunt- und/oder Effektpigmente in Mengen von beispielsweise 1 bis 15 Gew.-%, bevorzugt 3 bis 10 Gew.-%, jeweils bezogen auf das Gesamtgewicht des Basislacks, eingesetzt. Solche Basislacke können natürlich zur Helligkeitsanpassung noch zusätzlich noch Schwarz- und/oder Weißpigmente enthalten.

Das erfindungsgemäße Verfahren erlaubt die Herstellung von Mehrschichtlackierungen auf metallischen Substraten unter Verzicht auf einen separaten Härtungsschritt. Trotzdem resultieren durch die Anwendung des erfindungsgemäßen Verfahrens Mehrschichtlackierungen, die eine ausgezeichnete Stabilität gegen Nadelstiche aufweisen, sodass auch höhere Schichtdicken der entsprechenden Basislackschichten ohne ästhetischen Qualitätsverlust aufgebaut werden können. Auch Eigenschaften wie die Haftung oder der optische Gesamteindruck sind hervorragend.

Die vorliegende Erfindung betrifft auch ein wässriges Mischlacksystem zur Herstellung von wässrigen Basislacken. Das Mischlacksystem umfasst, jeweils bezogen auf das Gesamtgewicht des wässrigen Mischlacksystems,
10 bis 25 Gew.-% von mindestens einem Polyurethan-Polyharnstoff-Polymer, welches aus mindestens einer Dispersion (PD) stammt,
0 bis 15 Gew.-% eines Vernetzungsmittel ausgewählt aus der Gruppe der Aminoplastharze und blockierten Polyisocyanate,
3 bis 15 Gew.-% mindestens eines Polyesters mit einer OH-Zahl im Bereich von 15 bis 200 mg KOH/g,
2 bis 10 Gew.-% mindestens eines Polyurethan-Polyacrylat-Mischpolymerisats mit einer OH-Zahl im Bereich von 15 bis 200 mg KOH/g,
45 bis 55 Gew.-% Wasser, und
5 bis 15 Gew.-% mindestens eines organischen Lösemittels,
wobei die beschriebenen Komponenten insgesamt mindestens 90 Gew.-%, bevorzugt mindestens 95 Gew.-% des Mischlacksystems ausmachen.

Bevorzugt ist das Mischlacksystem im Wesentlichen frei von Pigmenten, enthält also weniger als 1 Gew.-% Pigmente. Besonders bevorzugt ist es vollständig frei von Pigmenten.

Es hat sich gezeigt, dass das Mischlacksystem hervorragend dazu geeignet ist, durch individuell angepasste Komplettierung mit insbesondere Pigmenten und gegebenenfalls unterschiedlichen Additiven zur Herstellung von wässrigen Basislacken verwendet zu werden. Ein und dasselbe Mischlacksystem kann also verwendet werden, um durch nachträgliche und individuelle Komplettierung verschiedene wässrige Basislacke herzustellen. Hierdurch ergibt sich selbstverständlich eine enorme Arbeitserleichterung und damit Erhöhung der Wirtschaftlichkeit bei der Formulierung von Basislacken, insbesondere im großtechnischen Maßstab. Das Mischlacksystem kann separat hergestellt und gelagert werden und dann anlassbezogen mit beispielsweise entsprechenden Pigmentpasten komplettiert werden.

Demnach betrifft die vorliegende Erfindung auch ein Verfahren zur Herstellung von wässrigen Basislacken, welches die Zugabe von Pigmenten, insbesondere in Form von Pigmentpasten, zu einem wie oben beschriebenes Mischlacksystem umfasst.

### Beispiele

### Bestimmungsmethoden

### 1. Feststoffgehalt (Festkörper)

Soweit nicht anders angegeben, wurde der Feststoffgehalt, im Folgenden auch als Festanteil bezeichnet, nach DIN EN ISO 3251 bei 130°C; 60 min, Einwaage 1,0 g, bestimmt. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

### 2. Isocyanatgehalt

Die Ermittlung des Isocyanat-Gehalts, im Folgenden auch als NCO-Gehalt bezeichnet, wurde durch Zugabe eines Überschusses einer 2%igen N,N-Dibutylamin-Lösung in Xylol zu einer homogenen Lösung der Proben in Aceton / N-Ethylpyrrolidon (1:1 Vol.-%) durch potentiometrische Rücktitration des Amin-Überschusses mit einer 0,1N Salzsäure in Anlehnung an die DIN EN ISO 3251, DIN EN ISO 11909 und DIN EN ISO14896 bestimmt. Über den Anteil eines Polymers (Festkörper) in Lösung kann auf den NCO-Gehalt des Polymers bezogen auf Festkörper zurückgerechnet werden.

### 3. Hydroxylzahl

Die Hydroxylzahl wurde in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt, wobei der verbliebene Überschuss an Essigsäureanhydrid nach Acetylierung vollständig hydrolysiert wurde und die Essigsäure mit alkoholischer Kaliumhydroxid-Lösung potentiometrisch zurücktitriert wurde. Acetylierungszeiten von 60 min reichten in allen Fällen aus, um einen vollständigen Umsatz zu garantieren.

### 4. Säurezahl

Die Säurezahl wurde in Anlehnung an die DIN EN ISO 2114 in homogener Lösung aus Tetrahydrofuran (THF) / Wasser (9 Vol.-Teile THF und 1 Vol.-Teil destilliertes Wasser) mit ethanolischer Kaliumhydroxid-Lösung bestimmt.

### 5. Neutralisationsgrad

Der Neutralisationsgrad einer Komponente x wurde berechnet aus der Stoffmenge der in der Komponente enthaltenen Carbonsäuregruppen (bestimmt über die Säurezahl) und der Stoffmenge des eingesetzten Neutralisationsmittels.

### 6. Aminäquivalentmasse

Die Aminäquivalentmasse (Lösung) dient der Ermittlung des Amingehalts einer Lösung und wurde wie folgt bestimmt. Es wurde die zu untersuchende Probe bei Raumtemperatur in Eisessig gelöst und gegen 0,1N Perchlorsäure in Eisessig in Gegenwart von Kristallviolett titriert. Aus der Einwaage der Probe und dem Verbrauch an Perchlorsäure erhielt man die Aminäquivalentmasse (Lösung), die Masse der Lösung des basischen Amins, die nötig ist, ein Mol Perchlorsäure zu neutralisieren.

### 7. Maskierungsgrad der primären Aminogruppen

Der Maskierungsgrad der primären Aminogruppen wurde mittels IR-Spektrometrie mit einem FT-IR-Spektrometer Nexus (Fa. Nicolet) unter Zuhilfenahme einer IR-Küvette (d=25m, KBr-Fenster) am Absorptionsmaximum bei 3310 cm⁻¹ anhand von Konzentrationsreihen der verwendeten Amine und Normierung auf das Absorptionsmaximum bei 1166 cm⁻¹ (interner Standard) bei 25°C ermittelt.

### 8. Lösungsmittelgehalt

Der Gehalt eines organischen Lösungsmittels an einer Mischung, beispielsweise einer wässrigen Dispersion, wurde mittels Gaschromatographie (Agilent 7890A, 50m Silica-Kapillarsäule mit Polyethylenglykol-Phase bzw. 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) ermittelt.

### 9. Zahlenmittlere Molmasse

Die zahlenmittlere Molmasse (Mₙ) wurde, soweit nicht anders angegeben, mittels eines Dampfdruckosmometers Typ 10.00 (Fa. Knauer) an Konzentrationsreihen in Toluol bei 50°C mit Benzophenon als Eichsubstanz zur Bestimmung der experimentellen Eichkonstante des eingesetzten Messgeräts nach E. Schröder, G. Müller, K.-F. Arndt, "Leitfaden der Polymercharakterisierung", Akademie-Verlag, Berlin, S. 47 - 54, 1982, ermittelt.

### 10. Mittlere Partikelgröße

Die mittlere Partikelgröße (Volumenmittel) der in den erfindungsgemäßen Dispersionen (PD) enthaltenen Polyurethan-Polyharnstoff-Partikel werden im Rahmen der vorliegenden Erfindung durch Photonenkorrelationsspektroskopie (PCS) bestimmt.

Konkret zur Messung eingesetzt wurde ein "Malvern Nano S90" (Fa. Malvern Instruments) bei 25 ± 1 °C. Das Gerät deckt einen Größenbereich von 3 bis 3000 nm ab und war ausgestattet mit einem 4mW He-Ne Laser bei 633 nm. Die Dispersionen (PD) wurden soweit mit partikelfreiem, deionisierten Wasser als Dispergiermedium verdünnt, um sie anschließend in einer 1 ml Polystyrol-Küvette bei geeigneter Streuintensität zu vermessen. Die Auswertung erfolgte mittels digitalem Korrelator unter Zuhilfenahme der Auswertungssoftware Zetasizer Vers. 6.32 (Fa. Malvern Instruments). Es wurde fünf Mal gemessen und die Messungen an einer zweiten, frisch präparierten Probe wiederholt. Die Standardabweichung einer 5-fach Bestimmung betrug ≦ 4 %. Die maximale Abweichung des arithmetischen Mittels des Volumenmittels (V-average mean) von fünf Einzelmessungen betrug ± 15 %. Die angegebene mittlere Partikelgröße (Volumenmittel) ist das arithmetische Mittel aus der mittleren Partikelgröße (Volumenmittel) der Einzelpräparationen. Die Überprüfung erfolgte mit Polystyrol-Standards mit zertifizierten Partikelgrößen zwischen 50 bis 3000 nm.

### 11. Gelanteil

Der Gelanteil der in den erfindungsgemäßen Dispersionen (PD) enthaltenen Polyurethan-Polyharnstoff-Partikel (Mikrogel-Partikel) wird im Rahmen der vorliegenden Erfindung gravimetrisch bestimmt. Dabei wurde zunächst aus einer Probe einer wässrigen Dispersion (PD) (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen.

Es wurde ferner sichergestellt, dass bei der Sintertemperatur von 130°C und Variation der Sinterzeiten zwischen einer Minute und zwanzig Minuten der ermittelte Gelanteil der Mikrogel-Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Der auf diese Weise erfindungsgemäß bestimmte Gelanteil wird auch Gelanteil (gefriergetrocknet) genannt.

Parallel wurde ein Gelanteil, im Folgenden auch als Gelanteil (130°C) bezeichnet, gravimetrisch bestimmt, indem aus wässriger Dispersion (Einwaage 1,0 g) eine Polymerprobe bei 130°C, 60 min (Festkörper) isoliert wurde. Die Masse des Polymeren wurde bestimmt, um das Polymer anschließend analog zur oben beschriebenen Prozedur 24 Stunden bei 25°C in einem Überschuss an Tetrahydrofuran zu extrahieren, den unlöslichen Anteil (Gelanteil) abzutrennen, zu trocknen und zurück zu wiegen.

### 12. Löslichkeit in Wasser

Die Löslichkeit eines organischen Lösemittels in Wasser wurde bei 20°C wie folgt bestimmt. Das jeweilige organische Lösemittel und Wasser wurden in einem geeigneten Glasgefäß zusammengeben, vermischt und das Gemisch anschließend äquilibriert. Dabei wurden die Mengen von Wasser und dem Lösemittel so gewählt, dass sich nach der Äquilibrierung zwei voneinander getrennte Phasen ergaben. Nach der Äquilibrierung wird über eine Spritze eine Probe aus der wässrigen Phase (das heißt der Phase, die mehr Wasser als organisches Lösemittel enthält) entnommen, im Verhältnis 1/10 mit Tetrahydrofuran verdünnt und mittels Gaschromatographie der Anteil des Lösemittels bestimmt (Bedingungen siehe Punkt 8. Lösungsmittelgehalt).

Sofern sich unabhängig von den Mengen von Wasser und dem Lösemittel keine zwei Phasen ausbilden, ist das Lösemittel in jeglichem Gewichtsverhältnis mit Wasser mischbar. Dieses somit unbegrenzt in Wasser lösliche Lösemittel (beispielsweise Aceton), ist daher jedenfalls kein Lösemittel (Z.2).

### 13. Volumenfestkörper (berechnet):

Der Volumenfestkörper wurde nach VdL-RL 08, "Ermittlung des Festkörpervolumens von Korrosionsschutz-Beschichtungsstoffen als Basis für Ergiebigkeitsberechnungen", Verband der Lackindustrie e.V., Ausgabe Dez. 1999, berechnet. Der Volumenfestkörper VFK (Festkörpervolumen) wurde nach folgender Formel unter Einbeziehung der Stoffeigenschaften der relevanten Einsatzstoffe (Dichte der Lösemittel, Dichte der Feststoffe) berechnet:

| | | |
|---|---|---|
| VFK = | (Dichte (Naßlack) x Festanteil (Naßlack)) / Dichte (eingebrannter Lack) | |
| VFK | | Volumenfestkörper in % |
| Dichte (Naßlack): | | berechnete Dichte des Naßlacks aus der Dichte der |
| | | Einzelkomponenten (Dichte Lösungsmittel und Dichte |
| | | Feststoffe) in g/cm³ |
| Festanteil (Naßlack) | | Feststoffgehalt (in %) des Naßlacks, nach DIN EN ISO 3251 bei 130°C, 60min, Einwaage 1,0g, bestimmt. |
| Dichte (eingebrannter Lack) | | Dichte des eingebrannten Lacks auf dem Blech in g/cm³ |

### Herstellung einer Dispersion (PD)

Eine Dispersion (PD) wurde folgendermaßen hergestellt:

### a) Herstellung einer teilneutralisierten Präpolymerlösung

In einem Reaktionsgefäß, ausgerüstet mit Rührer, Innenthermometer, Rückflußkühler und elektrischer Heizung, wurden 559,7 Gewichtsteile eines linearen Polyesterpolyols und 27,2 Gewichtsteile Dimethylolpropionsäure (Fa. GEO Speciality Chemicals) in 344,5 Gewichtsteilen Methylethylketon unter Stickstoff gelöst. Das lineare Polyesterdiol wurde zuvor aus dimerisierter Fettsäure (Pripol^{®} 1012, Fa. Croda), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil, eine Säurezahl von 3,5 mg KOH / g Festanteil und eine berechnete, zahlenmittlere Molmasse von 1379 g/mol und eine über Dampfdruckosmometrie bestimmte zahlenmittlere Molmasse von 1350 g/mol auf.

Zu der resultierenden Lösung wurden bei 30°C hintereinander 213,2 Gewichtsteile Dicyclohexylmethan-4,4'-diisocyanat (Desmodur^{®} W, Fa. Bayer MaterialScience) mit einem Isocyanatgehalt von 32,0 Gew.-% und 3,8 Gewichtsteile Dibutylzinndilaurat (Fa. Merck) hinzugegeben. Anschließend wurde unter Rühren auf 80°C erwärmt. Es wurde bei dieser Temperatur weiter gerührt, bis der Isocyanatgehalt der Lösung 1,49 Gew.-% betrug und konstant war. Danach wurden 626,2 Gewichtsteile Methylethylketon zum Präpolymer gegeben und das Reaktionsgemisch auf 40°C abgekühlt. Nach Erreichen von 40°C wurden 11,8 Gewichtsteile Triethylamin (Fa. BASF SE) innerhalb von zwei Minuten zugetropft und weitere 5 Minuten der Ansatz gerührt.

### b) Umsetzung des Präpolymeren mit Diethylentriamindiketimin

Anschließend wurden 30,2 Gewichtsteile einer 71,9 Gew.-% Anlösung von Diethylentriamindiketimin in Methylisobutylketon (Verhältnis Isocyanatgruppen des Präpolymeren zu Diethylentriamindiketimin (mit einer sekundären Aminogruppe): 5 : 1 mol/mol, entspricht zwei NCO-Gruppen pro blockierter, primärer Aminogruppe) innerhalb einer Minute zugemischt, wobei die Reaktionstemperatur nach Zugabe zur Präpolymerlösung kurzzeitig um 1°C anstieg. Die Anlösung von Diethylentriamindiketimin in Methylisobutylketon wurde zuvor durch azeotropes Auskreisen von Reaktionswasser bei der Reaktion von Diethylentriamin (Fa. BASF SE) mit Methylisobutylketon in Methylisobutylketon bei 110 - 140°C hergestellt. Durch Verdünnen mit Methylisobutylketon wurde auf eine Aminäquivalentmasse (Lösung) von 124,0 g/eq eingestellt. Mittels IR-Spektroskopie wurde anhand der Restabsorption bei 3310 cm⁻¹ eine Blockierung der primären Aminogruppen von 98,5% ermittelt. Der Feststoffgehalt der Isocyanatgruppen-haltigen Polymerlösung wurde mit 45,3 % bestimmt.

### c) Dispergierung und Vakuumdestillation

Nach 30 Minuten Rühren bei 40°C wurde der Inhalt des Reaktors innerhalb von 7 Minuten in 1206 Gewichtsteile deionisiertes Wasser (23°C) dispergiert. Aus der resultierenden Dispersion wurde Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte. Es wurde eine weiße, stabile, feststoffgehaltreiche, niedrigviskose Dispersion mit vernetzten Partikeln erhalten, die auch nach 3 Monaten keinerlei Absetzen aufwies.

Die so erhaltene Mikrogel-Dispersion wies folgende Kennzahlen auf:

| | |
|---|---|
| Feststoffgehalt (130°C, 60min, 1g): | 40,2 Gew.-% |
| Methylethylketon-Gehalt (GC): | 0,2 Gew.-% |
| Methylisobutylketon-Gehalt (GC): | 0,1 Gew.-% |
| Viskosität (23°C, Rotationsviskosimeter, Scherrate= 1000/s): | 15 mPas |
| Säurezahl | 17,1 mg KOH/g Feststoffgehalt |
| Neutralisationsgrad (berechnet) | 49 % |
| pH (23°C) | 7,4 |
| Partikelgröße (Photonenkorrelationsspektroskopie, Volumenmittel) | 167 nm |
| Gelanteil (gefriergetrocknet) | 85,1 Gew.-% |
| Gelanteil (130°C) | 87,3 Gew.-% |

### Herstellung von Wasserbasislacken

Die in der Tabelle 1 aufgeführten Komponenten wurden in der angegebenen Reihenfolge zu wässrigen Mischlacksystemen zusammengerührt. Während das Mischlacksystem 1 ein Melaminharz als Vernetzungsmittel enthält, ist das Mischlacksystem 2 vollständig frei von Vernetzungsmitteln. Beide Mischlacksysteme enthalten die oben beschriebene Dispersion (PD) und sind vollständig frei von Verdickern wie beispielsweise anorganischen Verdickern.

**Tabelle 1: Mischlacksysteme 1 und 2**

| **Komponente** | **Mischlacksystem 1** | **Mischlacksystem 2** |
|---|---|---|
| | **Gew.-Teilen** | **Gew.-Teilen** |
| Dispersion (PD) | 55,000 | 54,000 |
| Butylglykol | 5,300 | 4,500 |
| Wasser | 8,300 | 11,000 |
| Polyester hergestellt gemäß Seite 28, Zeilen 13 bis 33 der WO 2014/033135 A2 | 5,400 | - |
| Polyester-Dispersion; hergestellt gemäß Beispiel D, Spalte 16, Zeilen 37-59 der DE 4009858 A1 | - | 12,500 |
| Polyurethan-Polyacrylat-Mischpolymerisat-Dispersion, hergestellt gemäß Seite 7, Zeile 55 bis Seite 8, Zeile 23 der DE 4437535 A1 | 9,700 | 9,000 |
| Wässrige Lösung von Dimethylethanolamin (10%-ig) | 1,600 | 3,300 |
| Polypropylenglykol | 1,400 | 1,500 |
| TMDD BG 52 (BASF) (enthält 48 Gew.-% Butylglykol) | 3,200 | 3,000 |
| Melamin-Formaldehyd-Harz (Resimene 755) | 10,100 | - |

Ausgehend von den in Tabelle 1 beschriebenen Mischlacksystemen wurden unterschiedliche unifarbene wässrige Basislacke und farb- und effektgebende wässrige Basislacke hergestellt. Dazu wurden die Mischlacksysteme mit den gewünschten Tönpasten und gegebenenfalls weiteren Additiven und Lösungsmitteln komplettiert. So können beispielweise, je nach Bedarf, UV-Schutz-Additive und/oder Additive für den Verlauf oder die Reduktion der Oberflächenspannung eingesetzt werden.

Die Tabellen 2 bis 5 zeigen die Zusammensetzungen der hergestellten wässrigen Basislacke, wobei die angegebenen Komponenten in der angegebenen Reihenfolge vermischt wurden. Hierbei sind auch die Bestandteile der Mischlacksysteme einzeln aufgelistet, da die Verwendung der Mischlacksysteme zwar vorteilhaft, aber nicht zwingend notwendig ist. Dieselben Basislacke resultieren durch entsprechendes Zusammengeben der Einzelkomponenten in der angegebenen Reihenfolge.

Alle wässrigen Basislacke (BC) wiesen einen pH-Wert von 7,8 bis 8,6 und eine Spritzviskosität von 70 bis 110 mPa·s bei einer Scherbelastung von 1000 s⁻¹, gemessen mit einem Rotations-Viskosimeter (Gerät Rheomat RM 180 der Firma Mettler-Toledo) bei 23°C, auf.

**Tabelle 2: Basislacke 1 (grau) und 2 (weiß), basierend auf Mischlacksystem 1**

| **Komponente** | **BC 1 (grau)** | **BC 2 (weiß)** |
|---|---|---|
| | **Gew.-Teilen** | **Gew.-Teilen** |
| Dispersion (PD) | 35,396 | 22,963 |
| Butylglykol | 3,411 | 2,213 |
| Wasser | 5,342 | 3,465 |
| Polyester, hergestellt gemäß Seite 28, Zeilen 13 bis 33 der WO 2014/033135 A2 | 3,475 | 2,255 |
| Polyurethan-Polyacrylat-Mischpolymerisat-Dispersion, hergestellt gemäß Seite 7, Zeile 55 bis Seite 8, Zeile 23 der DE 4437535 A1 | 6,243 | 4,050 |
| Wässrige Lösung von Dimethylethanolamin (10 %-ig) | 1,030 | 0,668 |
| Polypropylenglykol | 0,901 | 0,585 |
| TMDD BG 52 (BASF) (enthält 48 Gew.-% Butylglykol) | 2,059 | 1,336 |
| Melamin-Formaldehyd-Harz (Resimene 755) | 6,500 | 4,217 |
| | | |
| Katalysatorlösung (AMP-PTSA-Lösung) | 0,891 | - |
| Tönpaste (Schwarz) | 1,485 | - |
| Tönpaste (Weiß) | 27,228 | 48,880 |
| Tönpaste (Schwarz) | - | 0,255 |
| TINUVIN 384-2, 95%MPA | - | 0,611 |
| TINUVIN 123 | - | 0,407 |
| | | |
| Wasser | 5,050 | 7,230 |
| Wässrige Lösung von Dimethylethanolamin (10 %-ig) | 0,990 | 0,611 |

Die Basislacke 1 und 2 sind für mindestens 4 Wochen bei 40 °C lagerstabil, das heißt sie weisen in dieser Zeit keinerlei Absetzneigung und keine signifikante Änderung (weniger als 15 %) der Niederscherviskosität (Scherbelastung von 1 s⁻¹, gemessen mit einem Rotations-Viskosimeter) auf. Der Basislack 1 weist einen Festkörper von 42 % und einen berechneten Volumenfestkörper von 35 % auf. Der Basislack 2 weist einen Festkörper von 47 % und einen berechneten Volumenfestkörper von 35 % auf.

**Tabelle 3: Basislacke 3 (grau) und 4 (weiß), basierend auf Mischlacksystem 2**

| **Komponente** | **BC 3 (grau)** | **BC 4 (weiß)** |
|---|---|---|
| | **Gew.-Teilen** | **Gew.-Teilen** |
| Dispersion (PD) | 38,591 | 24,923 |
| Butylglykol | 3,216 | 2,077 |
| Wasser | 7,861 | 5,077 |
| Polyester-Dispersion; hergestellt gemäß Beispiel D, Spalte 16, Zeilen 37-59 der DE 4009858 A1 | 8,933 | 5,769 |
| Polyurethan-Polyacrylat-Mischpolymerisat-Dispersion, hergestellt gemäß Seite 7, Zeile 55 bis Seite 8, Zeile 23 der DE 4437535 A1 | 6,432 | 4,154 |
| Wässrige Lösung von Dimethylethanolamin (10 %-ig) | 2,323 | 1,500 |
| Polypropylenglykol | 1,072 | 0,692 |
| TMDD BG 52 (BASF) (enthält 48 Gew.-% Butylglykol) | 2,144 | 1,385 |
| | | |
| Tönpaste (Weiß) | 25,000 | 47,000 |
| Tönpaste (Schwarz) | 1,500 | 0,250 |
| | | |
| Wasser | 2,000 | 7,500 |
| Wässrige Lösung von Dimethylethanolamin (10 %-ig) | 0,850 | 0,800 |

Die Basislacke 3 und 4 sind für mindestens 4 Wochen bei 40 °C lagerstabil, das heißt sie weisen in dieser Zeit keinerlei Absetzneigung und keine signifikante Änderung (weniger als 15 %) der Niederscherviskosität (Scherbelastung von 1 s⁻¹, gemessen mit einem Rotations-Viskosimeter) auf. Der Basislack 3 weist einen Festkörper von 38 % und einen berechneten Volumenfestkörper von 32 % auf. Der Basislack 4 weist einen Festkörper von 42 % und einen berechneten Volumenfestkörper von 31 % auf.

**Tabelle 4: Basislacke 5 (silber) und 6 (rot), basierend auf Mischlacksystem 1**

| **Komponente** | **BC 5 (silber)** | **BC 6 (rot)** |
|---|---|---|
| | **Gew.-Teilen** | **Gew.-Teilen** |
| Dispersion (PD) | 30,733 | 30,483 |
| Butylglykol | 2,962 | 2,937 |
| Wasser | 4,638 | 4,600 |
| Polyester, hergestellt gemäß Seite 28, Zeilen 13 bis 33 der WO 2014/033135 A2 | 3,017 | 2,993 |
| Polyurethan-Polyacrylat-Mischpolymerisat-Dispersion, hergestellt gemäß Seite 7, Zeile 55 bis Seite 8, Zeile 23 der DE 4437535 A1 | 5,421 | 5,376 |
| Wässrige Lösung von Dimethylethanolamin (10 %-ig) | 0,894 | 0,887 |
| Polypropylenglykol | 0,782 | 0,776 |
| TMDD BG 52 (BASF) (enthält 48 Gew.-% Butylglykol) | 1,788 | 1,774 |
| Melamin-Formaldehyd-Harz (Resimene 755) | 5,644 | 5,598 |
| | | |
| Tönpaste (Schwarz) | - | 0,764 |
| Tönpaste (Rot) | - | 18,442 |
| Aluminiumpigment (ALU STAPA IL HYDROLAN 2192 NR.5) | 6,348 | - |
| Aluminiumpigment (ALU STAPA IL HYDROLAN 2197 NR.5) | 2,727 | - |
| Aluminiumpigment (PALIOCROM-ORANGE L2804 (ex EH 0) | - | 0,764 |
| Butylglykol | 5,722 | 0,764 |
| Polyester; hergestellt gemäß Beispiel D, Spalte 16, Zeilen 37-59 der DE 4009858 A1 | 5,722 | 0,764 |
| Wässrige Lösung von Dimethylethanolamin (10 %-ig) | 0,805 | 0,076 |
| Micapigment (MEARLIN EXT. FINE RUSSET 459 V) | - | 2,246 |
| Micapigment (MEARLIN EXT. SUPER RUSSET 459 Z) | - | 0,764 |
| | | |
| Mischlack, hergestellt gemäß Spalte 11, Zeilen 1 bis 13 der EP 1534792 B1 | - | 9,365 |
| TINUVIN 384-2, 95%MPA | 0,536 | 0,640 |
| TINUVIN 123 | 0,358 | 0,430 |
| BYK-381 | - | 0,478 |
| | | |
| Wasser | 21,314 | 8,122 |
| Wässrige Lösung von Dimethylethanolamin (10 %-ig) | 0,590 | 0,956 |

Die Basislacke 5 und 6 sind für mindestens 4 Wochen bei 40 °C lagerstabil, das heißt sie weisen in dieser Zeit keinerlei Absetzneigung und keine signifikante Änderung (weniger als 15 %) der Niederscherviskosität (Scherbelastung von 1 s⁻¹, gemessen mit einem Rotations-Viskosimeter) auf. Der Basislack 5 weist einen Festkörper von 31 % und einen berechneten Volumenfestkörper von 27 % auf. Der Basislack 6 weist einen Festkörper von 38 % und einen berechneten Volumenfestkörper von 34 % auf

**Tabelle 5: Basislacke 7 (silber) und 8 (rot), basierend auf Mischlacksystem 2**

| **Komponente** | **BC 7 (silber)** | **BC 8 (rot)** |
|---|---|---|
| | **Gew.-Teilen** | **Gew.-Teilen** |
| Dispersion (PD) | 31,355 | 30,283 |
| Butylglykol | 2,613 | 2,524 |
| Wasser | 6,387 | 6,169 |
| Polyester-Dispersion; hergestellt gemäß Beispiel D, Spalte 16, Zeilen 37-59 der DE 4009858 A1 | 7,258 | 7,010 |
| Polyurethan-Polyacrylat-Mischpolymerisat-Dispersion, hergestellt gemäß Seite 7, Zeile 55 bis Seite 8, Zeile 23 der DE 4437535 A1 | 5,226 | 5,047 |
| Wässrige Lösung von Dimethylethanolamin (10 %-ig) | 1,887 | 1,822 |
| Polypropylenglykol | 0,871 | 0,841 |
| TMDD BG 52 (BASF) (enthält 48 Gew.-% Butylglykol) | 1,742 | 1,682 |
| | | |
| Tönpaste (Schwarz) | | 0,540 |
| Tönpaste (Rot) | | 12,800 |
| Aluminiumpigment (ALU STAPA IL HYDROLAN 2192 NR.5) | 4,666 | |
| Aluminiumpigment (ALU STAPA IL HYDROLAN 2197 NR.5) | 2,000 | |
| Aluminiumpigment (PALIOCROM-ORANGE L2804 (ex EH 0) | | 0,540 |
| Micapigment (MEARLIN EXT. FINE RUSSET 459 V) | | 1,620 |
| Micapigment (MEARLIN EXT. SUPER RUSSET 459 Z) | | 0,540 |
| Mischlack, hergestellt gemäß Spalte 11, Zeilen 1 bis 13 der EP 1534792 B1 | 13,332 | 8,100 |
| Butylglykol | 5,000 | 2,700 |
| Organischer Verdicker (PAc thick., AS S130 sol.) | 7,500 | 5,400 |
| Wasser | 10,000 | 10,000 |
| | | |
| Wasser | 4,000 | 4,000 |
| Wässrige Lösung von Dimethylethanolamin (10 %-ig) | 1,700 | 2,000 |

Die Basislacke 7 und 8 sind für mindestens 4 Wochen bei 40 °C lagerstabil, das heißt sie weisen in dieser Zeit keinerlei Absetzneigung und keine signifikante Änderung (weniger als 15 %) der Niederscherviskosität (Scherbelastung von 1 s⁻¹, gemessen mit einem Rotations-Viskosimeter) auf. Der Basislack 7 weist einen Festkörper von 22 % und einen berechneten Volumenfestkörper von 19 % auf. Der Basislack 8 weist einen Festkörper von 24 % und einen berechneten Volumenfestkörper von 21 % auf

Herstellung der oben genannten Tönpasten:
Die Tönpaste (schwarz) wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol^{®} P900 der Firma BASF SE) und 61,45 Gewichtsteilen deionisiertem Wasser hergestellt.
-80-

Die Tönpaste (weiß) wurde aus 43 Gewichtsteilen einer gemäß der internationalen Patentanmeldung WO 91/15528 Bindemitteldispersion A hergestellten acrylierten Polyurethandispersion, 50 Gewichtsteilen Titan Rutil 2310, 3 Gewichtsteilen 1-Propoxy-2-Propanol eines und 4 Gewichtsteilen deionisiertem Wasser hergestellt.

Die Tönpaste (rot) wurde aus 38,4 Gewichtsteilen einer gemäß der internationalen Patentanmeldung WO 91/15528 Bindemitteldispersion A hergestellten acrylierten Polyurethandispersion, 47,1 Gewichtsteilen Bayferrox^{®} 13 BM/P, 0,6 Gewichtsteilen Dimethylethanolamin (10%ig in VE-Wasser), 4,7 Gewichtsteilen eines handelsüblichen Polyethers (Pluriol^{®} P900 der Firma BASF SE), 2 Gewichtsteilen Butylglykol und 7,2 Gewichtsteilen deionisiertem Wasser hergestellt.

### Herstellung von Mehrschichtlackierungen unter Einsatz der Basislacke 1 bis 8 und anwendungstechnische Untersuchung dieser Lackierungen

### (a) Herstellung nach dem erfindungsgemäßen Verfahren, zwei Basislackschichten

Als Substrate für die Lackierung wurden Stahltafeln verwendet, auf welchen unter Einsatz eines handelsüblichen kathodischen Elektrotauchlacks eine gehärtete Elektrotauchlackschicht hergestellt wurde.

Zunächst wurde als farbvorbereitender Basislack ein grauer Basislack (BC 1 oder BC 3) über elektrostatischen Sprühauftrag in einer Schichtdicke von 20 Mikrometern appliziert und anschließend für 3 Minuten bei Raumtemperatur abgelüftet. Auf diese erste Basislackschicht wurde jeweils ein farb- und/oder effektgebender Basislack (BC 2, BC 4 bis BC 8) über elektrostatischen Sprühauftrag in einer Schichtdicke von 20 Mikrometern appliziert, für 4 Minuten bei Raumtemperatur abgelüftet und für 5 Minuten bei 60°C zwischengetrocknet. Auf diese zwischengetrocknete Basislackschicht wurde ein handelsüblicher Zweikomponentenklarlack in einer Schichtdicke von 35-45 Mikrometern über elektrostatischen Sprühauftrag appliziert und der Gesamtaufbau dann nochmals für 10 Minuten bei Raumtemperatur abgelüftet und anschließend bei 140°C für 20 Minuten gehärtet.

Für die Bestimmung der Nadelstichgrenze wurden zudem Mehrschichtlackierungen hergestellt, bei denen im Unterschied zu den oben beschriebenen Lackierungen der zweite Basislack als Keil aufgetragen wurde (Schichtdicken bis 40 Mikrometer).

Die Mehrschichtlackierungen wurden hinsichtlich des Verlaufs beziehungsweise der Appearance mittels eines WaveScan Messgerät (Fa. Byk-Gardner) untersucht (Shortwave, Longwave), wobei geringe Werte einem verbesserten Verlauf entsprechen. Zudem wurde die Nadelstichgrenze untersucht. Die Tendenz zur Bildung von Nadelstichen nimmt mit der Vergrößerung der Schichtdicke einer Beschichtungsschicht (hier der zweiten Basislackschicht) zu, da entsprechend höhere Mengen an Luft, organischen Lösemitteln und/oder Wasser aus der Schicht entweichen müssen. Die Schichtdicke dieser Schicht, ab welcher Nadelstiche zu erkennen sind, wird als Nadelstichgrenze bezeichnet. Je höher die Nadelstichgrenze ist, desto besser ist augenscheinlich die Qualität der Stabilität gegen Nadelstiche.

Weiterhin wurden die Haftungseigenschaften untersucht. Durchgeführt wurden die Gitterschnitt-Prüfung nach DIN EN ISO 2409, die Steinschlagprüfung nach PV3.14.7 gemäß DIN EN ISO 20567-1, der Dampfstrahltest nach PV1503 mit Anpassung an DIN 55662, gegebenenfalls kombiniert mit dem Schwitzwassertest (SKK) nach PV3.16.1 gemäß DIN EN ISO 6270-2. Geringe Werte entsprechen dabei einer guten Haftung.

Die Tabellen A und B zeigen die entsprechenden Ergebnisse.

**Tabelle A: Verlaufsmessungen und Nadelstichgrenzen**

| | Shortwave | Longwave | Nadelstichgrenze |
|---|---|---|---|
| BL 1 Grau und BL 5 Silber | 19 | 7 | >40 µm |
| BL 1 Grau und BL 2 Weiß | 18 | 7 | >40 µm |
| BL 1 Grau und BL 6 Rot | 17 | 11 | >40 µm |
| BL 3 Grau und BL 7 Silber | 27 | 8 | >40 µm |
| BL 3 Grau und BL 4 Weiß | 27 | 9 | >40 µm |
| BL 3 Grau und BL 8 Rot | 22 | 11 | >40 µm |

**Tabelle B: Haftungseigenschaften**

| | Steinschlag | Gitterschnitt | | Dampfstrahl | |
|---|---|---|---|---|---|
| | | Vor SKK | Nach SKK | Vor SKK | Nach SKK |
| BL 1 Grau | ≤ 1,5 | ≤ 1 | ≤ 1 | ≤ 1 mm | ≤ 1 mm |
| BL 5 Silber | | | | | |
| BL 1 Grau | ≤ 1,0 | ≤ 1 | ≤ 1 | ≤ 1 mm | ≤ 1 mm |
| BL 2 Weiß | | | | | |
| BL 1 Grau | ≤ 1,5 | ≤ 1 | ≤ 1 | ≤ 1 mm | ≤ 1 mm |
| BL 6 Rot | | | | | |
| BL 3 Grau | ≤ 1,0 | ≤ 1 | ≤ 1 | ≤ 1 mm | ≤ 1 mm |
| BL 7 Silber | | | | | |
| BL 3 Grau | ≤ 1,0 | ≤ 1 | ≤ 1 | ≤ 1 mm | ≤ 1 mm |
| BL 4 Weiß | | | | | |
| BL 3 Grau | ≤ 1,5 | ≤ 1 | ≤ 1 | ≤ 1 mm | ≤ 1 mm |
| BL 8 Rot | | | | | |

Die Ergebnisse zeigen, dass der Verlauf der Mehrschichtlackierungen hervorragend ist. Auch die Nadelstichgrenze wurde bei einer Schichtdicke der zweiten Basislacks von 40 Mikrometern noch nicht erreicht und ist damit sehr gut. Selbiges gilt für die Haftungseigenschaften der Mehrschichtlackierungen.

### (b) Herstellung nach dem erfindungsgemäßen Verfahren, eine Basislackschicht

Als Substrate für die Lackierung wurden Stahltafeln verwendet, auf welchen unter Einsatz eines handelsüblichen kathodischen Elektrotauchlacks eine gehärtete Elektrotauchlackschicht hergestellt wurde.

Zunächst wurde jeweils ein farb- und/oder effektgebender Basislack (BC 2, BC 5) über elektrostatischen Sprühauftrag in einer Schichtdicke von 35 Mikrometern appliziert, anschließend für 4 Minuten bei Raumtemperatur abgelüftet und dann für 5 Minuten bei 60°C zwischengetrocknet. Auf diese zwischengetrocknete Basislackschicht wurde ein handelsüblicher Zweikomponentenklarlack in einer Schichtdicke von 35-45 Mikrometern über elektrostatischen Sprühauftrag appliziert und der Gesamtaufbau dann nochmals für 10 Minuten bei Raumtemperatur abgelüftet und anschließend bei 140°C für 20 Minuten gehärtet.

Untersucht wurden wie unter (a) die Haftungseigenschaften. Tabelle C zeigt die Ergebnisse.

**Tabelle C: Haftungseigenschaften**

| | Steinschlag | Gitterschnitt | | Dampfstrahl | |
|---|---|---|---|---|---|
| | | Vor SKK | Nach SKK | Vor SKK | Nach SKK |
| BL 5 Silber | ≤ 1,5 | ≤ 1 | ≤ 1 | ≤ 1 mm | ≤ 1 mm |
| BL 2 Weiß | ≤ 1,0 | ≤ 1 | ≤ 1 | ≤ 1 mm | ≤ 1 mm |

Es zeigt sich, dass die hergestellten Mehrschichtlackierungen eine sehr gute Haftung aufweisen.

### (C) Herstellung nach dem Standard-Verfahren des Stands der Technik

Als Substrate für die Lackierung wurden Stahltafeln verwendet, auf welchen unter Einsatz eines handelsüblichen kathodischen Elektrotauchlacks eine gehärtete Elektrotauchlackschicht hergestellt wurde.

Zunächst wurde ein handelsüblicher grauer Füller über elektrostatischen Sprühauftrag in einer Schichtdicke von 30 Mikrometern appliziert, anschließend für 10 Minuten bei Raumtemperatur abgelüftet und dann für 20 Minuten bei 155°C gehärtet. Auf diese gehärtete Füllerschicht wurde jeweils ein farb- und/oder effektgebender Basislack über elektrostatischen Sprühauftrag in einer Schichtdicke von 20 Mikrometern (BC 2 und BC 3) beziehungsweise 15 Mikrometern (BC 5 und BC 7) appliziert, für 3 Minuten bei Raumtemperatur abgelüftet und für 5 Minuten bei 80°C zwischengetrocknet. Auf diese zwischengetrocknete Basislackschicht wurde ein handelsüblicher Zweikomponentenklarlack in einer Schichtdicke von 35-45 Mikrometern über elektrostatischen Sprühauftrag appliziert und der Gesamtaufbau dann nochmals für 10 Minuten bei Raumtemperatur abgelüftet und anschließend bei 150°C für 20 Minuten gehärtet.

Untersucht wurden wie unter (a) die Haftungseigenschaften und das Nadelstichverhalten. Tabelle D zeigt die Ergebnisse.

| | Shortwave | Longwave | Nadelstichgrenze |
|---|---|---|---|
| BL 5 Silber | 23 | 13 | >40 µm |
| BL 2 Weiß | 13 | 7 | >40 µm |
| BL 7 Silber | 22 | 15 | >40 µm |
| BL 4 Weiß | 14 | 8 | >40 µm |

Die Ergebnisse zeigen, dass auch bei Anwendung des Standard-Verfahrens die Eigenschaften gut sind, wobei dieses Verfahren allerdings im Unterschied zum erfindungsgemäßen Verfahren eines zusätzlichen Härtungsschritts bedarf. In Gesamtschau aller Ergebnisse zeigt sich, dass die nach dem erfindungsgemäßen Verfahren hergestellten erfindungsgemäßen Mehrschichtlackierungen in ihrem Eigenschaftsprofil mindestens vergleichbar gut zu den nach dem Standard-Verfahren hergestellten Systemen sind, aber auf ökonomischere Weise herstellbar sind. Demnach gelingt es, durch die vorliegende Erfindung einen Prozess bereitzustellen, der eine ökonomische Vorgehensweise mit hervorragenden Eigenschaften der hergestellten Lackierungen vereint.

### Kurzbeschreibung der Abbildungen

### Abbildung 1:

Schematischer Aufbau einer auf einem metallischen Substrat (S) angeordneten erfindungsgemäßen Mehrschichtlackierung (M) umfassend eine gehärtete Elektrotauchlackschicht (E.1) sowie eine Basislackschicht (B.2.1) und eine Klarlackschicht (K), welche gemeinsam gehärtet wurden.

### Abbildung 2:

Schematischer Aufbau einer auf einem metallischen Substrat (S) angeordneten erfindungsgemäßen Mehrschichtlackierung (M) umfassend eine gehärtete Elektrotauchlackschicht (E.1), zwei Basislackschichten (B.2.2.x), nämlich eine erste Basislackschicht (B.2.2.a) und eine darüber angeordnete, oberste Basislackschicht (B.2.2.z), sowie eine Klarlackschicht (K), welche gemeinsam gehärtet wurden.

### Abbildung 3:

Schematischer Aufbau einer auf einem metallischen Substrat (S) angeordneten erfindungsgemäßen Mehrschichtlackierung (M) umfassend eine gehärtete Elektrotauchlackschicht (E.1), drei Basislackschichten (B.2.2.x), nämlich eine erste Basislackschicht (B.2.2.a), eine darüber angeordnete Basislackschicht (B.2.2.b) und eine oberste Basislackschicht (B.2.2.z), sowie eine Klarlackschicht (K), welche gemeinsam gehärtet wurden.

## Patentansprüche

1. Verfahren zur Herstellung einer Mehrschichtlackierung (M) auf einem metallischen Substrat (S) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung (2.1) einer Basislackschicht (B.2.1) oder (2.2) mehrerer direkt aufeinander folgender Basislackschichten (B.2.2.x) direkt auf der gehärteten Elektrotauchlackschicht (E.1) durch (2.1) Aufbringen eines wässrigen Basislacks (b.2.1) direkt auf die Elektrotauchlackschicht (E.1) oder (2.2) direkt aufeinanderfolgendes Aufbringen von mehreren Basislacken (b.2.2.x) auf die Elektrotauchlackschicht (E.1),
(3) Herstellung einer Klarlackschicht (K) direkt auf (3.1) der Basislackschicht (B.2.1) oder (3.2) einer obersten Basislackschicht (B.2.2.x) durch Aufbringen eines Klarlacks (k) direkt auf (3.1) die Basislackschicht (B.2.1) oder (3.2) die oberste Basislackschicht (B.2.2.x),
(4) gemeinsame Härtung der (4.1) Basislackschicht (B.2.1) und der Klarlackschicht (K) oder (4.2) der Basislackschichten (B.2.2.x) und der Klarlackschicht (K),
**dadurch gekennzeichnet, dass**
der Basislack (b.2.1) oder mindestens einer der Basislacke (b.2.2.x) mindestens eine wässrige Polyurethan-Polyharnstoff-Dispersion (PD) enthaltend Polyurethan-Polyharnstoff-Partikel umfasst, wobei die in der Dispersion (PD) enthaltenen Polyurethan-Polyharnstoff-Partikel anionische und/oder in anionische Gruppen überführbare Gruppen enthalten und eine mittlere Teilchengröße von 40 bis 2000 nm sowie einem Gelanteil von mindestens 50 % aufweisen.

2. Verfahren nach Anspruch 1, **dadurch gekennzeichnet, dass** die Polyurethan-Polyharnstoff-Partikel, jeweils in umgesetzter Form,
(Z.1.1) mindestens ein Isocyanatgruppen-haltiges Polyurethan-Präpolymer enthaltend anionische und/oder in anionische Gruppen überführbare Gruppen sowie
(Z.1.2) mindestens ein Polyamin enthaltend zwei primäre Aminogruppen und ein oder zwei sekundäre Aminogruppen
enthalten,
und die Dispersion (PD) zu mindestens 90 Gew.-% aus den Polyurethan-Polyharnstoff-Partikeln sowie Wasser besteht.

3. Verfahren nach Anspruch 1 oder 2, **dadurch gekennzeichnet, dass** die anionischen und/oder in anionische Gruppen überführbaren Gruppen Carboxylat- und/oder Carbonsäuregruppen sind.

4. Verfahren nach Anspruch 2 oder 3, **dadurch gekennzeichnet, dass** das Polyamin (Z.1.2) aus ein oder zwei sekundären Aminogruppen, zwei primären Aminogruppen sowie aliphatisch-gesättigten Kohlenwasserstoffgruppen besteht.

5. Verfahren nach einem der Ansprüche 1 bis 4, **dadurch gekennzeichnet, dass** die in der Dispersion enthaltenen Polyurethan-Polyharnstoff-Partikel eine mittlere Teilchengröße von 110 bis 500 nm und einem Gelanteil von mindestens 80 % aufweisen.

6. Verfahren nach einem der Ansprüche 1 bis 5, **dadurch gekennzeichnet, dass** der Basislack (b.2.1) oder mindestens einer der Basislacke (b.2.2.x), bevorzugt alle der Basislacke (b.2.2.x) zudem mindestens ein hydroxyfunktionelles Polymer als Bindemittel ausgewählt aus der Gruppe bestehend aus Polyurethanen, Polyestern, Polyacrylaten und Mischpolymerisaten dieser Polymere enthält.

7. Verfahren nach einem der Ansprüche 1 bis 6, **dadurch gekennzeichnet, dass** der Basislack (b.2.1) oder mindestens einer der Basislacke (b.2.2.x), bevorzugt alle der Basislacke (b.2.2.x) Einkomponenten-Beschichtungsmittel sind.

8. Verfahren nach einem der Ansprüche 1 bis 7, **dadurch gekennzeichnet, dass** die gemeinsame Härtung (4) bei Temperaturen von 100 bis 250°C für eine Dauer von 5 bis 60 min durchgeführt wird.

9. Verfahren nach einem der Ansprüche 1 bis 8, **dadurch gekennzeichnet, dass** (2.2) mindestens zwei Basislackschichten hergestellt werden, wobei die erste Basislackschicht (B.2.2.a) direkt auf der Elektrotauchlackschicht (E.1) Weißpigmente und Schwarzpigmente enthält und die mindestens eine weitere Basislackschicht (B.2.2.x) Effektpigmente enthält.

10. Verfahren nach einem der Ansprüche 1 bis 9, **dadurch gekennzeichnet, dass** der Basislack (b.2.1) und die Basislacke (b.2.2.x), sofern sie mindestens ein Vernetzungsmittel enthalten, einen Festkörper von mindestens 25 % aufweisen, und, sofern der Basislack (b.2.1) und die Basislacke (b.2.2.x) kein Vernetzungsmittel enthalten, einen Festkörper von mindestens 15 % aufweisen.

11. Verfahren nach Anspruch 10, **dadurch gekennzeichnet, dass** die Basislacke bei 23°C und einer Scherbelastung von 1000 1/s eine Viskosität von 40 bis 150 mPa·s aufweisen.

12. Verfahren nach einem der Ansprüche 1 bis 11, **dadurch gekennzeichnet, dass** der Basislack (b.2.1) oder mindestens einer der Basislacke (b.2.2.x), bevorzugt alle der Basislacke (b.2.2.x) mindestens ein Vernetzungsmittel ausgewählt aus der Gruppe der blockierten Polyisocyanate und Aminoplastharze enthält.

13. Verfahren nach einem der Ansprüche 2 bis 12, **dadurch gekennzeichnet, dass** das Präpolymer (Z.1.1) mindestens ein unter Einsatz von Diolen und Dicarbonsäuren hergestelltes Polyesterdiol enthält, wobei bei der Herstellung der Polyesterdiole mindestens 50 Gew.-%, bevorzugt 55 bis 75 Gew.-%, der eingesetzten Dicarbonsäuren Dimerfettsäuren sind.

14. Verfahren nach einem der Ansprüche 1 bis 13, **dadurch gekennzeichnet, dass** der Basislack (b.2.1) oder die Basislacke (b.2.2.x) durch elektrostatische Sprühapplikation oder pneumatische Sprühapplikation aufgebracht werden.

15. Mehrschichtlackierung (M), die nach dem Verfahren gemäß einem der Ansprüche 1 bis 14 hergestellt wurde.

## Claims

1. Process for producing a multicoat paint system (M) on a metallic substrate (S), comprising
(1) producing a cured electrocoat (E.1) on the metallic substrate (S) by electrophoretic application of an electrocoat material (e.1) to the substrate (S) and subsequent curing of the electrocoat material (e.1),
(2) producing (2.1) a basecoat film (B.2.1) or (2.2) two or more directly successive basecoat films (B.2.2.x) directly on the cured electrocoat (E.1) by (2.1) application of an aqueous basecoat material (b.2.1) directly to the electrocoat (E.1) or (2.2) directly successive application of two or more basecoat materials (b.2.2.x) to the electrocoat (E.1),
(3) producing a clearcoat film (K) directly on (3.1) the basecoat film (B.2.1), or (3.2) a topmost basecoat film (B.2.2.x) by application of a clearcoat material (k) directly to (3.1) the basecoat film (B.2.1) or (3.2) the topmost basecoat film (B.2.2.x),
(4) jointly curing the (4.1) basecoat film (B.2.1) and the clearcoat film (K) or (4.2) the basecoat films (B.2.2.x) and the clearcoat film (K),
**characterized in that**
the basecoat material (b.2.1) or at least one of the basecoat materials (b.2.2.x) comprises at least one aqueous polyurethane-polyurea dispersion (PD) comprising polyurethane-polyurea particles, where the polyurethane-polyurea particles present in the dispersion (PD) comprise anionic groups and/or groups which can be converted into anionic groups, and have an average particle size of 40 to 2000 nm and also a gel fraction of at least 50%.

2. Process according to Claim 1, **characterized in that** the polyurethane-polyurea particles, in each case in reacted form, comprise
(Z.1.1) at least one isocyanate group-containing polyurethane prepolymer comprising anionic groups and/or groups which can be converted into anionic groups, and also
(Z.1.2) at least one polyamine comprising two primary amino groups and one or two secondary amino groups,
and the dispersion (PD) consists to an extent of at least 90 wt% of the polyurethane-polyurea particles and also water.

3. Process according to Claim 1 or 2, **characterized in that** the anionic groups and/or groups which can be converted into anionic groups are carboxylate and/or carboxylic acid groups.

4. Process according to Claim 2 or 3, **characterized in that** the polyamine (Z.1.2) consists of one or two secondary amino groups, two primary amino groups, and also aliphatically saturated hydrocarbon groups.

5. Process according to any of Claims 1 to 4, **characterized in that** the polyurethane-polyurea particles present in the dispersion have an average particle size of 110 to 500 nm and a gel fraction of at least 80%.

6. Process according to any of Claims 1 to 5, **characterized in that** the basecoat material (b.2.1) or at least one of the basecoat materials (b.2.2.x), preferably all of the basecoat materials (b.2.2.x), further comprises at least one hydroxy-functional polymer as binder, selected from the group consisting of polyurethanes, polyesters, polyacrylates, and copolymers of these polymers.

7. Process according to any of Claims 1 to 6, **characterized in that** the basecoat material (b.2.1) or at least one of the basecoat materials (b.2.2.x), preferably all of the basecoat materials (b.2.2.x), are one-component coating materials.

8. Process according to any of Claims 1 to 7, **characterized in that** the joint curing (4) is carried out at temperatures of 100 to 250°C for a duration of 5 to 60 min.

9. Process according to any of Claims 1 to 8, **characterized in that** (2.2) at least two basecoat films are produced, the first basecoat film (B.2.2.a) directly on the electrocoat (E.1) comprising white pigments and black pigments, and the at least one further basecoat film (B.2.2.x) comprising effect pigments.

10. Process according to any of Claims 1 to 9, **characterized in that** the basecoat material (b.2.1) and the basecoat materials (b.2.2.x), where they comprise at least one crosslinking agent, have a solids content of at least 25%, and, where the basecoat material (b.2.1) and the basecoat materials (b.2.2.x) contain no crosslinking agent, have a solids content of at least 15%.

11. Process according to Claim 10, **characterized in that** the basecoat materials have a viscosity of 40 to 150 mPa·s at 23°C under a shearing load of 1000 1/s.

12. Process according to any of Claims 1 to 11, **characterized in that** the basecoat material (b.2.1) or at least one of the basecoat materials (b.2.2.x), preferably all of the basecoat materials (b.2.2.x), comprises at least one crosslinking agent selected from the group of the blocked polyisocyanates and aminoplast resins.

13. Process according to any of Claims 2 to 12, **characterized in that** the prepolymer (Z.1.1) comprises at least one polyester diol prepared using diols and dicarboxylic acids, with at least 50 wt%, preferably 55 to 75 wt%, of the dicarboxylic acids used in preparing the polyester diols being dimer fatty acids.

14. Process according to any of Claims 1 to 13, **characterized in that** the basecoat material (b.2.1) or the basecoat materials (b.2.2.x) are applied by electrostatic spray application or pneumatic spray application.

15. Multicoat paint system (M) produced by the process according to any of Claims 1 to 14.

## Revendications

1. Procédé pour la réalisation d'un laquage multicouche (M) sur un substrat métallique (S), comprenant
(1) la réalisation d'une couche de laque d'électro-immersion (E.1) durcie sur le substrat métallique (S) par application électrophorétique d'une laque d'électro-immersion (e.1) sur le substrat (S) et durcissement consécutif de la laque d'électro-immersion (e.1),
(2) la réalisation (2.1) d'une couche de laque de base (B.2.1) ou (2.2) de plusieurs couches de laque de base (B.2.2.x) directement consécutives directement sur la couche de laque d'électro-immersion (E.1) durcie par (2.1) application d'une laque de base aqueuse (b.2.1) directement sur la couche de laque d'électro-immersion (E.1) ou par (2.2) application directement consécutive de plusieurs couches de laque de base (b.2.2.x) sur la couche de laque d'électro-immersion (E.1),
(3) la réalisation d'une couche de laque claire (K) directement sur (3.1) la couche de laque de base (B.2.1) ou sur (3.2) une couche de laque de base supérieure (B.2.2.x) par application d'une laque claire (k) directement sur (3.1) la couche de laque de base (B.2.1) ou sur (3.2) la couche de laque de base supérieure (B.2.2.x),
(4) le durcissement commun de (4.1) la couche de laque de base (B.2.1) et de la couche de laque claire (K) ou (4.2) des couches de laque de base (B.2.2.x) et de la couche de laque claire (K),
**caractérisé en ce que** la laque de base (b.2.1) ou au moins l'une des laques de base (b.2.2.x) comprend au moins une dispersion aqueuse de polyuréthane-polyurée (PD) contenant des particules de polyuréthane-polyurée, les particules de polyuréthane-polyurée contenues dans la dispersion (PD) contenant des groupes anioniques et/ou des groupes transformables en groupes anioniques et présentant une grosseur moyenne de particule de 40 à 2000 nm ainsi qu'une proportion de gel d'au moins 50%.

2. Procédé selon la revendication 1, **caractérisé en ce que** les particules de polyuréthane-polyurée contiennent, à chaque fois sous forme transformée
(Z.1.1) au moins un prépolymère de polyuréthane, contenant des groupes isocyanate, contenant des groupes anioniques et/ou des groupes pouvant être transformés en groupes anioniques ainsi que
(Z.1.2) au moins une polyamine contenant deux groupes amino primaire et un ou deux groupes amino secondaire
et la dispersion (PD) étant constituée à raison d'au moins 90% en poids par les particules de polyuréthane-polyurée ainsi que par de l'eau.

3. Procédé selon la revendication 1 ou 2, **caractérisé en ce que** les groupes anioniques et/ou les groupes transformables en groupes anioniques sont des groupes carboxylate et/ou acide carboxylique.

4. Procédé selon la revendication 2 ou 3, **caractérisé en ce que** la polyamine (Z.1.2) est constituée par un ou deux groupes amino secondaire, deux groupes amino primaire ainsi que par des groupes hydrocarbonés aliphatiques saturés.

5. Procédé selon l'une quelconque des revendications 1 à 4, **caractérisé en ce que** les particules de polyuréthane-polyurée contenues dans la dispersion présentent une grosseur moyenne de particule de 110 à 500 nm et une proportion de gel d'au moins 80%.

6. Procédé selon l'une quelconque des revendications 1 à 5, **caractérisé en ce que** la laque de base (b.2.1) ou au moins l'une des laques de base (b.2.2.x), de préférence toutes les laques de base (b.2.2.x) contiennent en outre au moins un polymère à fonctionnalité hydroxy comme liant, choisi dans le groupe constitué par les polyuréthanes, les polyesters, les polyacrylates et les polymères mixtes de ces polymères.

7. Procédé selon l'une quelconque des revendications 1 à 6, **caractérisé en ce que** la laque de base (b.2.1) ou au moins l'une des laques de base (b.2.2.x), de préférence toutes les laques de base (b.2.2.x) sont des agents de revêtement à un composant.

8. Procédé selon l'une quelconque des revendications 1 à 7, **caractérisé en ce que** le durcissement commun (4) est réalisé à des températures de 100 à 250°C pendant une durée de 5 à 60 minutes.

9. Procédé selon l'une quelconque des revendications 1 à 8, **caractérisé en ce que** (2.2) au moins deux couches de laques de base sont réalisées, la première couche de laque de base (B.2.2.a) directement sur la couche de laque d'électro-immersion (E.1) contenant des pigments blancs et des pigments noirs et ladite au moins une autre couche de laque de base (B.2.2.x) contenant des pigments conférant un effet.

10. Procédé selon l'une quelconque des revendications 1 à 9, **caractérisé en ce que** la laque de base (b.2.1) et les laques de base (b.2.2.x), pour autant qu'elles contiennent au moins un réticulant, présentent une teneur en corps solides d'au moins 25% et, pour autant que la laque de base (b.2.1) et les laques de base (b.2.2.x) ne contiennent pas de réticulant, présentent une teneur en corps solides d'au moins 15%.

11. Procédé selon la revendication 10, caractérisé en ce les laques de base présentent, à 23°C et sous une sollicitation par cisaillement de 1000 1/s, une viscosité de 40 à 150 mPa.s.

12. Procédé selon l'une quelconque des revendications 1 à 11, caractérisé
en ce la laque de base (b.2.1) ou au moins l'une des laques de base (b.2.2.x), de préférence toutes les laques de base (b.2.2.x), contiennent au moins un réticulant choisi dans le groupe constitué par les polyisocyanates bloqués et les résines d'aminoplaste.

13. Procédé selon l'une quelconque des revendications 2 à 12, **caractérisé en ce que** le prépolymère (Z.1.1) contient au moins un polyesterdiol préparé à l'aide de diols et d'acides dicarboxyliques, au moins 50% en poids, de préférence 55 à 75% en poids, des acides dicarboxyliques utilisés lors de la préparation des polyesterdiols étant des acides gras dimères.

14. Procédé selon l'une quelconque des revendications 1 à 13, **caractérisé en ce que** la laque de base (b.2.1) ou les laques de base (b.2.2.x) sont appliquées par application par pulvérisation électrostatique ou par application par pulvérisation pneumatique.

15. Laquage multicouche (M), qui a été réalisé selon un procédé selon l'une quelconque des revendications 1 à 14.
